# EUROPEAN PATENT APPLICATION

(11) **EP 4 580 231 A1**
(43) Date of publication of application: **02.07.2025**
(21) Application number: 23870012.4
(22) Date of filing: 11.08.2023
(51) Int. Cl.: H04W 12/041

(54) **COMMUNICATION METHOD AND APPARATUS**

(30) Priority: 30.09.2022 CN 202211214503; 07.04.2023 CN 202310409631; 04.08.2023 WO PCT/CN2023/111239
(71) Applicant: Huawei Technologies Co., Ltd., Shenzhen, Guangdong 518129 (CN)
(72) Inventor: LI, Jiaojiao, Shenzhen, Guangdong 518129 (CN); QIANG, Li, Shenzhen, Guangdong 518129 (CN); CHANG, Junren, Shenzhen, Guangdong 518129 (CN); LEI, Ao, Shenzhen, Guangdong 518129 (CN); WU, Yizhuang, Shenzhen, Guangdong 518129 (CN); LECOMPTE, David, Shenzhen, Guangdong 518129 (CN)
(74) Representative: Epping - Hermann - Fischer
(86) International application number: PCT/CN2023/112739
(87) International publication number: WO 2024/066766

(57) **Abstract**

Embodiments of this application provide a communication method and apparatus. The method includes: deriving a first key, and deriving a third key based on the first key, where the first key is determined based on a second key by using a first parameter value, the second key is a master key, the first parameter value is obtained through update based on a second parameter value, or the first parameter value is determined based on a quantity of times of accessing a first cell or a secondary node to which the first cell belongs, the third key is a user plane key and/or a control plane key, and the third key is used to perform encryption or data integrity protection on data and/or signaling with the first cell. According to the foregoing solution, key reuse can be avoided.

## Description

### COMMUNICATION METHOD AND APPARATUS

This application claims priority to Chinese Patent Application No. 202211214503.X, filed with the China National Intellectual Property Administration on September 30, 2022 and entitled "COMMUNICATION METHOD AND APPARATUS", which is incorporated herein by reference in its entirety.

This application further claims priority to Chinese Patent Application No. 202310409631.8, filed with the China National Intellectual Property Administration on April 7, 2023 and entitled "COMMUNICATION METHOD AND APPARATUS", which is incorporated herein by reference in its entirety.

This application further claims priority to Patent Application No. PCT/CN2023/111239, filed with the China National Intellectual Property Administration on August 4, 2023 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

In a dual-connectivity (dual-connectivity, DC) or multi-connectivity (multi-radio dual connectivity, MR-DC) scenario, a terminal device may perform a conditional primary secondary cell (primary secondary cell group cell, PSCell) addition or change process. When the terminal device evaluates that an execution condition of a candidate cell is met, the terminal device may perform a PSCell addition or change process.

To prevent data from being intercepted and/or tampered with, encryption and/or integrity protection may be performed on communication between the terminal device and the cell based on a security key. However, in a process in which the terminal device performs subsequent (subsequent) candidate cell addition or change, a security key reuse problem may occur. Consequently, a process of communication between the terminal device and the candidate cell served by a secondary node is insecure.

Therefore, how to avoid security key reuse in a process in which a terminal device adds or changes a candidate cell becomes an urgent technical problem to be resolved.

### SUMMARY

Embodiments of this application provide a communication method and apparatus, to avoid key reuse in a process in which a terminal device adds or changes a candidate cell.

According to a first aspect, a method is provided. The method may be performed by a terminal device, or may be performed by a chip or a circuit configured in the terminal device. This is not limited in this application.

The method includes: deriving (derive) a first key, and deriving a third key based on the first key, where the first key is determined based on a second key by using a first parameter value, the second key is a master key, the first parameter value is obtained through update based on a second parameter value, or the first parameter value is determined based on a quantity of times of accessing a first cell or a secondary node to which the first cell belongs, the third key is a user plane key and/or a control plane key, and the third key is used to perform encryption or data integrity protection on data and/or signaling with the first cell.

For example, the second key may be a master key (master key) between the terminal device and an MN, for example, may be K_{gNB} or K_{eNB}. The master key is used to derive a control plane key and/or a user plane key. The control plane key and/or the user plane key are/is used to perform encryption or data integrity protection on data and/or signaling between the terminal device and the MN. For example, the control plane key is used to perform encryption and/or data integrity protection on the signaling between the terminal device and the MN. For another example, the user plane key is used to perform encryption and/or data integrity protection on the data between the terminal device and the MN.

For example, the first key may be a secondary key (Secondary key), for example, K_{SN}, S-K_{gNB}, or S-K_{eNB}. The first key is used to derive a control plane key and/or a user plane key. The control plane key and/or the user plane key are/is used to perform encryption or data integrity protection on data and/or signaling between the terminal device and an SN, in other words, is the third key. For example, the control plane key is used to perform encryption and/or data integrity protection on the signaling between the terminal device and the SN. For another example, the user plane key is used to perform encryption and/or data integrity protection on the data between the terminal device and the SN. For example, the third key is an integrity protection key (K_{RRCint} or K_{UPint}) and/or an encryption/decryption key (K_{RRCenc} or K_{UPenc}).

It should be understood that key derivation may also be referred to as key inference, key deduction, key determining, key obtaining, or the like.

It should be noted that, before deriving the first key, the terminal device may evaluate whether an execution condition of the first cell is met, and the first cell is a candidate cell for conditional cell addition or change. When the terminal device evaluates that the execution condition of the first cell is met, the terminal device may derive the first key, and the first key may be used for security of the first cell.

It should be understood that the terminal device does not necessarily immediately derive the first key when detecting a cell that meets a condition. For example, the terminal device may derive the first key when or after performing an access process (for example, a random access process).

According to the foregoing solution, the new first parameter value may be obtained by updating the second parameter value, or the new first parameter value may be determined based on the quantity of times of accessing the first cell or the secondary node to which the first cell belongs, so that a new parameter value may be determined each time a candidate cell is accessed, and derivation of a new key is determined based on the new parameter value, thereby avoiding a key reuse problem in a candidate cell handover process.

With reference to the first aspect, in some implementations of the first aspect, the second parameter value is a parameter value used last time for the first cell or the secondary node to which the first cell belongs, or the second parameter value is a parameter value used for previous access.

With reference to the first aspect, in some implementations of the first aspect, the second parameter value is a parameter value used to access a third cell last time, and the third cell has the same second parameter as the first cell.

With reference to the first aspect, in some implementations of the first aspect, the first key is derived in a case of handover from a cell having a different second parameter value to the first cell.

With reference to the first aspect, in some implementations of the first aspect, the second parameter value is a parameter value used for a cell in a first cell set last time, and the first cell set includes the first cell.

With reference to the first aspect, in some implementations of the first aspect, the first key is derived in a case of handover from a cell outside the first cell set to the first cell.

With reference to the first aspect, in some implementations of the first aspect, the first parameter value is the second parameter value plus N, where N is an integer greater than or equal to 1, or N is a maximum quantity of candidate cells for conditional cell addition or change.

With reference to the first aspect, in some implementations of the first aspect, the first parameter value is determined based on a third parameter value and the quantity of times of accessing the first cell or the secondary node to which the first cell belongs, and the third parameter value is a start parameter value associated with the first cell or the secondary node to which the first cell belongs; or the first parameter value is determined based on the third parameter value and a quantity of times of accessing a cell in the first cell set, and the third parameter value is a start parameter value associated with the first cell set.

With reference to the first aspect, in some implementations of the first aspect, the first parameter value is a P^{th} value in a first set, P is related to the quantity of times of accessing the first cell or the secondary node to which the first cell belongs, and the first set includes a plurality of parameter values associated with the first cell or the secondary node to which the first cell belongs.

With reference to the first aspect, in some implementations of the first aspect, the method further includes:
sending a first message to a master node, where the first message indicates the first cell that meets an execution condition or the secondary node to which the first cell belongs, and the first message includes the first parameter value.

According to a second aspect, a communication method is provided. The method may be performed by a terminal device, or may be performed by a chip or a circuit configured in the terminal device. This is not limited in this application.

The method includes: deriving a first key, where the first key is determined based on a second key by using a first parameter value, the second key is a master key, the first parameter value belongs to a third set, the third set includes a plurality of parameter values associated with a first cell set, and the first cell set includes a first cell; and deriving a third key based on the first key, where the third key is a user plane key and/or a control plane key, and the third key is used to perform encryption or data integrity protection on data and/or signaling with the first cell.

With reference to the second aspect, in some implementations of the second aspect, the first parameter value is randomly selected from the plurality of parameter values included in the third set.

With reference to the second aspect, in some implementations of the second aspect, the first parameter value is a P^{th} value in the third set, and P is related to a quantity of times of accessing the first cell set.

With reference to the second aspect, in some implementations of the second aspect, the first parameter value is deleted from the third set.

With reference to the second aspect, in some implementations of the second aspect, the first key is derived in a case of handover from a cell outside the first cell set to the first cell.

According to a third aspect, a communication method is provided. The method may be performed by a network device, or may be performed by a chip or a circuit configured in the network device. This is not limited in this application.

The method includes: deriving a first key, and sending the first key to a first cell or a secondary node to which the first cell belongs, where the first key is used for security of the first cell, the first cell is a candidate cell for conditional cell addition or change CPAC, the first key is determined based on a second key by using a first parameter value, the second key is a master key, and the first parameter value is received from a terminal device, or the first parameter value is obtained through update based on a second parameter value, or the first parameter value is determined based on a quantity of times that the terminal device accesses the first cell or the secondary node to which the first cell belongs.

With reference to the third aspect, in some implementations of the third aspect, a second set is sent to the first cell or the secondary node to which the first cell belongs, where the second set includes a plurality of keys associated with the first cell or the secondary node to which the first cell belongs, and the plurality of keys include the first key.

With reference to the third aspect, in some implementations of the third aspect, the method further includes: receiving a first message from the terminal device, where the first message includes the first parameter value, and the first message indicates the first cell that meets an execution condition or the secondary node to which the first cell belongs.

With reference to the third aspect, in some implementations of the third aspect, the second parameter value is a parameter value used last time for the first cell or the secondary node to which the first cell belongs, or the second parameter value is a parameter value used by the terminal device for previous access.

With reference to the third aspect, in some implementations of the third aspect, the second parameter value is a parameter value used to access a third cell last time, and the third cell has the same second parameter as the first cell.

With reference to the third aspect, in some implementations of the third aspect, the first key is derived in a case of handover from a cell having a different second parameter value to the first cell.

With reference to the third aspect, in some implementations of the third aspect, the second parameter value is a parameter value used for a cell in a first cell set last time, and the first cell set includes the first cell.

With reference to the third aspect, in some implementations of the third aspect, the first key is derived in a case of handover from a cell outside the first cell set to the first cell.

With reference to the third aspect, in some implementations of the third aspect, the first parameter value is the second parameter value plus N, where N is an integer greater than or equal to 1, or N is a maximum quantity of candidate cells for conditional cell addition or change.

With reference to the third aspect, in some implementations of the third aspect, the first parameter value is determined based on a third parameter value and the quantity of times that the terminal device accesses the first cell or the secondary node to which the first cell belongs, and the third parameter value is a start parameter value associated with the first cell or the secondary node to which the first cell belongs; or the first parameter value is determined based on the third parameter value and a quantity of times of accessing a cell in the first cell set, and the third parameter value is a start parameter value associated with the first cell set.

With reference to the third aspect, in some implementations of the third aspect, the first parameter value is a P^{th} value in a first set, P is related to the quantity of times that the terminal device accesses the first cell or the secondary node to which the first cell belongs, and the first set includes a plurality of parameter values associated with the first cell or the secondary node to which the first cell belongs.

It should be understood that, for beneficial effects of the third aspect and the implementations of the third aspect, refer to the first aspect and the implementations of the first aspect.

According to a fourth aspect, a communication method is provided. The method may be performed by a network device, or may be performed by a chip or a circuit configured in the network device. This is not limited in this application.

The method includes: receiving a second set, and determining a first key from the second set based on a first identifier or a quantity of times that a terminal device accesses a first cell or a secondary node to which the first cell belongs, where the second set includes a plurality of keys associated with the first cell or the secondary node to which the first cell belongs, the plurality of keys include the first key, and the first identifier indicates the first key in the second set.

In the foregoing technical solution, a corresponding K_{SN} set is provided in advance for each candidate cell or a secondary node to which the candidate cell belongs, so that the candidate cell or the secondary node to which the candidate cell belongs may not perform secure communication with the terminal device only after receiving a reconfiguration complete message of an MN. The K_{SN} set corresponding to each candidate cell or the secondary node to which the candidate cell belongs includes K_{SN} that may be used during initial cell addition or change and subsequent cell change.

With reference to the fourth aspect, in some implementations of the fourth aspect, the method further includes: receiving a second message, where the second message includes the first identifier.

In the foregoing technical solution, the first identifier of the terminal device is received and the first key in the second set is determined to be used, so that the terminal device and the secondary node agree on a key for use, thereby ensuring secure synchronization between the terminal device and the secondary node, and avoiding a problem of security parameter disagreement or security parameter rollback caused by a failure in access attempted by the terminal device.

According to a fifth aspect, a communication method is provided. The method may be performed by a terminal device, or may be performed by a chip or a circuit configured in the terminal device. This is not limited in this application.

The method includes: deriving a fourth key, and deriving a sixth key based on the fourth key, where the fourth key is determined based on a fifth key, the fifth key is a key for a previous accessed cell, or the fifth key is a key used last time to access a second cell or a secondary node to which the second cell belongs, or the fifth key is a key used for a cell in a second cell set last time, and the first cell set includes the second cell, or the fifth key is a key used to access a fourth cell last time, and the fourth cell has a same key or a same counter as the second cell, the sixth key is a user plane key and/or a control plane key, and the sixth key is used to perform encryption and/or data integrity protection on data and/or signaling with the second cell.

It should be noted that, before deriving the fourth key, the terminal device may evaluate whether an execution condition of the second cell is met, and the second cell is a candidate cell for conditional cell addition or change. When the terminal device evaluates that the execution condition of the second cell is met, the terminal device may derive the fourth key, and the fourth key may be used for security of the second cell.

For example, the fourth key and the fifth key are secondary keys (Secondary key), for example, K_{SN}, S-K_{gNB}, or S-K_{eNB}.

For example, the sixth key is an integrity protection key (K_{RRCint} or K_{UPint}) and/or an encryption/decryption key (K_{RRCenc} or K_{UPenc}).

In the foregoing technical solution, each time the terminal device selects a candidate cell, a different fifth key is used to derive the fourth key, or a different input key K_{SN} is used to derive new K_{SN}. Therefore, each time a candidate cell is accessed, a different fifth key is used, and a different sixth key is derived by using the fifth key, thereby avoiding a key reuse problem.

With reference to the fifth aspect, in some implementations of the fifth aspect, the fourth key is derived in a case of handover from a cell outside the second cell set to the second cell, or in a case of handover from a cell having a different counter to the second cell.

With reference to the fifth aspect, in some implementations of the fifth aspect, the fourth key is derived based on the fifth key by using a fourth parameter value.

With reference to the fifth aspect, in some implementations of the fifth aspect, the fourth parameter value is a parameter value associated with the second cell or the secondary node to which the second cell belongs, or the fourth parameter value is a parameter value associated with the second cell set, or the fourth parameter value is obtained through update based on a fifth parameter value, or the fourth parameter value is determined based on a quantity of times of accessing the second cell or the secondary node to which the second cell belongs.

With reference to the fifth aspect, in some implementations of the fifth aspect, the fifth parameter value is a parameter value used last time for the second cell or the secondary node to which the second cell belongs, or the fifth parameter value is a parameter value used for previous access, or the fifth parameter value is a parameter value used for a cell in the second cell set last time.

According to a sixth aspect, a communication method is provided. The method may be performed by a network device, or may be performed by a chip or a circuit configured in the network device. This is not limited in this application.

The method includes: deriving a fourth key, and sending the fourth key to a second cell or a secondary node to which the second cell belongs, where the fourth key is used for security of the second cell, the fourth key is determined based on a fifth key, and the fifth key is a key used for a previous accessed cell, or the fifth key is a key used last time to access the second cell or the secondary node to which the second cell belongs.

With reference to the sixth aspect, in some implementations of the sixth aspect, the fourth key is derived based on the fifth key by using a fourth parameter value, where the fourth parameter value is a parameter value associated with the second cell or the secondary node to which the second cell belongs, or the fourth parameter value is a parameter value associated with a second cell set.

With reference to the sixth aspect, in some implementations of the sixth aspect, the fifth key is determined based on a sixth key by using a fifth parameter value, the sixth key is a master key, and the fifth parameter value is a parameter value associated with the second cell or the secondary node to which the second cell belongs, or the fifth parameter value is obtained through update based on a sixth parameter value, or the fifth parameter value is determined based on a quantity of times that a terminal device accesses the second cell or the secondary node to which the second cell belongs, or the fifth parameter value is a parameter value used for a cell in the second cell set last time.

With reference to the sixth aspect, in some implementations of the sixth aspect, the sixth parameter value is a parameter value used last time for the second cell or the secondary node to which the second cell belongs, or the sixth parameter value is a parameter value used by the terminal device for previous access.

It should be understood that, for beneficial effects of the sixth aspect and the implementations of the sixth aspect, refer to the fifth aspect and the implementations of the fifth aspect.

According to a seventh aspect, a communication method is provided. The method may be performed by a network device, or may be performed by a chip or a circuit configured in the network device. This is not limited in this application.

The method includes: deriving a fourth key, and deriving a sixth key based on the fourth key, where the fourth key is used for security of a second cell, the fourth key is determined based on a fifth key, the fifth key is a key used last time to access the second cell or a secondary node to which the second cell belongs, or the fifth key is a key used for a cell in a second cell set last time, and the first cell set includes the second cell, or the fifth key is a key used to access a fourth cell last time, and the fourth cell has a same key or a same counter as the second cell, the sixth key is a user plane key and/or a control plane key, and the sixth key is used to perform encryption or data integrity protection on data and/or signaling with a terminal device.

With reference to the seventh aspect, in some implementations of the seventh aspect, the fourth key is derived based on the fifth key by using a fourth parameter value, where the fourth parameter value is a parameter value associated with the second cell or the secondary node to which the second cell belongs, or the fourth parameter value is a parameter value associated with the second cell set.

With reference to the seventh aspect, in some implementations of the seventh aspect, the fifth key is determined based on a sixth key by using a fifth parameter value, the sixth key is a master key, and the fifth parameter value is a parameter value associated with the second cell or the secondary node to which the second cell belongs, or the fifth parameter value is obtained through update based on a sixth parameter value, or the fifth parameter value is determined based on a quantity of times that the terminal device accesses the second cell or the secondary node to which the second cell belongs, or the fifth parameter value is a parameter value used for a cell in the second cell set last time.

With reference to the seventh aspect, in some implementations of the seventh aspect, the sixth parameter value is a parameter value used last time for the second cell or the secondary node to which the second cell belongs, or the sixth parameter value is a parameter value used by the terminal device for previous access.

It should be understood that, for beneficial effects of the seventh aspect and the implementations of the seventh aspect, refer to the fifth aspect and the implementations of the fifth aspect.

According to an eighth aspect, a communication apparatus is provided. The apparatus may be a terminal device, or may be a chip or a circuit configured in the terminal device. This is not limited in this application.

The apparatus includes: a processing unit, configured to derive a first key, and derive a third key based on the first key, where the first key is determined based on a second key by using a first parameter value, the second key is a master key, the first parameter value is obtained through update based on a second parameter value, or the first parameter value is determined based on a quantity of times of accessing a first cell or a secondary node to which the first cell belongs, the third key is a user plane key and/or a control plane key, and the third key is used to perform encryption or data integrity protection on data and/or signaling with the first cell.

With reference to the eighth aspect, in some implementations of the eighth aspect, the second parameter value is a parameter value used last time for the first cell or the secondary node to which the first cell belongs, or the second parameter value is a parameter value used for previous access.

With reference to the eighth aspect, in some implementations of the eighth aspect, the second parameter value is a parameter value used to access a third cell last time, and the third cell has the same second parameter as the first cell.

With reference to the eighth aspect, in some implementations of the eighth aspect, the first key is derived in a case of handover from a cell having a different second parameter value to the first cell.

With reference to the eighth aspect, in some implementations of the eighth aspect, the second parameter value is a parameter value used for a cell in a first cell set last time, and the first cell set includes the first cell.

With reference to the eighth aspect, in some implementations of the eighth aspect, the first key is derived in a case of handover from a cell outside the first cell set to the first cell.

With reference to the eighth aspect, in some implementations of the eighth aspect, the first parameter value is the second parameter value plus N, where N is an integer greater than or equal to 1, or N is a maximum quantity of candidate cells for conditional cell addition or change.

With reference to the eighth aspect, in some implementations of the eighth aspect, the first parameter value is determined based on a third parameter value and the quantity of times of accessing the first cell or the secondary node to which the first cell belongs, and the third parameter value is a start parameter value associated with the first cell or the secondary node to which the first cell belongs; or the first parameter value is determined based on the third parameter value and a quantity of times of accessing a cell in the first cell set, and the third parameter value is a start parameter value associated with the first cell set.

With reference to the eighth aspect, in some implementations of the eighth aspect, the first parameter value is a P^{th} value in a first set, P is related to the quantity of times of accessing the first cell or the secondary node to which the first cell belongs, and the first set includes a plurality of parameter values associated with the first cell or the secondary node to which the first cell belongs.

With reference to the eighth aspect, in some implementations of the eighth aspect, the apparatus includes: a transceiver unit, configured to send a first message to a master node, where the first message indicates the first cell that meets an execution condition or the secondary node to which the first cell belongs, and the first message includes the first parameter value.

It should be understood that, for beneficial effects of the eighth aspect and the implementations of the eighth aspect, refer to the first aspect and the implementations of the first aspect.

According to a ninth aspect, a communication apparatus is provided. The apparatus may be a terminal device, or may be a chip or a circuit configured in the terminal device. This is not limited in this application.

The apparatus includes: a processing unit, configured to derive a fourth key, and derive a sixth key based on the fourth key, where the fourth key is determined based on a fifth key, the fifth key is a key for a previous accessed cell, or the fifth key is a key used last time to access a second cell or a secondary node to which the second cell belongs, or the fifth key is a key used for a cell in a second cell set last time, and the first cell set includes the second cell, or the fifth key is a key used to access a fourth cell last time, and the fourth cell has a same key or a same counter as the second cell, the sixth key is a user plane key and/or a control plane key, and the sixth key is used to perform encryption or data integrity protection on data and/or signaling with the second cell.

With reference to the ninth aspect, in some implementations of the ninth aspect, the processing unit is specifically configured to derive the fourth key in a case of handover from a cell outside the second cell set to the second cell, or in a case of handover from a cell having a different counter to the second cell.

With reference to the ninth aspect, in some implementations of the ninth aspect, the processing unit is specifically configured to derive the fourth key based on the fifth key by using a fourth parameter value, where the fourth parameter value is a parameter value associated with the second cell or the secondary node to which the second cell belongs.

With reference to the ninth aspect, in some implementations of the ninth aspect, the fourth parameter value is a parameter value associated with the second cell or the secondary node to which the second cell belongs, or the fourth parameter value is a parameter value associated with the second cell set, or the fourth parameter value is obtained through update based on a fifth parameter value, or the fourth parameter value is determined based on a quantity of times of accessing the second cell or the secondary node to which the second cell belongs.

With reference to the ninth aspect, in some implementations of the ninth aspect, the fifth parameter value is a parameter value used last time for the second cell or the secondary node to which the second cell belongs, or the fifth parameter value is a parameter value used for previous access, or the fifth parameter value is a parameter value used for a cell in the second cell set last time.

It should be understood that, for beneficial effects of the ninth aspect and the implementations of the ninth aspect, refer to the fifth aspect and the implementations of the fifth aspect.

In the eighth aspect and the ninth aspect, when the communication apparatus is the terminal device, the processing unit may be a processor, and the transceiver unit may be a transceiver. When the communication apparatus is the chip or the circuit configured in the terminal device, the processing unit may be a processor, and the transceiver unit may be an input/output interface, a pin, a circuit, or the like.

According to a tenth aspect, a communication apparatus is provided. The apparatus may be a network device, or may be a chip or a circuit configured in the network device. This is not limited in this application.

The apparatus includes a processing unit and a transceiver unit. The processing unit is configured to derive a first key, where the first key is used for security of a first cell, the first cell is a candidate cell for conditional cell addition or change CPAC, the first key is determined based on a second key by using a first parameter value, the second key is a master key, and the first parameter value is received from a terminal device, or the first parameter value is obtained through update based on a second parameter value, or the first parameter value is determined based on a quantity of times that the terminal device accesses the first cell or a secondary node to which the first cell belongs. The transceiver unit is configured to send the first key to the first cell or the secondary node to which the first cell belongs.

With reference to the tenth aspect, in some implementations of the tenth aspect, the transceiver unit is specifically configured to send a second set to the first cell or the secondary node to which the first cell belongs, where the second set includes a plurality of keys associated with the first cell or the secondary node to which the first cell belongs, and the plurality of keys include the first key.

With reference to the tenth aspect, in some implementations of the tenth aspect, the transceiver unit is further configured to receive a first message from the terminal device, where the first message includes the first parameter value, and the first message indicates the first cell that meets an execution condition or the secondary node to which the first cell belongs.

With reference to the tenth aspect, in some implementations of the tenth aspect, the second parameter value is a parameter value used last time for the first cell or the secondary node to which the first cell belongs, or the second parameter value is a parameter value used by the terminal device for previous access.

With reference to the tenth aspect, in some implementations of the tenth aspect, the second parameter value is a parameter value used to access a third cell last time, and the third cell has the same second parameter as the first cell.

With reference to the tenth aspect, in some implementations of the tenth aspect, the processing unit is specifically configured to derive the first key in a case of handover from a cell having a different second parameter value to the first cell.

With reference to the tenth aspect, in some implementations of the tenth aspect, the second parameter value is a parameter value used for a cell in a first cell set last time, and the first cell set includes the first cell.

With reference to the tenth aspect, in some implementations of the tenth aspect, the processing unit is specifically configured to derive the first key in a case of handover from a cell outside the first cell set to the first cell.

With reference to the tenth aspect, in some implementations of the tenth aspect, the first parameter value is the second parameter value plus N, where N is an integer greater than or equal to 1, or N is a maximum quantity of candidate cells for conditional cell addition or change.

With reference to the tenth aspect, in some implementations of the tenth aspect, the first parameter value is determined based on a third parameter value and the quantity of times that the terminal device accesses the first cell or the secondary node to which the first cell belongs, and the third parameter value is a start parameter value associated with the first cell or the secondary node to which the first cell belongs; or the first parameter value is determined based on the third parameter value and a quantity of times of accessing a cell in the first cell set, and the third parameter value is a start parameter value associated with the first cell set.

With reference to the tenth aspect, in some implementations of the tenth aspect, the first parameter value is a P^{th} value in a first set, P is related to the quantity of times that the terminal device accesses the first cell or the secondary node to which the first cell belongs, and the first set includes a plurality of parameter values associated with the first cell or the secondary node to which the first cell belongs.

It should be understood that, for beneficial effects of the tenth aspect and the implementations of the tenth aspect, refer to the third aspect and the implementations of the third aspect.

According to an eleventh aspect, a communication apparatus is provided. The apparatus may be a network device, or may be a chip or a circuit configured in the network device. This is not limited in this application.

The apparatus includes a processing unit and a transceiver unit. The processing unit is configured to derive a fourth key, where the fourth key is used for security of a second cell, the fourth key is determined based on a fifth key, and the fifth key is a key used for a previous accessed cell, or the fifth key is a key used last time to access the second cell or a secondary node to which the second cell belongs; and the transceiver unit is configured to send the fourth key to the second cell or the secondary node to which the second cell belongs.

With reference to the eleventh aspect, in some implementations of the eleventh aspect, the processing unit is specifically configured to derive the fourth key based on the fifth key by using a fourth parameter value, where the fourth parameter value is a parameter value associated with the second cell or the secondary node to which the second cell belongs, or the fourth parameter value is a parameter value associated with a second cell set.

With reference to the eleventh aspect, in some implementations of the eleventh aspect, the fifth key is determined based on a sixth key by using a fifth parameter value, the sixth key is a master key, and the fifth parameter value is a parameter value associated with the second cell or the secondary node to which the second cell belongs, or the fifth parameter value is obtained through update based on a sixth parameter value, or the fifth parameter value is determined based on a quantity of times that a terminal device accesses the second cell or the secondary node to which the second cell belongs, or the fifth parameter value is a parameter value used for a cell in the second cell set last time.

With reference to the eleventh aspect, in some implementations of the eleventh aspect, the sixth parameter value is a parameter value used last time for the second cell or the secondary node to which the second cell belongs, or the sixth parameter value is a parameter value used by the terminal device for previous access.

It should be understood that, for beneficial effects of the eleventh aspect and the implementations of the eleventh aspect, refer to the sixth aspect and the implementations of the sixth aspect.

According to a twelfth aspect, a communication apparatus is provided. The apparatus may be a network device, or may be a chip or a circuit configured in the network device. This is not limited in this application.

The apparatus includes a processing unit and a transceiver unit. The transceiver unit is configured to receive a second set, where the second set includes a plurality of keys associated with a first cell or a secondary node to which the first cell belongs, and the plurality of keys include a first key; and the processing unit is configured to determine a first key from the second set based on a first identifier or a quantity of times that a terminal device accesses the first cell or the secondary node to which the first cell belongs, where the first identifier indicates a location of the first key in the second set.

With reference to the twelfth aspect, in some implementations of the twelfth aspect, the transceiver unit is further configured to receive a second message, where the second message includes the first identifier.

It should be understood that, for beneficial effects of the twelfth aspect and the implementations of the twelfth aspect, refer to the fourth aspect and the implementations of the fourth aspect.

According to a thirteenth aspect, a communication apparatus is provided. The apparatus may be a network device, or may be a chip or a circuit configured in the network device. This is not limited in this application.

The apparatus includes: a processing unit, configured to derive a fourth key, and derive a sixth key based on the fourth key, where the fourth key is used for security of a second cell, the fourth key is determined based on a fifth key, the fifth key is a key used last time to access the second cell or a secondary node to which the second cell belongs, or the fifth key is a key used for a cell in a second cell set last time, and the first cell set includes the second cell, or the fifth key is a key used to access a fourth cell last time, and the fourth cell has a same key or a same counter as the second cell, the sixth key is a user plane key and/or a control plane key, and the sixth key is used to perform encryption or data integrity protection on data and/or signaling with a terminal device.

With reference to the thirteenth aspect, in some implementations of the thirteenth aspect, the processing unit is specifically configured to derive the fourth key in a case of handover from a cell outside the second cell set to the second cell, or in a case of handover from a cell having a different counter to the second cell.

With reference to the thirteenth aspect, in some implementations of the thirteenth aspect, the processing unit is further configured to derive the fourth key based on the fifth key by using a fourth parameter value.

With reference to the thirteenth aspect, in some implementations of the thirteenth aspect, the fifth key is determined based on a sixth key by using a fifth parameter value, the sixth key is a master key, and the fifth parameter value is a parameter value associated with the second cell or the secondary node to which the second cell belongs, or the fifth parameter value is obtained through update based on a sixth parameter value, or the fifth parameter value is determined based on a quantity of times that the terminal device accesses the second cell or the secondary node to which the second cell belongs.

With reference to the thirteenth aspect, in some implementations of the thirteenth aspect, the sixth parameter value is a parameter value used last time for the second cell or the secondary node to which the second cell belongs, or the sixth parameter value is a parameter value used by the terminal device for previous access.

It should be understood that, for beneficial effects of the thirteenth aspect and the implementations of the thirteenth aspect, refer to the fifth aspect and the implementations of the fifth aspect.

In the tenth aspect to the thirteenth aspect, when the communication apparatus is the network device, the processing unit may be a processor, and the transceiver unit may be a transceiver. When the communication apparatus is the chip or the circuit configured in the network device, the processing unit may be a processor, and the transceiver unit may be an input/output interface, a pin, a circuit, or the like.

According to a fourteenth aspect, a communication apparatus is provided, including a processor and a storage medium. The storage medium stores instructions, and when the instructions are run by the processor, the method according to any one of the first aspect or the possible implementations of the first aspect is implemented, or the method according to any one of the fifth aspect or the possible implementations of the fifth aspect is implemented. The communication apparatus may be a terminal device, or may be a chip or a circuit configured in the terminal device.

Optionally, the communication apparatus may further include a communication interface. The communication interface is configured to receive data and/or information, and transmit the received data and/or information to the processor. Optionally, the communication interface is further configured to output data and/or information processed by the processor.

According to a fifteenth aspect, a communication apparatus is provided, including a processor and a storage medium. The storage medium stores instructions, and when the instructions are run by the processor, the method according to any one of the third aspect or the possible implementations of the third aspect is implemented, or the method according to any one of the fourth aspect or the possible implementations of the fourth aspect is implemented, or the method according to any one of the sixth aspect or the possible implementations of the sixth aspect is implemented, or the method according to any one of the seventh aspect or the possible implementations of the seventh aspect is implemented. The communication apparatus may be a network device, or may be a chip or a circuit configured in the network device.

Optionally, the communication apparatus may further include a communication interface. The communication interface is configured to receive data and/or information, and transmit the received data and/or information to the processor. Optionally, the communication interface is further configured to output data and/or information processed by the processor.

According to a sixteenth aspect, a computer-readable storage medium is provided. The computer-readable storage medium includes instructions, and when the instructions are run by a processor, the method according to any one of the first aspect or the possible implementations of the first aspect is implemented, or the method according to any one of the fifth aspect or the possible implementations of the fifth aspect is implemented.

According to a seventeenth aspect, a computer-readable storage medium is provided. The computer-readable storage medium includes instructions, and when the instructions are run by a processor, the method according to any one of the third aspect or the possible implementations of the third aspect is implemented, or the method according to any one of the fourth aspect or the possible implementations of the fourth aspect is implemented, or the method according to any one of the sixth aspect or the possible implementations of the sixth aspect is implemented, or the method according to any one of the seventh aspect or the possible implementations of the seventh aspect is implemented.

According to an eighteenth aspect, a computer program product is provided. The computer program product includes computer program code or instructions, and when the computer program code or the instructions are run, the method according to any one of the first aspect or the possible implementations of the first aspect is implemented, or the method according to any one of the fifth aspect or the possible implementations of the fifth aspect is implemented.

According to a nineteenth aspect, a computer program product is provided. The computer program product includes computer program code or instructions, and when the computer program code or the instructions are run, the method according to any one of the third aspect or the possible implementations of the third aspect is implemented, or the method according to any one of the fourth aspect or the possible implementations of the fourth aspect is implemented, or the method according to any one of the sixth aspect or the possible implementations of the sixth aspect is implemented, or the method according to any one of the seventh aspect or the possible implementations of the seventh aspect is implemented.

According to a twentieth aspect, a communication method is provided, including the method according to any one of the first aspect or the possible implementations of the first aspect, the method according to any one of the third aspect or the possible implementations of the third aspect, and the method according to any one of the fourth aspect or the possible implementations of the fourth aspect.

According to a twenty-first aspect, a communication method is provided, including the method according to any one of the fourth aspect or the possible implementations of the fourth aspect, the method according to any one of the fifth aspect or the possible implementations of the fifth aspect, and the method according to any one of the sixth aspect or the possible implementations of the sixth aspect.

According to a twenty-second aspect, a communication system is provided, including the communication apparatus according to any one of the eighth aspect or the possible implementations of the eighth aspect, the communication apparatus according to any one of the tenth aspect or the possible implementations of the tenth aspect, and the communication apparatus according to any one of the twelfth aspect or the possible implementations of the twelfth aspect.

According to a twenty-third aspect, a communication system is provided, including the communication apparatus according to any one of the ninth aspect or the possible implementations of the ninth aspect, the communication apparatus according to any one of the eleventh aspect or the possible implementations of the eleventh aspect, and the communication apparatus according to any one of the thirteenth aspect or the possible implementations of the thirteenth aspect.

According to a twenty-fourth aspect, a communication system is provided, including the communication apparatus according to any one of the fourteenth aspect or the possible implementations of the fourteenth aspect and the communication apparatus according to any one of the fifteenth aspect or the possible implementations of the fifteenth aspect.

### BRIEF DESCRIPTION OF DRAWINGS

FIG. 1 is a diagram of a communication system applicable to an embodiment of this application;
FIG. 2 is a diagram of a dual-connectivity scenario applicable to an embodiment of this application;
FIG. 3 is a diagram of key reuse in the conventional technology;
FIG. 4 is another diagram of key reuse in the conventional technology;
FIG. 5 is a schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is another schematic flowchart of a communication method according to an embodiment of this application;
FIG. 10 is another schematic flowchart of a communication method according to an embodiment of this application;
FIG. 11 is another schematic flowchart of a communication method according to an embodiment of this application;
FIG. 12 is a block diagram of a communication apparatus according to an embodiment of this application;
FIG. 13 is another diagram of a structure of a communication apparatus according to an embodiment of this application; and
FIG. 14 is another diagram of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th Generation, 5G) mobile communication system or new radio (new radio, NR). The 5G mobile communication system may be non-standalone (non-standalone, NSA) networking or standalone (standalone, SA) networking.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6th generation (6th Generation, 6G) mobile communication system. This is not limited in this application.

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice and data connectivity for a user, for example, a handheld device having a wireless connection function or a vehicle-mounted device. Currently, some examples of the terminal may be a mobile phone (mobile phone), a tablet computer (pad), a computer (for example, a notebook computer or a palmtop computer) with wireless sending and receiving functions, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a home appliance like a television, a smart box, or a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In addition, the terminal device may alternatively be a terminal device in an internet of things (Internet of things, IoT) system. IoT is an important part of future information technology development. A main technical feature of IoT is that an article is connected to a network by using a communication technology, to implement an intelligent network of man-machine interconnection and interconnection between things. The IoT technology can implement massive connections, deep coverage, and terminal power saving by using, for example, a narrow band (narrow band, NB) technology.

In embodiments of this application, the terminal device may alternatively be a vehicle or an entire vehicle, and may implement communication via the internet of vehicles, or may be a component located in the vehicle (for example, placed in the vehicle or installed in the vehicle), that is, an on-board terminal device, an on-board module, or an on-board unit (on-board unit, OBU).

In addition, the terminal device may alternatively include a sensor such as an intelligent printer, a train detector, or a gas station. Main functions include collecting data (some terminal devices), receiving control information and downlink data from a network device, sending an electromagnetic wave, and transmitting uplink data to the network device.

In embodiments of this application, a network device may be any device with wireless receiving and sending functions. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node, for example, a baseband unit (BBU) or a distributed unit (distributed unit, DU), that forms a gNB or a transmission point, or a base station in a next-generation 6G communication system.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device communicates with the cell through a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

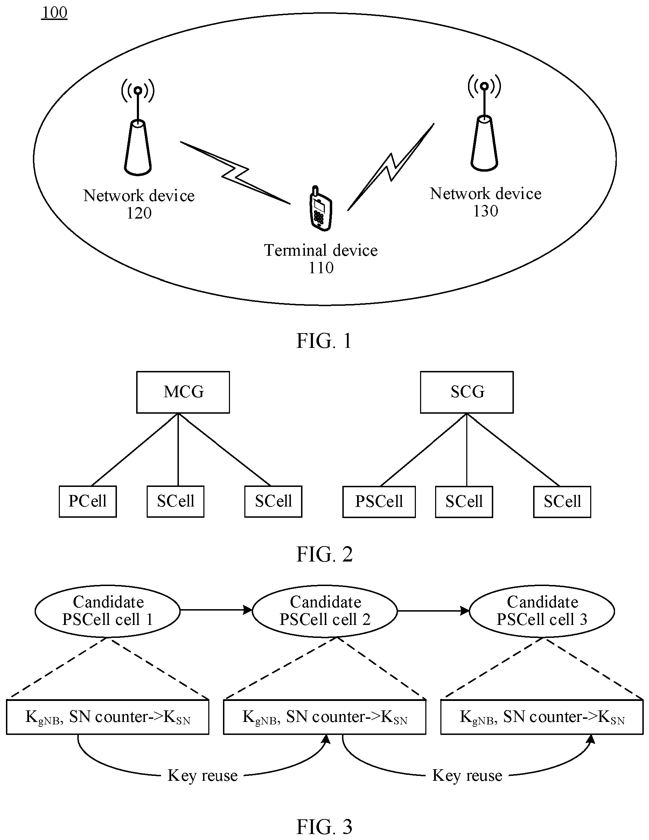

FIG. 1 is a diagram of a communication system 100 applicable to an embodiment of this application. As shown in FIG. 1, the communication system 100 may include at least one terminal device, for example, a terminal device 110 shown in FIG. 1. The communication system 100 may further include at least two network devices, for example, a network device 120 and a network device 130 shown in FIG. 1. The terminal device 110 may simultaneously communicate with the network device 120 and the network device 130. For example, the terminal device 110 may communicate with the network device 120 through a radio link, and the terminal device 110 may communicate with the network device 130 through a radio link. A plurality of antennas may be configured for each communication device such as the terminal device 110, the network device 120, or the network device 130. For each communication device in the communication system, the plurality of configured antennas may include at least one transmit antenna configured to send a signal and at least one receive antenna configured to receive a signal. Therefore, communication between communication devices in the communication system, between the terminal device 110 and the network device 120, and between the terminal device 110 and the network device 130 may be performed by using a multi-antenna technology.

It should be understood that FIG. 1 is merely a simplified diagram of an example for ease of understanding. The communication system may further include another network device or may further include another terminal device, which is not shown in FIG. 1.

It should be further understood that, that the terminal device 110 simultaneously communicates with the network device 120 and the network device 130 may also be referred to as dual-connectivity (dual-connectivity, DC) or multi-connectivity (multi-radio dual connectivity, MR-DC) of the terminal device. One network device that communicates with the terminal device 110 may be referred to as a master node (master node, MN), and the other network device that communicates with the terminal device 110 may be referred to as a secondary node (secondary node, SN). For example, it is assumed that the network device 120 is an MN, and the network device 130 is an SN.

The MN and the SN may be network devices of a same type, or may be network devices of different types. This is not specifically limited in embodiments of this application. For specific descriptions about the network device, refer to the foregoing descriptions. Details are not described herein.

FIG. 2 is a diagram of a dual-connectivity scenario applicable to an embodiment of this application. As shown in FIG. 2, when dual-connectivity is combined with carrier aggregation (carrier aggregation, CA), each network device may include one cell group (cell group, CG). A cell group served by an MN is a master cell group (master cell group, MCG), and a cell group served by an SN is a secondary cell group (secondary cell group, SCG). The master cell group may include one primary cell (primary cell, PCell) and at least one secondary cell (secondary cell, SCell), and the secondary cell group may include one primary secondary cell (primary secondary cell, PSCell) and at least one secondary cell (secondary cell, SCell).

It should be understood that when dual-connectivity is not combined with CA, there is only one primary cell served by a master node, and there is only one primary secondary cell served by a secondary node. This scenario is also applicable to embodiments of this application.

It should be understood that, for ease of description, an example in which each cell group includes two SCells is used for description in FIG. 2.

In the DC scenario, a terminal device may perform a PSCell addition or change process. PSCell addition triggered by the terminal device is referred to as conditional PSCell addition (conditional PSCell addition, CPA), and PSCell change triggered by the terminal device is referred to as conditional PSCell change (conditional PSCell change, CPC). The CPA may be understood as conditional addition of a PSCell. When the terminal device meets a PSCell addition condition, the terminal device performs a PSCell addition process. The CPC may be understood as conditional change of a PSCell. When the terminal device meets a PSCell change condition, the terminal device performs a PSCell change process. Specifically, for example, the CPA and the CPC may also be collectively referred to as conditional PSCell addition or change (conditional PSCell addition/change, CPAC). To be specific, a plurality of candidate PSCells are configured in a network configuration, and a CPAC configuration is sent to the terminal device. The CPAC configuration includes configurations of the plurality of candidate PSCells and corresponding execution conditions. When the terminal device evaluates that an execution condition of a candidate PSCell is met, the terminal device may perform a PSCell addition or change process. The cell that meets the execution condition may be referred to as a selected cell.

After the terminal device completes the CPA or CPC process and establishes a connection (for example, a random access channel (random access channel, RACH)) to the candidate PSCell that meets the condition, the terminal device releases a CPA configuration and/or a CPC configuration. Therefore, before network reconfiguration or network restart, the terminal device cannot continue to use the CPA configuration and/or the CPC configuration. To reduce a delay and signaling overheads of secondary cell group change, the terminal device may not release the CPA configuration and/or the CPC configuration. Before network reconfiguration or network restart, the terminal device continues to use the previously stored CPA configuration or CPC configuration, to continue to perform a CPA or CPC process.

For ease of description, the CPA or the CPC may be collectively referred to as the CPAC in this application. The CPA configuration or CPC configuration is collectively referred to as the CPAC configuration.

For example, the terminal device performs a CPC process. It is assumed that the terminal device currently communicates with the MN and cell 0 served by the SN (there may further be another SCell), that is, cell 0 is a PSCell of the terminal device in this case. It is assumed that the terminal device receives a CPC configuration, and the CPC configuration includes configuration information of candidate cell 1 to candidate cell 3, and an execution condition corresponding to each of candidate cell 1 to candidate cell 3. When the terminal device detects that an execution condition of candidate cell 3 is met, the terminal device may perform a CPC process, to change the PSCell from cell 0 to candidate cell 3. After completing a connection to candidate cell 3, the terminal device does not release the CPC configuration, but continues to maintain the CPC configuration and perform the CPC process. The terminal device may further continue to evaluate another candidate cell based on the stored CPC configuration. When another candidate cell meets an execution condition, the terminal device should trigger a CPC process again. For example, the terminal device subsequently detects that candidate cell 1 meets an execution condition. Therefore, the terminal device further changes the PSCell from candidate cell 3 to candidate cell 1, and completes a connection to candidate cell 1.

To prevent data from being intercepted and/or tampered with, encryption and/or integrity protection may be performed on communication between the terminal device and a network device based on a security key. In the foregoing DC scenario, in an example, communication between the terminal device and the MN is based on a control plane key (radio resource control (radio resource control, RRC) key, for example, an integrity protection key K_{RRCint} and an encryption/decryption key K_{RRCenc}) and/or a user plane key (UP key, for example, an integrity protection key K_{UPint} and an encryption/decryption key K_{UPenc}) derived based on a master key (master key, for example, K_{gNB} or K_{eNB}). In another example, communication between the terminal device and the SN is based on a control plane key and/or a user plane key derived based on a secondary key (secondary key, for example, K_{SN}, S-K_{gNB}, or S-K_{eNB}, where K_{SN} is uniformly used for description below). K_{SN} is a key derived based on K_{gNB} by using an SN counter (or sk-counter, which is collectively referred to as an SN counter below), where the SN counter is an SN counter associated with a current security context. Each time the MN needs new K_{SN} or updates K_{SN}, the MN generates or updates an SN counter and sends the SN counter to UE. The MN and the UE use the same master key and SN counter to derive same K_{SN}. It should be understood that, in addition to the SN counter, an input parameter for deriving K_{SN} may further include another parameter, for example, a length of the SN counter. The MN sends derived K_{SN} to a to-be-added or to-be-accessed secondary node, so that K_{SN} agreement between the terminal device and the secondary node is implemented. In this way, the terminal device and the secondary node derive a same integrity key and/or a same encryption/decryption key by using same K_{SN}, thereby ensuring communication security between the terminal device and the secondary node.

To reduce a delay and signaling overheads of change, the terminal device does not release the CPAC configuration. Before network reconfiguration or network restart, the terminal device continues to use the previously stored CPAC configuration. In the foregoing process, a delay and signaling overheads of secondary cell group change can be reduced. However, in a process in which the terminal device continues to perform CPAC based on the CPAC configuration, when the terminal device communicates with the PSCell served by the SN, a key reuse problem exists. Consequently, a process of communication between the terminal device and the PSCell served by the SN is insecure.

It should be understood that key reuse means that the terminal device uses a same key to perform encryption/integrity protection on communication data packets more than one time (for example, twice). If an attacker obtains two or more ciphertexts encrypted/integrity-protected by using a same key, there is a risk that a plaintext is disclosed.

For example, it is assumed that the CPAC configuration includes a configuration and an execution condition of candidate cell 1, a configuration and an execution condition of candidate cell 2, a configuration and an execution condition of candidate cell 3, and an SN counter. Alternatively, the CPAC configuration includes a configuration, an execution condition, and SN counter #1 of candidate cell 1; a configuration, an execution condition, and SN counter #2 of candidate PSCell 2; and a configuration, an execution condition, and SN counter #3 of candidate PSCell 3. All candidate cells are associated with a same SN counter, that is, SN counter #1=SN counter #2=SN counter #3.

FIG. 3 is a diagram of key reuse in the conventional technology. As shown in FIG. 3, after the terminal device completes CPA or CPC for the first time (K_{SN} used this time is derived based on K_{gNB} and an SN counter (or SN counter #1)), when the terminal device triggers CPC again, because neither K_{gNB} nor an SN counter (or SN counter #1) associated with each candidate cell in the CPAC configuration changes, K_{SN} used this time does not change, and is still the same as K_{SN} used by the terminal device to complete CPA or CPC for the first time. In this way, user plane keys and control plane keys derived based on same K_{SN} are also the same, and there is a risk of keystream reuse.

For another example, it is assumed that the CPAC configuration includes a configuration, an execution condition, and SN counter #1 of candidate cell 1; a configuration, an execution condition, and SN counter #2 of candidate cell 2; and a configuration, an execution condition, and SN counter #3 of candidate cell 3. Candidate cells served by different SNs or all candidate cells are associated with unequal SN counters. For example, SN counter #1≠SN counter #2≠SN counter #3.

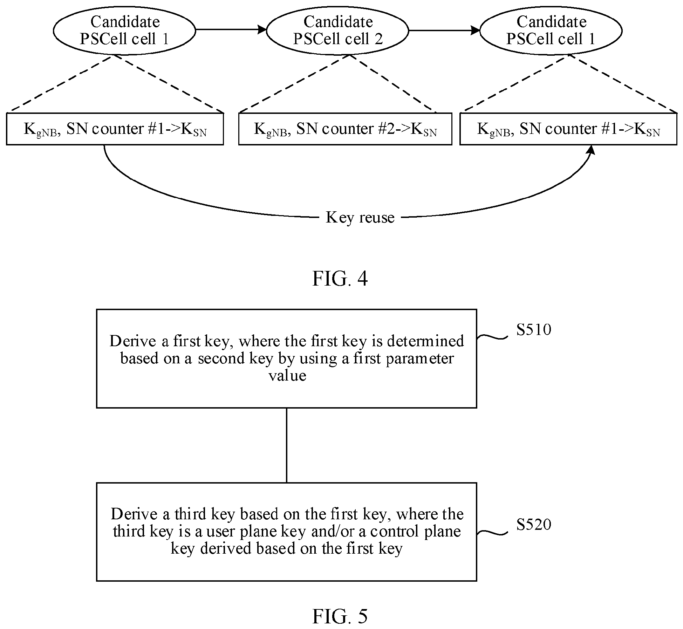

FIG. 4 is another diagram of key reuse in the conventional technology. As shown in FIG. 4, after CPA or CPC is completed between the terminal device and candidate cell 1 for the first time (K_{SN} used this time is derived based on K_{gNB} and SN counter #1), when the terminal device subsequently triggers a change to candidate cell 1 again, because K_{gNB} and SN counter #1 are the same as those used to access candidate cell 1 last time, K_{SN} used this time is still the same as K_{SN} used to access candidate cell 1 last time. In this way, user plane keys and control plane keys derived based on same K_{SN} are also the same, and there is a risk of keystream reuse.

In the conventional technology, whether to reestablish a packet data convergence protocol (packet data convergence protocol, PDCP) is indicated by a network device. For example, the network device indicates, by using reestablish PDCP indication information, UE whether to perform a PDCP reestablishment process during PSCell handover. It should be understood that if a key needs to be changed in a handover process, the network device needs to indicate the terminal device to perform PDCP reestablishment, and complete key change in a PDCP reestablishment process. Therefore, in a scenario of subsequent CPAC, the network device may further indicate, in the following manners, whether PDCP reestablishment needs to be performed during each handover, or whether a key needs to be changed during each handover.

Manner 1: Indication is performed in a manner of a candidate cell group (or a cell set): A network provides a plurality of cell sets for the UE, and each cell set includes one or more cells. Each cell set corresponds to a same SN counter. If a source cell and a target cell of the UE belong to a same cell set, during handover, the UE does not perform PDCP reestablishment, that is, does not derive a new key. If a source cell and a target cell of the UE belong to different cell sets, during handover, the UE needs to perform PDCP reestablishment, and needs to derive a new key. SN counter values of cells in the cell set are the same. One cell set may have one or more SN counters.

Manner 2: A network configures an associated SN counter for each candidate cell. One or more (that is, an SN counter set) associated SN counters may be configured for each cell. SN counters associated with different candidate cells may be the same or may be different. If SN counters of a source cell and a target cell of handover of the UE are the same, the UE does not need to perform PDCP reestablishment, that is, does not need to derive a new key. If SN counters/SN counter sets of a source cell and a target cell of handover of the UE are different, the UE needs to perform PDCP reestablishment, that is, the UE needs to derive a new key.

Manner 3: A network configures an associated SN counter for each candidate cell. One or more (that is, an SN counter set) associated SN counters may be configured for each cell. SN counters associated with different candidate cells may be the same or may be different. The network indicates the UE whether to perform PDCP reestablishment during handover from one cell to another cell. For example, there are three candidate cells (cell 1, cell 2, and cell 3) in total. The network separately indicates the UE whether to perform PDCP reestablishment during handover from cell 1 to cell 2, during handover from cell 2 to cell 1, during handover from cell 1 to cell 3, during handover from cell 3 to cell 1, during handover from cell 2 to cell 3, and during handover from cell 3 to cell 2. If the network indicates that PDCP reestablishment is required, the UE needs to perform PDCP reestablishment, that is, the UE needs to derive a new key. If the network indicates that PDCP reestablishment is not required, the UE does not need to perform PDCP reestablishment, that is, the UE does not need to derive a new key.

Manner 4: A network associates a third identifier with each candidate cell or each candidate cell configuration. Optionally, the third identifier is used to control whether PDCP is reestablished, or the third identifier is used to control whether to perform key change, or the third identifier indicates a security parameter associated with the candidate cell, or the third identifier indicates whether security parameters associated with candidate cells are the same. If a source cell and a target cell of the UE are associated with a same third identifier, the UE does not perform PDCP reestablishment or does not derive a new key during handover. If a source cell and a target cell of the UE are associated with different third identifiers, the UE needs to perform PDCP reestablishment or derive a new key during handover. It may be understood that SN counters of candidate cells associated with a same third identifier are also the same.

The foregoing manner 1 is used as an example. If the UE is handed over again to a cell included in a cell set, an SN counter used for deriving a key is still an SN counter corresponding to the cell set, and a risk of keystream reuse also exists.

In view of this, embodiments of this application provide a communication method, and the method can avoid a key reuse problem in a CPAC scenario.

FIG. 5 is a schematic flowchart of a communication method according to an embodiment of this application. As shown in FIG. 5, the method may include steps 510 and 520. The following separately describes steps 510 and 520 in detail.

Step 510: Derive (derive) a first key, where the first key is determined based on a second key by using a first parameter value.

For example, in this embodiment of this application, the first key may be derived based on the second key by using the first parameter value. Specifically, a terminal device may derive the first key based on the second key by using the first parameter value. The first key may be a secondary key (Secondary key), for example, K_{SN}, S-K_{gNB}, or S-K_{eNB}. It should be understood that deriving the first key may also be referred to as inferring the first key, deducing the first key, determining the first key, obtaining the first key, or the like.

It should be noted that the terminal device may evaluate whether an execution condition of a first cell is met, and the first cell may be a candidate cell for conditional cell addition or change. If the terminal device evaluates that the execution condition of the first cell is met, or the terminal device accesses a candidate cell that meets an execution condition, the terminal device may determine the first parameter value, and derive the first key by using the first parameter value.

The second key may be a master key (master key) between the terminal device and an MN, for example, may be K_{gNB} or K_{eNB}. The master key is used to derive a control plane key and/or a user plane key. The control plane key and/or the user plane key are/is used to perform encryption or data integrity protection on data and/or signaling between the terminal device and the MN. For example, the control plane key is used to perform encryption or data integrity protection on the signaling between the terminal device and the MN. For another example, the user plane key is used to perform encryption or data integrity protection on the data between the terminal device and the MN.

The first key may be a secondary key, for example, K_{SN}, S-K_{gNB}, or S-K_{eNB}. The first key is used to derive a control plane key and/or a user plane key. The control plane key and/or the user plane key are/is used to perform encryption or data integrity protection on data and/or signaling between the terminal device and an SN. For example, the control plane key is used to perform encryption or data integrity protection on the signaling between the terminal device and the SN. For another example, the user plane key is used to perform encryption or data integrity protection on the data between the terminal device and the SN.

There are a plurality of manners of determining the first parameter value. This is not specifically limited in embodiments of this application. The following describes several possible implementations by using examples.

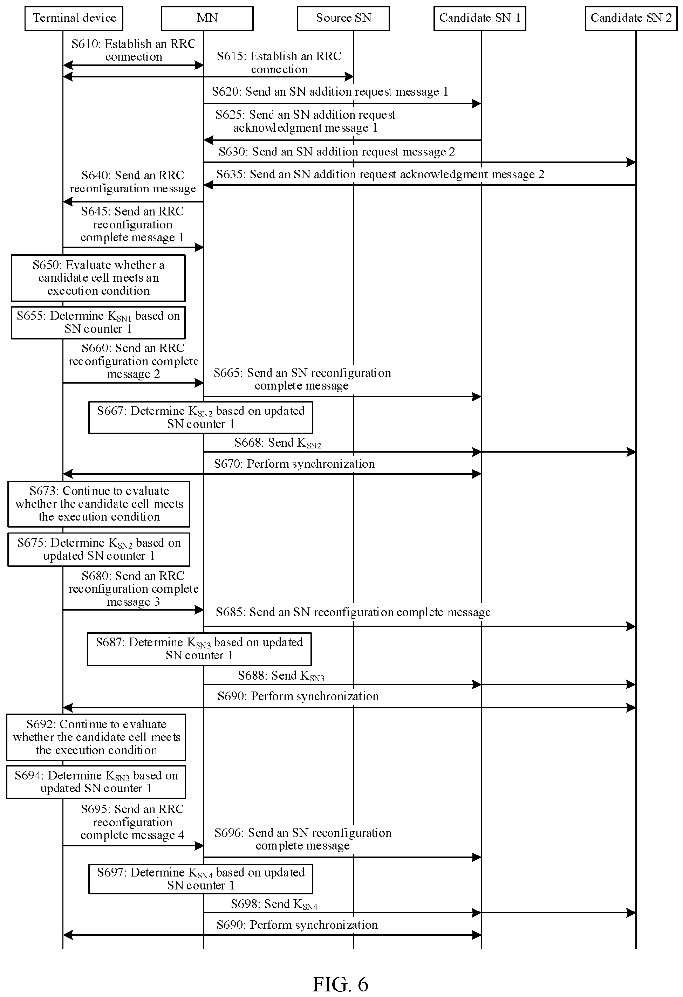

In a possible implementation, the first parameter value may be obtained through update based on a second parameter value. For example, the first parameter value is the second parameter value plus N, where N is an integer greater than or equal to 1, or N is a maximum quantity of candidate cells for conditional cell addition or change. Before the terminal device derives the first key, for example, if the terminal device evaluates that a candidate cell meets an execution condition, the terminal device updates the second parameter value to the first parameter value. For example, the terminal device detects that candidate cell 1 meets a corresponding execution condition, or before the terminal device accesses candidate cell 1, the terminal device updates an SN counter to SN counter+1. The following describes this implementation in detail with reference to FIG. 6, and details are not described herein.

In an example, the second parameter value is a parameter value used last time for the first cell or a secondary node to which the first cell belongs (or the second parameter value is a parameter value used last time by the terminal device in the first cell or the secondary node to which the first cell belongs), or the second parameter value is a parameter value used for previous access (or the second parameter value is a parameter value used last time).

In another example, the second parameter value is a parameter value used for a cell in a first cell set last time, and the first cell set includes the first cell. To be specific, the terminal device maintains an SN counter for the cell in the first cell set. In other words, cells in the first cell set have a same second parameter value (for example, SN counter). When the terminal device is handed over from a cell in another cell set to a cell in the first cell set, the terminal device derives the first key. The first key derived by the terminal device is determined based on a first parameter. The first parameter is updated based on a second parameter, and the second parameter is an SN counter used for a cell in the first cell set last time. For example, the first cell set indicates the terminal device to perform PDCP reestablishment. For example, when the terminal device is handed over from a cell in the first cell set to another cell in the first cell set, PDCP reestablishment does not need to be performed; or when the terminal device is handed over from a cell outside the first cell set to a cell in the first cell set, PDCP reestablishment needs to be performed. Optionally, the first cell set is a set of cells associated with a same third identifier, or the first cell set is a set of cells belonging to a same secondary node.

In another example, the second parameter value is a parameter value used for a third cell last time, and a same SN counter is configured for the third cell and the first cell. In other words, the terminal device maintains an SN counter for each candidate cell. SN counters of different candidate cells may be the same or different. When the terminal device is handed over from another cell to the first cell, if SN counters of the two cells are different, the terminal device derives the first key. The first key derived by the UE is implemented based on the first parameter value. The first parameter is updated based on the second parameter value, and the second parameter value is an SN counter value used last time for a cell that has a same SN counter as the first cell. For example, the third cell may alternatively be the first cell.

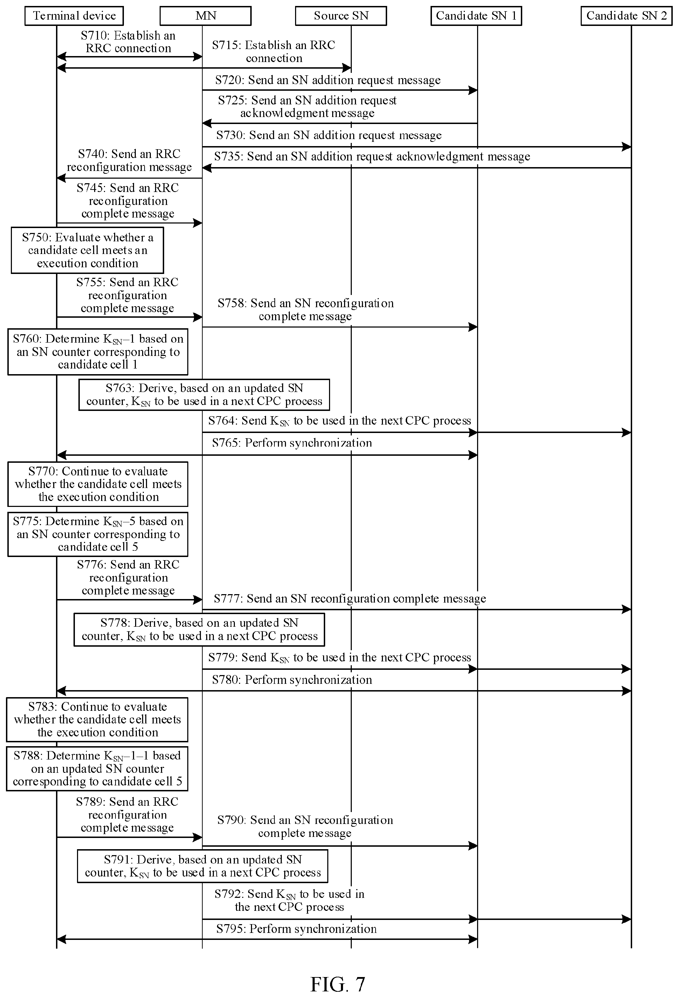

In another possible implementation, the first parameter value is determined based on a third parameter value and a quantity of times of accessing the first cell or the secondary node to which the first cell belongs, and the third parameter value is a start parameter value associated with the first cell or the secondary node to which the first cell belongs. Before the terminal device derives the first key, for example, if the terminal device evaluates that a candidate cell meets an execution condition, the terminal device updates the first parameter value based on the third parameter value and the quantity of times of accessing the first cell or the secondary node to which the first cell belongs. For example, when the terminal device detects that candidate cell 2 meets a corresponding execution condition, or before the terminal device accesses candidate cell 2, the terminal device updates an SN counter to a start value of an SN counter of candidate cell 2 or a secondary node to which the candidate cell belongs plus (a quantity of times that the terminal device accesses candidate cell 2 or the secondary node to which candidate cell 2 belongs minus 1). The following describes this implementation in detail with reference to FIG. 7, and details are not described herein.

In another possible implementation, the first parameter value is determined based on a third parameter value and a quantity of times of accessing a cell in the first cell set, and the third parameter value is a start parameter value associated with the first cell set. The first cell set includes the first cell. To be specific, the terminal device maintains an SN counter for the first cell set. When the terminal device is handed over from a cell in another cell set to a cell in the first cell set, the terminal device derives the first key. Before the terminal device derives the first key, for example, if the terminal device evaluates that a candidate cell meets an execution condition, the terminal device updates the first parameter value based on the third parameter value and the quantity of times of accessing a cell in the first cell set. For example, when the terminal device detects that candidate cell 2 meets a corresponding execution condition, or before the terminal device accesses candidate cell 2, the terminal device updates an SN counter to a start value of an SN counter of a cell set to which candidate cell 2 belongs plus (a quantity of times that the terminal device accesses the cell set minus 1). Optionally, available parameter values associated with the first cell set are limited. For example, in addition to the start parameter value associated with the first cell set, a network device further configures a maximum quantity of available parameter values of the first cell set.

Optionally, the first cell set includes cells associated with a same third identifier. The third identifier may be used to control whether PDCP is reestablished, or the third identifier is used to control whether to perform key change, or the third identifier indicates a security parameter (for example, an SN counter) associated with a candidate cell, or the third identifier indicates whether security parameters (for example, SN counters) associated with candidate cells are the same.

If a plurality of parameter values associated with the first cell set are all used, in a possible solution, when the terminal device performs cell change to a cell outside the first cell set after the plurality of parameters are used, the terminal device releases or suspends configuration information of the cell in the first cell set. It may be understood that releasing or suspending the configuration information of the cell refers to excluding the cell from the candidate cell. In another possible solution, after the plurality of parameters are used, the terminal device no longer selects a cell in the first cell set as a target cell. For example, the terminal device no longer evaluates the cell in the first cell set. According to the foregoing possible solution, it can be ensured that after a plurality of parameters associated with a cell are all used, a key reuse problem does not occur on the terminal device, and possible handover within a cell set in which a key is not changed is allowed. In another possible solution, if the plurality of parameters associated with the first cell set are all used, when the terminal device subsequently accesses a cell in the first cell set again, the terminal device does not use a secondary node-terminated (SN-terminated) radio bearer of the cell. In other words, it may be understood that the terminal device no longer uses a PDCP entity of a secondary node to which the cell belongs. The secondary node-terminated radio bearer includes a radio bearer of a master cell group and a radio bearer of a secondary cell group. According to this possible solution, the terminal device is allowed to continue to use a cell in the first cell set as a candidate cell or a target cell, but a key reuse problem of the secondary node is avoided. Optionally, a prerequisite for the terminal device to access such a cell again is that signal quality of a current serving cell of the terminal device is less than or equal to a specific threshold, and/or the terminal device evaluates that another candidate cell does not meet an execution condition (for example, within specific time).

The following describes this implementation in detail with reference to FIG. 7, and details are not described herein.

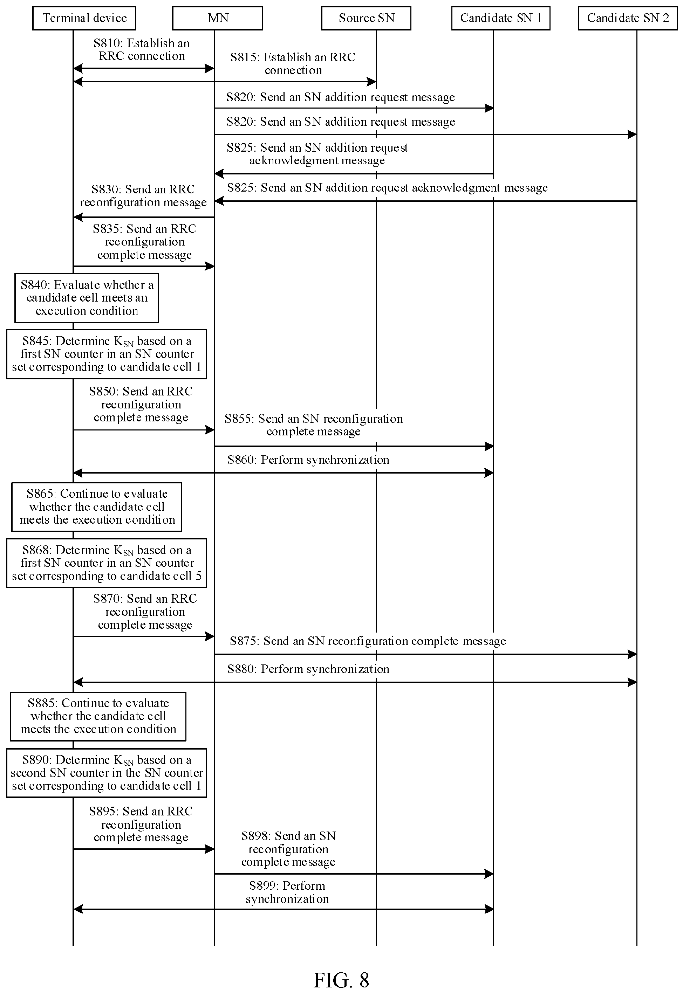

In another possible implementation, the first parameter value may be a P^{th} value in a first set, P is related to the quantity of times of accessing the first cell or the secondary node to which the first cell belongs, and the first set includes a plurality of parameter values associated with the first cell or the secondary node to which the first cell belongs. The following describes this implementation in detail with reference to FIG. 8, and details are not described herein.

Optionally, the terminal device deletes the used first parameter value from the first set. For example, after setting a parameter value in the first set to the first parameter value, the terminal device deletes the parameter value from the first set.

If the plurality of parameter values in the first set are all used, in a possible solution, when the terminal device performs cell change to a cell other than the first cell after the plurality of parameters are used, the terminal device releases or suspends configuration information of the first cell; or when the terminal device performs, after the plurality of parameters are used, cell change to a cell other than a cell served by the secondary node to which the first cell belongs, the terminal device releases or suspends configuration information of the cell served by the secondary node to which the first cell belongs. It may be understood that releasing or suspending the configuration information of the cell refers to excluding the cell from the candidate cell. In another possible solution, after the plurality of parameters are used, the terminal device no longer selects the first cell as a target cell. For example, the terminal device no longer evaluates the first cell. Alternatively, after the plurality of parameters are used, the terminal device no longer selects a cell served by the secondary node to which the first cell belongs as a target cell. For example, the terminal device no longer evaluates the cell served by the secondary node to which the first cell belongs. According to the foregoing possible solution, it can be ensured that after a plurality of parameters associated with a cell are all used, a key reuse problem does not occur on the terminal device, and possible intra-cell handover or intra-secondary node handover without a key change is allowed. In another possible solution, if the plurality of parameters associated with the first cell are all used, when the terminal device subsequently accesses the first cell again, the terminal device does not use a secondary node-terminated (SN-terminated) radio bearer of the cell. In other words, it may be understood that the terminal device no longer uses a PDCP entity of the secondary node. Alternatively, if the plurality of parameters associated with the secondary node to which the first cell belongs are all used, when the terminal device subsequently accesses a cell served by the secondary node to which the first cell belongs, the terminal device does not use a secondary node-terminated (SN-terminated) radio bearer of the cell. In other words, it may be understood that the terminal device no longer uses a PDCP entity of the secondary node. The secondary node-terminated radio bearer includes a radio bearer of a master cell group and a radio bearer of a secondary cell group. According to this possible solution, the terminal device is allowed to continue to use the first cell or a cell served by the secondary node to which the first cell belongs as a candidate cell or a target cell, but a key reuse problem of the secondary node is avoided. Optionally, a prerequisite for the terminal device to access such a cell again is that signal quality of a current serving cell of the terminal device is less than or equal to a specific threshold, and/or the terminal device evaluates that another candidate cell does not meet an execution condition (for example, within specific time).

In another possible implementation, the first parameter value is selected from a third set, the third set includes a plurality of parameter values associated with the first cell set, and the plurality of parameter values include the first parameter value. In an example, the first parameter value is randomly selected from unused parameter values in the plurality of parameter values included in the third set. In another example, the first parameter value is sequentially selected in descending order or ascending order of the parameter values in the third set. In another example, the first parameter value is a P^{th} value in the third set, and P is related to the quantity of times of accessing the first cell or the secondary node to which the first cell belongs. In another example, the first parameter value is sequentially selected from front to back or from back to front based on the parameter values in the third set. To be specific, the terminal device maintains a group of SN counters for the first cell set. When the terminal device is handed over from a cell outside the first cell set to the first cell, the terminal device derives the first key. The terminal device selects an unused SN counter from an SN counter set of the first cell set, and derives a new key. A selection rule may be performing sequential selection based on a quantity of times that the UE accesses the cell set, or may be performing random selection (which is irrelevant to the quantity of times that the UE accesses the cell set), and it needs to be ensured that an SN counter selected each time is not repeated.

For another example, the terminal device deletes the used first parameter value from the third set. After the terminal device sets the first parameter value to a parameter value in the third set, the terminal device deletes the parameter value from the third set. When the terminal device is handed over from a cell outside the first cell set to the first cell, the terminal device uses a 1^{st} parameter value in the third set as the first parameter value, and derives the first key by using the first parameter value.

In a possible solution, if the plurality of parameter values in the third set are all used, when the terminal device performs cell change to a cell outside the first cell set after the plurality of parameters are used, the terminal device releases or suspends configuration information of the cell in the first cell set. In a possible solution, if the plurality of parameter values in the third set are all used, after the plurality of parameters are used, the terminal device no longer selects a cell in the first cell set as a target cell. For example, the terminal device no longer evaluates the cell in the first cell set. According to the foregoing possible solution, it can be ensured that after a plurality of parameters associated with a cell are all used, a key reuse problem does not occur on the terminal device, and possible handover within a set in which a key is not changed is allowed. In another possible solution, if the plurality of parameters associated with the first cell set are all used, when the terminal device subsequently accesses a cell in the first cell set again, the terminal device does not use a secondary node-terminated (SN-terminated) radio bearer of the cell. In other words, it may be understood that the terminal device no longer uses a PDCP entity of the secondary node. The secondary node-terminated radio bearer includes a radio bearer of a master cell group and a radio bearer of a secondary cell group. According to this possible solution, the terminal device is allowed to continue to use a cell in the first cell set as a candidate cell or a target cell, but a key reuse problem of the secondary node is avoided. Optionally, a prerequisite for the terminal device to access such a cell again is that signal quality of a current serving cell of the terminal device is less than or equal to a specific threshold, and/or the terminal device evaluates that another candidate cell does not meet an execution condition (for example, within specific time).

For example, the first cell set may be configured by the network device. For example, an identifier of a candidate cell included in the first cell set is indicated.

For example, the first cell set may be a set of implicitly associated cells. For example, the first cell set may be a set of cells associated with a same third identifier, or the first cell set may be a set of cells configured with a same SN counter.

For example, the first cell set is not configured by the network device. The first cell set includes cells that have a same second parameter value set (for example, SN counter set). In this example, the first parameter value is selected from a third set, the third set includes a plurality of parameter values, and the plurality of parameter values include the first parameter value. A plurality of candidate cells may be associated with the third set. When the terminal device is handed over from a cell not associated with the third set to a cell associated with the third set, the terminal device derives the first key. Alternatively, the first cell set includes cells associated with a same third identifier.

It should be understood that the first parameter value, the second parameter value, and the third parameter value may be different values of the parameter SN counter.

Step 520: Derive a third key based on the first key, where the third key is a user plane key and/or a control plane key.

In this embodiment of this application, the third key may be derived based on the first key, that is, the third key is a user plane key and/or a control plane key derived based on the first key. The control plane key and/or the user plane key are/is used to perform encryption or data integrity protection on data and/or signaling between the terminal device and the first cell. The user plane key is used to perform encryption or data integrity protection on the data between the terminal device and the first cell.

In the foregoing technical solution, the new first parameter value may be obtained by updating the second parameter value, or the new first parameter value may be determined based on the quantity of times of accessing the first cell or the secondary node to which the first cell belongs, or an unused parameter value may be selected from a plurality of parameter values, so that a new parameter value may be determined each time the terminal device accesses a cell, and derivation of a new key is determined based on the new parameter value, thereby avoiding a key reuse problem in a candidate cell handover process.

It should be understood that the third key may be derived based on the first key by using another input parameter, for example, one or more of a security algorithm type identifier, a security algorithm type identifier length, a security algorithm identifier, and a security algorithm identifier length.

Optionally, in some embodiments, the terminal device may further send the determined first parameter value to the MN. Specifically, the terminal device may send a first message to the master node MN, where the first message indicates the first cell that meets an execution condition or the secondary node to which the first cell belongs, and the first message may include the first parameter value. In other words, the first message includes not only indication information indicating the first cell or the secondary node to which the first cell belongs that meets the execution condition, but also the first parameter value. For example, the first message may be an RRC reconfiguration complete message. After receiving the first message sent by the UE, the MN may derive K_{SN} based on the first parameter value included in the first message, and send the derived K_{SN} to the SN. The SN uses the received K_{SN} for secure communication with the UE. In this implementation, if the MN considers that a plurality of SN counters configured for the UE are to be used up or are all used, the MN may initiate an SN counter update process. For example, the MN configures a new SN counter for the UE by using an RRC reconfiguration message. Alternatively, when a plurality of SN counters are to be used up or are all used, the UE requests the MN to update the SN counter. Optionally, the UE may indicate, to the MN, that a request reason is that the SN counters are to be used up or are used up.

In some embodiments, the MN may send a plurality of K_{SN}s that may be used to a candidate SN in an X^{th} message. The X^{th} message may be an SN addition request message. After receiving the first parameter value in the first message, the MN sends a third message to the SN, where the third message indicates the SN to use a specific K_{SN} in the plurality of K_{SN}s. In this implementation, if the SN considers that all received K_{SN}s are to be used or are used, the SN may request the MN to update K_{SN}. The request message is used to request update of the plurality of K_{SN}s. Alternatively, if the MN considers that a plurality of SN counters configured for the UE are to be used up or are all used, the MN may initiate an SN counter update process. For example, the MN configures a new SN counter for the UE by using an RRC reconfiguration message, and the MN may further send derived K_{SN} corresponding to the new SN counter to the SN. Alternatively, when a plurality of SN counters are to be used up or are all used, the UE requests the MN to update the SN counter. Optionally, the UE may indicate, to the MN, that a request reason is that the SN counters are to be used up or are used up.

It should be noted that the MN may obtain the first parameter value through update based on the second parameter value, or determine the first parameter value based on the quantity of times that the terminal device accesses the first cell or the secondary node to which the first cell belongs, or determine the first parameter value from a plurality of parameters according to the foregoing rule. In this case, the first message sent by the terminal device to the MN does not include the first parameter value.

In a possible implementation, an implementation process in which the MN determines the first parameter value is the same as a process in which the terminal device obtains the first parameter value in step 510. For details, refer to the descriptions in step 510. Details are not described herein again. The MN may further derive the first key based on the second key by using the first parameter value. After obtaining the first key through derivation, the MN may further send the first key to the first cell or the secondary node to which the first cell belongs. In this implementation, if the MN considers that a plurality of SN counters configured for the UE are to be used up or are all used, the MN may initiate an SN counter update process. For example, the MN configures a new SN counter for the UE by using an RRC reconfiguration message, and the MN may further send derived K_{SN} corresponding to the new SN counter to the SN. Alternatively, when a plurality of SN counters are to be used up or are all used, the UE requests the MN to update the SN counter. Optionally, the UE may indicate, to the MN, that a request reason is that the SN counters are to be used up or are used up. In this implementation, how to ensure agreement of the first parameter value used on the terminal device side and the MN side further needs to be considered, that is, if the terminal device fails to access the first cell, how to ensure that the terminal device side and the MN side use the same first parameter value during subsequent cell change further needs to be considered. In an example, the terminal device sends a first indication to the MN, where the first indication indicates whether the first parameter value is updated. When the first indication indicates that the first parameter value is updated, the MN uses a new first parameter value, and derives the first key based on the second key and the new first parameter value. When the first indication indicates that the first parameter value is not updated, the MN uses the original first parameter value, and derives the first key based on the second key and the original first parameter value. In another example, the UE should release configuration information of a candidate cell. In another example, the terminal device and the MN should consider that the first parameter value has been used, or the first parameter value is determined based on a quantity of times of attempting to access the first cell, the secondary node to which the first cell belongs, or a cell in the first cell set. As long as the MN successfully receives the RRC reconfiguration complete message, it is considered that the corresponding first parameter value has been used. In another example, the SN sends a second indication to the MN, where the second indication indicates whether access of the terminal device succeeds, or indicates whether the first key takes effect. For example, when the terminal device fails to access the first cell, the SN to which the first cell belongs indicates, to the MN, that access fails or that the first key cannot take effect. During subsequent cell change, the terminal device and the MN consider that the first parameter value is not used.

In a possible implementation, the MN sends a second set to the first cell or the secondary node to which the first cell belongs, where the second set includes a plurality of keys associated with the first cell or the secondary node to which the first cell belongs, and the plurality of keys include the first key. After receiving the second set, the secondary node may determine the first key from the second set based on a first identifier or the quantity of times that the terminal device accesses the first cell or the secondary node to which the first cell belongs. The first identifier indicates the first key in the second set. Alternatively, the secondary node may determine the first key by using the rule for determining the first parameter value in step S501. For example, the first key is sequentially determined from front to back or from back to front in the second set. The following describes this implementation in detail with reference to FIG. 8, and details are not described herein. In this implementation, if the SN considers that all K_{SN}s in the received second set are to be used or are used, the SN may request the MN to update K_{SN}. Alternatively, when a plurality of SN counters are to be used up or are all used, the UE requests the MN to update the SN counter. Optionally, the UE may indicate, to the MN, that a request reason is that the SN counters are to be used up or are used up. The request message is used to request update of the plurality of K_{SN}s. In this implementation, how to ensure agreement of the first parameter value used by the terminal device and the first key used by the SN further needs to be considered, that is, if the terminal device fails to access the first cell, how to ensure that the terminal device side and the SN side use the same first key during subsequent cell change further needs to be considered. In an example, the terminal device may use the first identifier to indicate the first key used for cell change. In another example, if the terminal device fails to access the first cell, the terminal device considers that the corresponding first parameter value is not used, that is, the terminal device rolls back to the first parameter value used previously. Correspondingly, the SN to which the first cell belongs considers that the corresponding first key is not used.

It should be understood that a quantity of candidate SNs and a quantity of candidate cells included in each candidate SN are not specifically limited in embodiments of this application. For ease of description, an example in which two candidate SNs (candidate SN 1 and candidate SN 2) are included, candidate SN 1 includes candidate cell 1, candidate cell 2, and candidate cell 3, and candidate SN 2 includes candidate cell 4, candidate cell 5, and candidate cell 6 is used below for description.

With reference to FIG. 6, the following describes in detail a specific implementation process of obtaining the first parameter value through update in step 510. It should be understood that the example in FIG. 6 is merely intended to help a person skilled in the art understand embodiments of this application, but is not intended to limit embodiments of this application to a specific value or a specific scenario in the example. It is clear that a person skilled in the art can make various equivalent modifications or changes based on the following example provided in FIG. 6, and such modifications and changes also fall within the scope of embodiments of this application.

FIG. 6 is another schematic flowchart of a communication method according to an embodiment of this application. As shown in FIG. 6, the method may include steps 610 to 699. The following separately describes steps 610 to 699 in detail.

Step 610: A terminal device establishes an RRC connection to an MN.

Step 615: The terminal device establishes an RRC connection to a source SN.

It should be noted that step 615 is optional.

For example, if the terminal device performs a CPC process, that is, the terminal device has established a connection to a cell served by the source SN, that is, the UE has a serving PSCell, the terminal device subsequently needs to perform a PSCell change process based on an execution condition. In this implementation, the terminal device may further establish the RRC connection to the source SN.

For example, if the terminal device performs a CPA process, that is, the terminal device performs a PSCell addition process based on an execution condition, in this implementation, the terminal device may establish the RRC connection to only the MN, and does not need to perform step 615 to establish the RRC connection to the source SN.

Step 620: The MN sends an SN addition request message 1 to candidate SN 1, where the SN addition request message 1 includes K_{SN1}.

For example, in this embodiment, all candidate cells included in candidate SN 1 correspond to one SN counter 1, that is, all the candidate cells correspond to a same SN counter. The MN may obtain K_{SN1} through calculation based on K_{gNB} and the SN counter. The MN may further send the SN addition request message 1 to candidate SN 1 or a candidate cell (for example, candidate cell 1, candidate cell 2, or candidate cell 3) served by candidate SN 1, where the SN addition request message 1 includes K_{SN1}. K_{gNB} is a key that needs to be used for communication between the MN and the terminal device, and corresponds to the foregoing master key. Optionally, the MN may alternatively obtain K_{SN1} through calculation based on parameters such as K_{gNB}, the SN counter, and a length of the SN counter.

It should be understood that SN counter 1 may correspond to the foregoing second parameter value.

Step 625: Candidate SN 1 sends an SN addition request acknowledgment message 1 to the MN.

In this embodiment of this application, after candidate SN 1 receives the SN addition request message 1 sent by the MN, if candidate SN 1 determines that a resource can be allocated to a candidate cell included in candidate SN 1, candidate SN 1 may send the SN addition request acknowledgment message 1 to the MN, and the SN addition request acknowledgment message 1 indicates that candidate SN 1 determines that candidate SN 1 can be added as a candidate SN.

Step 630: The MN sends an SN addition request message 2 to candidate SN 2.

For example, in this embodiment, all candidate cells included in candidate SN 2 correspond to one SN counter 1, that is, all the candidate cells correspond to a same SN counter. The MN may obtain K_{SN1} through calculation based on K_{gNB} and the SN counter. The MN may further send the SN addition request message 2 to candidate SN 2 or a candidate cell (for example, candidate cell 4, candidate cell 5, or candidate cell 6) served by candidate SN 2, where the SN addition request message 2 includes K_{SN1}.

Step 635: Candidate SN 2 sends an SN addition request acknowledgment message 2 to the MN.

In this embodiment of this application, after candidate SN 2 receives the SN addition request message 2 sent by the MN, if candidate SN 1 determines that a resource can be allocated to a candidate cell included in candidate SN 1, candidate SN 2 may send the SN addition request acknowledgment message 2 to the MN, and the SN addition request acknowledgment message 2 indicates that candidate SN 2 determines that candidate SN 2 can be added as a candidate SN.

It should be understood that an execution sequence between step 620 and step 630 and between step 625 and step 635 is not limited.

Step 640: The MN sends an RRC reconfiguration message to the terminal device.

The RRC reconfiguration message sent by the MN to the terminal device may include a CPAC configuration, and the CPAC configuration may include a configuration of each candidate cell included in candidate SN 1 and candidate SN 2, a corresponding execution condition, and SN counter 1. Specifically, for example, the CPAC configuration includes configurations of candidate cell 1 to candidate cell 6, corresponding execution conditions, and SN counter 1.

Step 645: The terminal device returns an RRC reconfiguration complete message 1 to the MN.

After receiving the RRC reconfiguration message of the MN and successfully completing reconfiguration, the terminal device returns the RRC reconfiguration complete message 1 to the MN.

Step 650: The terminal device evaluates whether a candidate cell included in the CPAC configuration meets an execution condition.

After receiving the CPAC configuration sent by the MN, the terminal device may start to evaluate the execution condition included in the CPAC configuration, and determine whether the candidate cell included in the CPAC configuration meets the execution condition.

Step 655: The terminal device determines K_{SN1} based on SN counter 1 included in the CPAC configuration.

If the terminal device detects that an execution condition of a candidate cell is met, or the terminal device needs to access a candidate cell that meets an execution condition, the terminal device may derive K_{SN1} based on a master key by using SN counter 1 included in the CPAC configuration. The terminal device stores K_{SN1}, may derive, based on K_{SN1}, a user plane key for performing encryption or data integrity protection on data with candidate cell 1, and may further derive, based on K_{SN1}, a control plane key for performing encryption or data integrity protection on signaling with candidate cell 1.

Step 660: The terminal device sends an RRC reconfiguration complete message 2 to the MN, where the RRC reconfiguration complete message 2 includes an RRC reconfiguration complete message sent to candidate SN 1.

If the terminal device determines that an execution condition of a candidate cell is met, the terminal device may send an RRC reconfiguration complete message to the MN. The RRC reconfiguration complete message may indicate a candidate cell selected by the terminal device. For example, assuming that the terminal device detects that the candidate cell that meets the execution condition is candidate cell 1, the terminal device may send the RRC reconfiguration complete message 2 to the MN, and the RRC reconfiguration complete message 2 includes the SN reconfiguration complete message sent to candidate SN 1 (a candidate SN to which candidate cell 1 belongs). The RRC reconfiguration complete message 2 may indicate that the candidate cell selected by the terminal device is candidate cell 1.

Step 665: The MN forwards the SN reconfiguration complete message to candidate SN 1.

In this embodiment of this application, after receiving the RRC reconfiguration complete message 2 sent by the terminal device, the MN may determine, based on the message, that the terminal device selects candidate cell 1, and the MN forwards the SN reconfiguration complete message to candidate SN 1 to which candidate cell 1 belongs.

It should be noted that an execution sequence of step 655, step 660, and step 665 is not specifically limited in this embodiment of this application. Step 655 may be first performed, and then step 660 and step 665 are performed; or step 660 and step 665 may be first performed, and then step 655 is performed; or step 655, step 660, and step 665 may be simultaneously performed. Deriving K_{SN1} and deriving an integrity protection or encryption/decryption key based on K_{SN1} in step 655 may be performed consecutively or separately. For example, the terminal device first derives K_{SN1}, and then derives the integrity protection or encryption/decryption key based on K_{SN1} before or after performing the following step 670.

Step 667: The MN derives K_{SN2} based on an updated SN counter.

Optionally, in some embodiments, the MN may further derive a new key for all candidate SNs (for example, candidate SN 1 and candidate SN 2) or all candidate cells (for example, candidate cell 1 to candidate cell 6) each time after CPA or CPC is performed once. The new key is used for a next triggered CPC process.

For example, the MN may update, according to an SN counter update rule, SN counter 1 included in the CPAC configuration to obtain SN counter 2, and derive K_{SN2} by using SN counter 2. For example, in a possible implementation, the SN counter update rule is that an SN counter is updated to SN counter+N, where N is a positive integer greater than or equal to 1, or N is a maximum quantity of candidate cells for conditional cell addition or change. The terminal device may obtain SN counter 2 based on SN counter 1+N according to the SN counter update rule, and derive K_{SN2} based on SN counter 2.

Step 668: The MN sends K_{SN2} to candidate SN 1 and candidate SN 2.

The MN may send K_{SN2} derived in step 667 for use in the next triggered CPC process to all candidate cells or a candidate SN to which all candidate cells belong.

In the foregoing technical solution, after performing CPA or CPC once, the MN may deliver, to all candidate SNs in advance, the key K_{SN2} to be used in the next triggered CPC process, so that the candidate SN can obtain the key K_{SN2} in advance in the next CPC process, and may not securely communicate with the terminal device only after receiving a reconfiguration complete message of the MN.

Step 670: The terminal device performs synchronization with candidate SN 1.

The terminal device may perform synchronization with candidate SN 1 to which candidate cell 1 belongs. For example, the synchronization process may be implemented through a RACH. Similarly, candidate SN 1 may derive, based on the received K_{SN1}, a user plane key for performing encryption or data integrity protection on data with the terminal device, and may further derive, based on K_{SN1}, a control plane key for performing encryption or data integrity protection on signaling with the terminal device. SN 1 may derive the user plane or control plane key after receiving K_{SN1} from the MN, or before or after step 670, or when step 670 is performed.

It should be noted that an execution sequence of step 667, step 668, and step 670 is not specifically limited in this embodiment of this application. Step 667 and step 668 may be first performed, and then step 670 is performed; or step 670 may be first performed, and then step 667 and step 668 are performed; or step 667, step 668, and step 670 may be simultaneously performed.

Step 673: The terminal device continues to evaluate whether the candidate cell included in the CPAC configuration meets the execution condition.

After completing CPA or CPC for the first time, the terminal device does not release the CPAC configuration. To support a subsequent (subsequent) CPC process, the terminal device retains the CPAC configuration, and continues to evaluate, based on the configuration, a candidate cell that meets an execution condition.

Step 675: The terminal device derives K_{SN2} based on an updated SN counter.

If the terminal device finds, through evaluation, a candidate cell that meets an execution condition, in a possible implementation, the terminal device may update the SN counter based on the SN counter used last time, and derive new K_{SN} by using the updated SN counter. For example, assuming that the terminal device detects that the candidate cell that meets the execution condition is candidate cell 5, the terminal device may update, according to the SN counter update rule, the SN counter included in the CPAC configuration to obtain SN counter 2. In another possible implementation, the terminal device may further update the SN counter based on an SN counter used last time for a cell in a cell set to which the candidate cell that meets the execution condition belongs, and derive new K_{SN} by using an updated SN counter. For example, it is assumed that the terminal device detects that the candidate cell that meets the execution condition is candidate cell 5, and candidate cell 5 belongs to cell set 1. The terminal device may update, according to the SN counter update rule, an SN counter used last time for a cell in cell set 1 included in the CPAC configuration, to obtain SN counter 2. In another possible implementation, the terminal device may further update the SN counter based on an SN counter used last time for a cell configured with a same SN counter as the candidate cell that meets the execution condition, and derive new K_{SN} by using an updated SN counter. For example, it is assumed that the terminal device detects that the candidate cell that meets the execution condition is candidate cell 5, and a same SN counter is configured for candidate cell 5 and candidate cell 10. The terminal device may update, according to the SN counter update rule, an SN counter used last time for candidate cell 10 included in the CPAC configuration, to obtain SN counter 2.

For example, in a possible implementation, the SN counter is updated to SN counter+N, where N is a positive integer greater than or equal to 1. The terminal device may obtain SN counter 2 based on SN counter 1+1 according to the SN counter update rule, for example, updating the SN counter to SN counter+1. The terminal device may further derive K_{SN2} by using SN counter 2.

The terminal device may store K_{SN2}, may further derive, based on K_{SN2}, a user plane key for performing encryption or data integrity protection on data with candidate cell 5, and may further derive, based on K_{SN2}, a control plane key for performing encryption or data integrity protection on signaling with candidate cell 5.

It should be understood that SN counter 1 may correspond to the foregoing second parameter value, SN counter 2 may correspond to the foregoing first parameter value, and K_{SN2} may correspond to the foregoing first key. The user plane key and/or the control plane key may correspond to the foregoing third key.

It should be understood that the terminal device does not necessarily immediately perform, after finding, through evaluation, the candidate cell that meets the execution condition, behavior of updating the SN counter and deriving K_{SN} and a subsequent key. For example, the terminal device may update the SN counter and derive K_{SN} and the like before or when accessing the candidate cell that meets the condition.

Step 680: The terminal device sends an RRC reconfiguration complete message 3 to the MN, where the RRC reconfiguration complete message 3 includes a reconfiguration complete message sent to candidate SN 2. For example, if the terminal device detects that candidate cell 5 meets an execution condition, the terminal device may send the RRC reconfiguration complete message 3 to the MN. The RRC reconfiguration complete message 3 may include the SN reconfiguration complete message sent to candidate SN 2 (a candidate SN to which candidate cell 5 belongs). The RRC reconfiguration complete message 3 may indicate that the terminal device selects candidate cell 5.

It should be understood that the RRC reconfiguration complete message 3 may correspond to the foregoing first message.

Optionally, the RRC reconfiguration complete message 3 may further include SN counter 2.

In an example, if the RRC reconfiguration complete message 3 includes SN counter 2, step 675 should be first performed in this embodiment of this application, and then step 680 is performed.

In another example, if the RRC reconfiguration complete message 3 does not include SN counter 2, an execution sequence of step 675 and step 680 is not specifically limited in this embodiment of this application. Step 675 may be first performed, and then step 680 is performed; or step 680 may be first performed, and then step 675 is performed; or step 675 and step 680 may be simultaneously performed.

Step 685: The MN forwards the SN reconfiguration complete message to candidate SN 2.

In this embodiment of this application, after receiving the RRC reconfiguration complete message 3 sent by the terminal device, the MN may forward, based on the message indicating that a candidate cell selected by the terminal device is candidate cell 5, the SN reconfiguration complete message to candidate SN 2 to which candidate cell 5 belongs.

For example, the MN may obtain SN counter 2, and obtain K_{SN2} through calculation based on K_{gNB} and SN counter 2. It should be understood that the MN obtains SN counter 2 in a plurality of implementations. This is not specifically limited in embodiments of this application. In a possible implementation, the MN obtains SN counter 2 from the reconfiguration complete message 3 sent by the terminal device. In another possible implementation, the MN may update SN counter 1 according to the SN counter update rule being SN counter+N to obtain SN counter 2, where SN counter 2 is SN counter 1+N.

In this embodiment of this application, the SN reconfiguration complete message forwarded by the MN to candidate SN 2 to which candidate cell 5 belongs may further include K_{SN2}. Alternatively, the MN sends the SN reconfiguration complete message of SN 2 and K_{SN2} to candidate cell 5.

Step 687: The MN derives K_{SN3} based on an updated SN counter.

Optionally, the MN may further update SN counter 2 according to the SN counter update rule to obtain SN counter 3, and derive K_{SN3} by using SN counter 3. For example, in a possible implementation, the SN counter update rule is that an SN counter is updated to SN counter+N, where N is a positive integer greater than or equal to 1, or N is a maximum quantity of candidate cells for conditional cell addition or change. The terminal device may obtain SN counter 3 based on SN counter 2+N according to the SN counter update rule, and derive K_{SN3} based on SN counter 3.

Step 688: The MN sends K_{SN3} to candidate SN 1 and candidate SN 2.

The MN may send K_{SN3} derived in step 687 for use in the next triggered CPC process to all candidate cells or a candidate SN to which all candidate cells belong.

In the foregoing technical solution, after performing CPA or CPC once, the MN may deliver, to all candidate SNs in advance, the key K_{SN3} to be used in the next triggered CPC process, so that the candidate SN can obtain the key K_{SN3} in advance in the next CPC process, and may not securely communicate with the terminal device only after receiving a reconfiguration complete message of the MN.

Step 690: The terminal device performs synchronization with candidate SN 2.

The terminal device may perform synchronization with candidate SN 2 to which candidate cell 5 belongs. For example, the synchronization process may be implemented through a RACH. Similarly, candidate SN 2 may derive, based on the received K_{SN2}, a user plane key for performing encryption or data integrity protection on data with the terminal device, and may further derive, based on K_{SN2}, a control plane key for performing encryption or data integrity protection on signaling with the terminal device. SN 2 may derive the user plane or control plane key after receiving K_{SN2} from the MN, or after step 690, or when step 690 is performed.

It should be noted that an execution sequence of step 687, step 688, and step 690 is not specifically limited in this embodiment of this application. Step 687 and step 688 may be first performed, and then step 690 is performed; or step 690 may be first performed, and then step 687 and step 688 are performed; or step 687, step 688, and step 690 may be simultaneously performed.

Step 692: The terminal device continues to evaluate whether the candidate cell included in the CPAC configuration meets the execution condition.

After completing CPC, the terminal device does not release the CPAC configuration. To support a subsequent (subsequent) CPC process, the terminal device retains the CPAC configuration, and continues to evaluate, based on the configuration, a candidate cell that meets an execution condition. The terminal device may update or release the CPAC configuration based on a timer or a quantity of times of execution of CPA or CPC, or based on an indication of the network device.

Step 694: The terminal device derives K_{SN3} based on an updated SN counter.

Similar to step 675, for ease of description, the following describes only one of implementations. For other implementations, refer to the descriptions in step 675. Details are not described herein again.

If the terminal device further finds, through evaluation, a candidate cell that meets an execution condition, the terminal device may update the SN counter based on the SN counter used last time, and derive new K_{SN} by using the updated SN counter. For example, assuming that the terminal device detects that the candidate cell that meets the execution condition is candidate cell 1, the terminal device may update SN counter 2 according to the SN counter update rule to obtain SN counter 3. For example, the SN counter update rule is SN counter+N. The terminal device may obtain SN counter 3 based on SN counter 2+N according to the SN counter update rule. The terminal device may further derive K_{SN3} by using SN counter 3.

The terminal device may store K_{SN3}, may further derive, based on K_{SN3}, a user plane key for performing encryption or data integrity protection on data with candidate cell 1, and may further derive, based on K_{SN3}, a control plane key for performing encryption or data integrity protection on signaling with candidate cell 1.

It should be understood that, in this case, SN counter 2 may correspond to the foregoing second parameter value, that is, a parameter value used by the terminal device last time. SN counter 3 may correspond to the foregoing first parameter value, and K_{SN3} may correspond to the foregoing first key. The user plane key and/or the control plane key may correspond to the foregoing third key.

Step 695: The terminal device sends an RRC reconfiguration complete message 4 to the MN, where the RRC reconfiguration complete message 4 includes a reconfiguration complete message sent to candidate SN 1.

For example, if the terminal device detects that candidate cell 1 meets an execution condition, the terminal device may send the RRC reconfiguration complete message 4 to the MN. The RRC reconfiguration complete message 4 includes the SN reconfiguration complete message sent to candidate SN 1 (a candidate SN to which candidate cell 1 belongs). The RRC reconfiguration complete message 4 may indicate that the terminal device selects candidate cell 1.

It should be understood that the RRC reconfiguration complete message 4 may correspond to the foregoing first message.

Optionally, the RRC reconfiguration complete message 4 may further include SN counter 3.

In an example, if the RRC reconfiguration complete message 4 includes SN counter 3, step 675 should be first performed in this embodiment of this application, and then step 680 is performed.

In another example, if the RRC reconfiguration complete message 4 does not include SN counter 3, an execution sequence of step 694 and step 695 is not specifically limited in this embodiment of this application. Step 694 may be first performed, and then step 695 is performed; or step 695 may be first performed, and then step 694 is performed; or step 694 and step 695 may be simultaneously performed.

Step 696: The MN forwards the SN reconfiguration complete message to candidate SN 1.

In this embodiment of this application, after receiving the RRC reconfiguration complete message 4 sent by the terminal device, the MN may forward, based on the message indicating that a candidate cell selected by the terminal device is candidate cell 1, the SN reconfiguration complete message to candidate SN 1 to which candidate cell 1 belongs.

For example, the MN may obtain SN counter 3, and obtain K_{SN3} through calculation based on K_{gNB} and SN counter 3. It should be understood that the MN obtains SN counter 3 in a plurality of implementations. This is not specifically limited in embodiments of this application. In a possible implementation, the MN obtains SN counter 3 from the reconfiguration complete message 4 sent by the terminal device. In another possible implementation, the MN may update SN counter 2 according to the SN counter update rule being SN counter+N to obtain SN counter 3, where SN counter 3 is SN counter 2+N.

In this embodiment of this application, the SN reconfiguration complete message forwarded by the MN to candidate SN 1 to which candidate cell 1 belongs may further include K_{SN3}.

Step 697: The MN derives K_{SN4} based on an updated SN counter.

Optionally, the MN may further update SN counter 3 according to the SN counter update rule to obtain SN counter 4, and derive K_{SN4} by using SN counter 4. For example, in a possible implementation, the SN counter update rule is that an SN counter is updated to SN counter+N, where N is a positive integer greater than or equal to 1, or N is a maximum quantity of candidate cells for conditional cell addition or change. The terminal device may obtain SN counter 4 based on SN counter 3+N according to the SN counter update rule, and derive K_{SN4} based on SN counter 4.

Step 698: The MN sends K_{SN4} to candidate SN 1 and candidate SN 2.

After performing CPA or CPC once, the MN may deliver, to all candidate SNs in advance, the key K_{SN4} to be used in the next triggered CPC process, so that the candidate SN can obtain the key K_{SN4} in advance in the next CPC process, and may not securely communicate with the terminal device only after receiving a reconfiguration complete message of the MN.

Step 699: The terminal device performs synchronization with candidate SN 1.

The terminal device may perform synchronization with candidate SN 1 to which candidate cell 1 belongs. For example, the synchronization process may be implemented through a RACH. Similarly, candidate SN 1 may derive, based on the received K_{SN3}, a user plane key for performing encryption or data integrity protection on data with the terminal device, and may further derive, based on K_{SN3}, a control plane key for performing encryption or data integrity protection on signaling with the terminal device. SN 1 may derive the user plane or control plane key after receiving K_{SN3} from the MN, or after step 699, or when step 699 is performed.

It should be noted that an execution sequence of step 697, step 698, and step 699 is not specifically limited in this embodiment of this application. Step 697 and step 698 may be first performed, and then step 699 is performed; or step 699 may be first performed, and then step 697 and step 698 are performed; or step 697, step 698, and step 699 may be simultaneously performed.

In the foregoing technical solution, the terminal device maintains the SN counter in a subsequent CPAC process, and synchronously updates the SN counter with the MN. The SN counter is updated in each subsequent CPC process, thereby ensuring that new K_{SN} is derived in the subsequent CPAC process and avoiding a key reuse problem.

With reference to FIG. 7, the following describes in detail another specific implementation process of updating the first parameter value in step 510. It should be understood that the example in FIG. 7 is merely intended to help a person skilled in the art understand embodiments of this application, but is not intended to limit embodiments of this application to a specific value or a specific scenario in the example. It is clear that a person skilled in the art can make various equivalent modifications or changes based on the following example provided in FIG. 7, and such modifications and changes also fall within the scope of embodiments of this application. Descriptions of some steps in FIG. 7 are the same as those in FIG. 6, and details are not described herein again.

FIG. 7 is another schematic flowchart of a communication method according to an embodiment of this application. As shown in FIG. 7, the method may include steps 710 to 795. The following separately describes steps 710 to 795 in detail.

Step 710: A terminal device establishes an RRC connection to an MN.

Step 715: The terminal device establishes an RRC connection to a source SN.

It should be noted that step 715 is optional.

Step 720: The MN sends an SN addition request message to candidate SN 1.

In a possible implementation, a quantity of SN addition request messages sent by the MN to a candidate SN is the same as a quantity of candidate cells included in the candidate SN. That is, a quantity of candidate cells included in candidate SN 1 is the same as a quantity of SN addition request messages sent by the MN to candidate SN 1. Each SN addition request message may include K_{SN} corresponding to a corresponding candidate cell. K_{SN} is obtained by the MN through calculation based on an SN counter (which may be referred to as a start SN counter) corresponding to each candidate cell. Optionally, an input for the MN to derive K_{SN} further includes a master key.

In a possible implementation, the SN addition request message sent by the MN to the candidate SN includes a plurality of K_{SN}s corresponding to a plurality of candidate cells served by the candidate SN. That is, a quantity of candidate cells served by candidate SN 1 is the same as a quantity of K_{SN}s included in the SN addition request sent by the MN to the SN. The plurality of K_{SN}s are obtained by the MN through calculation based on an SN counter (which may be referred to as a start SN counter) corresponding to each candidate cell. Optionally, an input for the MN to derive K_{SN} further includes a master key.

For the foregoing two implementations, for example, K_{SN} 1 corresponding to candidate cell 1 may be obtained by the MN through calculation based on an SN counter corresponding to candidate cell 1; K_{SN} 2 corresponding to candidate cell 2 may be obtained by the MN through calculation based on an SN counter corresponding to candidate cell 2; K_{SN} 5 corresponding to candidate cell 5 may be obtained by the MN through calculation based on an SN counter corresponding to candidate cell 5; and so on.

In another possible implementation, the SN addition request message sent by the MN to the candidate SN includes one K_{SN} corresponding to one or more candidate cells served by the candidate SN. That is, K_{SN}s corresponding to a plurality of candidate cells served by SN 1 are consistent. K_{SN} is obtained by the MN through calculation based on an SN counter (which may be referred to as a start SN counter) corresponding to the candidate SN. Optionally, an input for the MN to derive K_{SN} further includes a master key.

For example, K_{SN} 1 corresponding to candidate SN 1 may be obtained by the MN through calculation based on an SN counter corresponding to candidate SN 1, and is applicable to one or more candidate cells served by candidate SN 1; K_{SN} 2 corresponding to candidate SN 2 may be obtained by the MN through calculation based on an SN counter corresponding to candidate SN 2, and is applicable to one or more candidate cells served by candidate SN 2; and so on.

It should be understood that an example in which candidate cell 1 is the foregoing first cell is used. The SN counter corresponding to candidate cell 1 corresponds to the foregoing third parameter value, or the SN counter corresponding to candidate SN 1 to which candidate cell 1 belongs corresponds to the foregoing third parameter value.

A start SN counter corresponding to each candidate cell or each candidate SN is not specifically limited in embodiments of this application. The following separately lists two possible implementations.

In an example, the start SN counter corresponding to each candidate cell may be a start value (SN counter #x) of an SN counter of each candidate cell. For example, a start value of the SN counter of candidate cell 1 is SN counter #1. For another example, a start value of the SN counter of candidate cell 2 is SN counter #2. For another example, a start value of the SN counter of candidate cell 3 is SN counter #3. In this implementation, the MN may obtain, through calculation according to the foregoing method based on the start value (SN counter #x) of the SN counter corresponding to each candidate cell served by candidate SN 1, start K_{SN} corresponding to each candidate cell.

In another example, the start SN counter corresponding to each candidate cell may be a first SN counter in an SN counter value set of each candidate cell. For example, an SN counter value set available for candidate cell 1 is 1 to 10, and a first SN counter in the value set is 1. For another example, an SN counter value set available for candidate cell 2 is 11 to 20, and a first SN counter in the value set is 11. In this implementation, the MN may obtain, through calculation according to the foregoing method based on the first SN counter in the SN counter value set corresponding to each candidate cell served by candidate SN 1, start K_{SN} corresponding to each candidate cell.

In another example, the start SN counter corresponding to each candidate SN may be a start value (SN counter #y) of an SN counter of each candidate SN. For example, a start value of the SN counter of candidate SN 1 is SN counter #1. For another example, a start value of the SN counter of candidate SN 2 is SN counter #2. For another example, a start value of the SN counter of candidate SN 3 is SN counter #3. In this implementation, the MN may obtain, through calculation according to the foregoing method based on the start value (SN counter #x) of the SN counter corresponding to candidate SN 1, start K_{SN} of candidate SN 1.

In another example, the start SN counter corresponding to each candidate SN may be a first SN counter in an SN counter value set of each candidate SN. For example, an SN counter value set available for candidate SN 1 is 1 to 10, and a first SN counter in the value set is 1. For another example, an SN counter value set available for candidate SN 2 is 11 to 20, and a first SN counter in the value set is 11. In this implementation, the MN may obtain, through calculation according to the foregoing method based on the first SN counter in the SN counter value set corresponding to candidate SN 1, start K_{SN} corresponding to candidate SN 1.

Step 725: Candidate SN 1 sends an SN addition request acknowledgment message to the MN.

Step 730: The MN sends an SN addition request message to candidate SN 2.

In a possible implementation, the SN addition request message sent by the MN to candidate SN 2 includes K_{SN} corresponding to each candidate cell served by candidate SN 2. K_{SN} is obtained by the MN through calculation based on a start SN counter corresponding to each candidate cell included in candidate SN 2. For a specific process, refer to the descriptions in step 720. Details are not described herein again.

In another possible implementation, the SN addition request message sent by the MN to candidate SN 2 includes K_{SN} corresponding to candidate SN 2. K_{SN} is obtained by the MN through calculation based on a start SN counter corresponding to candidate SN 2. For a specific process, refer to the descriptions in step 720. Details are not described herein again.

Step 735: Candidate SN 2 sends an SN addition request acknowledgment message to the MN.

Step 740: The MN sends an RRC reconfiguration message to the terminal device.

In a possible implementation, the RRC reconfiguration message sent by the MN to the terminal device may include a CPAC configuration, and the CPAC configuration may include a configuration of each candidate cell, a corresponding execution condition, and an SN counter corresponding to each candidate cell.

Example 1: The SN counter corresponding to each candidate cell is a start value SN counter #x of the SN counter of each candidate cell. Optionally, the CPAC configuration may further indicate M, where M is a positive integer (for example, M is a positive integer greater than or equal to a quantity of candidate cells).

Example 2: The SN counter corresponding to each candidate cell is a start value SN counter #x of the SN counter of each candidate cell, and the CPAC configuration may further include a quantity P of available SN counters of each candidate cell. That is, a value range of the SN counters that can be used for each candidate cell is SN counter #x to SN counter #x+P.

Example 3: The SN counter corresponding to each candidate cell is an SN counter value set available for each candidate cell. For example, available SN counter value set 1 for candidate cell 1 is 1 to 10, available SN counter value set 2 for candidate cell 2 is 11 to 20, and available SN counter value set 3 for candidate cell 3 is 21 to 30.

In another possible implementation, the RRC reconfiguration message sent by the MN to the terminal device may include a CPAC configuration, and the CPAC configuration may include a configuration of each candidate cell, a corresponding execution condition, and an SN counter corresponding to each candidate cell. SN counters corresponding to a plurality of candidate cells belonging to a same SN are the same. In other words, the RRC reconfiguration message sent by the MN to the terminal device may include a CPAC configuration, and the CPAC configuration may include a configuration of each candidate cell, a corresponding execution condition, and an SN counter corresponding to each candidate SN.

Example 4: The SN counter corresponding to each candidate SN is a start value SN counter #y of the SN counter of each candidate SN. Optionally, the CPAC configuration may further indicate Q, where Q is a positive integer (for example, Q is a positive integer greater than or equal to a quantity of candidate SNs).

Example 5: The SN counter corresponding to each candidate SN is a start value SN counter #x of the SN counter of each candidate SN, and the CPAC configuration may further include a quantity R of available SN counters of each candidate SN. That is, a value range of the SN counters that can be used for each candidate SN is SN counter #y to SN counter #y+R.

Example 6: The SN counter corresponding to each candidate SN is an SN counter value set available for each candidate SN. For example, available SN counter value set 1 for candidate SN 1 is 1 to 10, available SN counter value set 2 for candidate SN 2 is 11 to 20, and available SN counter value set 3 for candidate SN 3 is 21 to 30.

Step 745: The terminal device returns an RRC reconfiguration complete message to the MN.

Step 750: The terminal device evaluates whether a candidate PSCell included in the CPAC configuration meets an execution condition.

Step 755: The terminal device sends an RRC reconfiguration complete message to the MN, where the RRC reconfiguration complete message includes an SN reconfiguration complete message sent to a candidate SN that meets the execution condition.

For example, assuming that the terminal device detects that the candidate cell that meets the execution condition is candidate cell 1, the terminal device may send the RRC reconfiguration complete message to the MN, and the RRC reconfiguration complete message includes the SN reconfiguration complete message sent to candidate SN 1 (a candidate SN to which candidate cell 1 belongs). The RRC reconfiguration complete message may indicate that the terminal device selects candidate cell 1.

Step 758: The MN forwards the SN reconfiguration complete message to candidate SN 1.

Step 760: The terminal device determines K_{SN}-1 based on an SN counter included in the CPAC configuration.

If the terminal device finds, through evaluation, a candidate cell that meets a condition, or the terminal device accesses a candidate cell that meets a condition, the terminal device updates an SN counter corresponding to the candidate cell or a candidate SN to which the candidate cell belongs, and determines K_{SN} by using an updated SN counter. For example, when the terminal device detects that the candidate cell that meets the execution condition is candidate cell 1, the terminal device may derive K_{SN}-1 by using an SN counter corresponding to candidate cell 1 or an SN to which candidate cell 1 belongs.

Example 1: If the terminal device finds, through evaluation, a candidate cell that meets an execution condition, or accesses a candidate cell that meets an execution condition, the terminal device updates the SN counter based on a start SN counter corresponding to the candidate cell, or the terminal device updates the SN counter based on an SN counter used for the candidate cell last time, or the terminal device updates the SN counter based on an SN counter used last time for a cell in a cell set to which the candidate cell that meets the execution condition belongs, or the terminal device updates the SN counter based on an SN counter used last time for a cell configured with a same SN counter as the candidate cell that meets the execution condition, and determines K_{SN} by using an updated SN counter. For example, the CPAC configuration includes a start value (SN counter #x) of an SN counter corresponding to candidate cell x, and an SN counter of a selected cell is updated to SN counter=SN counter #x+n*M. SN counter #x is a start value of an SN counter corresponding to each candidate cell, n is related to a quantity of times of deriving K_{SN} for the candidate cell, or n is related to a quantity of times that the terminal device accesses the candidate cell (for example, n is the quantity of times of deriving K_{SN} for the candidate cell minus 1 or n is the quantity of times that the terminal device accesses the candidate cell minus 1, and n is an integer greater than or equal to 0), and M is a positive integer (for example, M is an integer greater than or equal to a quantity of candidate cells). In this implementation, because the terminal device accesses candidate cell 1 for the first time, a quantity of times of deriving K_{SN} for candidate cell 1 is 0 (n=0), and a start SN counter that is corresponding to candidate cell 1 and that is determined by the terminal device according to the foregoing SN counter update rule is SN counter #1. For another example, the CPAC configuration includes a start value (SN counter #x) of an SN counter corresponding to candidate cell x, and an SN counter of a selected candidate cell is updated to SN counter+M. That is, each time a candidate cell is accessed, an SN counter is obtained based on an SN counter used for the candidate cell last time plus M. An SN counter used by the terminal device to access the candidate cell for the first time is a start value of the SN counter of the candidate cell. In this implementation, because the terminal device accesses candidate cell 1 for the first time, a used SN counter is start SN counter #1. The terminal device may obtain K_{SN}-1 through calculation by using SN counter #1. M may be configured by a network or predefined.

Example 2: If the terminal device finds, through evaluation, a candidate cell that meets an execution condition, or accesses a candidate cell that meets an execution condition, the terminal device updates the SN counter based on a start SN counter corresponding to the candidate cell and (optionally) a quantity of times of accessing the candidate cell, or the terminal device updates the SN counter based on an SN counter used for the candidate SN last time, and determines K_{SN} by using an updated SN counter. For example, the CPAC configuration includes a start value (SN counter #x) of an SN counter corresponding to candidate cell x and (optionally) a quantity P of available SN counters of each candidate cell, and an SN counter of a selected cell is updated to SN counter=SN counter #x+p, where p is related to a quantity of times that the terminal device accesses the candidate cell or a quantity of times of deriving K_{SN} for the candidate cell (for example, p is the quantity of times that the terminal device accesses the candidate cell minus 1, or p is the quantity of times of deriving K_{SN} for the candidate cell minus 1). In this implementation, the terminal device determines, according to the foregoing update rule, that the start SN counter corresponding to candidate cell 1 is SN counter #1. For another example, the CPAC configuration includes a start value (SN counter #x) of an SN counter corresponding to candidate cell x and (optionally) a quantity P of available SN counters of each candidate cell, and an SN counter of a selected candidate cell is updated to SN counter=SN counter+1, that is, each time a candidate cell is accessed, an SN counter is obtained based on an SN counter used for the candidate cell last time plus 1. An SN counter used by the terminal device to access the candidate cell for the first time is a start value of the SN counter of the candidate cell. In this implementation, a quantity of times that the terminal device accesses a candidate cell is limited, that is, a maximum quantity of access times is P. Values of P corresponding to all candidate cells may be the same or different. When the quantity of access times of the terminal device reaches P, the terminal device may release a configuration of the candidate cell or release the CPAC configuration. It may be understood that a special implementation of this implementation is: The terminal device accesses the candidate cell, and releases the CPAC configuration of the candidate cell. This is a case in which P=1. In an example, because the terminal device accesses candidate cell 1 for the first time, a used SN counter is start SN counter #1. The terminal device may obtain K_{SN}-1 through calculation by using SN counter #1. P may be configured by a network or predefined.

Example 3: If the terminal device finds, through evaluation, a candidate cell that meets an execution condition, or accesses a candidate cell that meets an execution condition, the terminal device updates the SN counter based on a plurality of SN counters corresponding to the candidate cell and (optionally) a quantity of times of accessing the candidate cell, and determines K_{SN} by using an updated SN counter. For example, the CPAC configuration includes SN counter value set x corresponding to candidate cell x, and the SN counter value set x includes a plurality of available SN counters corresponding to candidate cell x. An SN counter of a selected candidate cell is updated to a corresponding SN counter obtained from the SN counter value set based on a quantity of times that the terminal device accesses the candidate cell. In this implementation, because the terminal device accesses candidate cell 1 for the first time, the terminal device updates the SN counter to a first SN counter in SN counter value set 1 corresponding to candidate cell 1. The terminal device may obtain K_{SN}-1 through calculation by using the first SN counter in the SN counter value set.

Example 4: If the terminal device finds, through evaluation, a candidate cell that meets an execution condition, or accesses a candidate cell that meets an execution condition, the terminal device updates the SN counter based on a start SN counter corresponding to a candidate SN to which the candidate cell belongs, or the terminal device updates the SN counter based on an SN counter used for the candidate SN last time, and determines K_{SN} by using an updated SN counter. For example, the CPAC configuration includes a start value (SN counter #y) of an SN counter corresponding to candidate SN y, and an SN counter of a selected cell is updated to SN counter=SN counter #y+n*Q. SN counter #y is a start value of an SN counter corresponding to each candidate SN, n is related to a quantity of times of deriving K_{SN} for the candidate SN, or n is related to a quantity of times that the terminal device accesses the candidate SN (for example, n is the quantity of times of deriving K_{SN} for the candidate SN or n is the quantity of times that the terminal device accesses the candidate SN, and n is an integer greater than or equal to 0), and Q is a positive integer (for example, Q is an integer greater than or equal to a quantity of candidate SNs). In this implementation, because the terminal device accesses candidate SN 1 for the first time, a quantity of times of deriving K_{SN} for candidate SN 1 is 0 (n=0), and a start SN counter that is corresponding to SN 1 to which candidate cell 1 belongs and that is determined by the terminal device according to the foregoing SN counter update rule is SN counter #1. For another example, the CPAC configuration includes a start value (SN counter #y) of an SN counter corresponding to candidate SN y, and an SN counter of a selected candidate cell is updated to SN counter+Q. That is, each time a candidate cell is accessed, an SN counter is obtained based on an SN counter used last time for an SN to which the candidate cell belongs plus Q. An SN counter used by the terminal device to access the candidate SN for the first time is a start value of the SN counter of the candidate SN. In this implementation, because the terminal device accesses, for the first time, candidate SN 1 to which candidate cell 1 belongs, a used SN counter is start SN counter #1 corresponding to candidate SN 1. The terminal device may obtain K_{SN}-1 through calculation by using SN counter #1. Q may be configured by a network or predefined.

Example 5: If the terminal device finds, through evaluation, a candidate cell that meets an execution condition, or accesses a candidate cell that meets an execution condition, the terminal device updates the SN counter based on a start SN counter corresponding to a candidate SN to which the candidate cell belongs and (optionally) a quantity of times of accessing the candidate SN, or the terminal device updates the SN counter based on an SN counter used for the candidate SN last time, and determines K_{SN} by using an updated SN counter. For example, the CPAC configuration includes a start value (SN counter #y) of an SN counter corresponding to candidate SN y and a quantity R of available SN counters of each candidate SN, and an SN counter of a selected candidate cell is updated to SN counter=SN counter #y+r, where r is related to a quantity of times that the terminal device accesses the candidate SN or a quantity of times of deriving K_{SN} for the candidate SN (for example, r is the quantity of times that the terminal device accesses the candidate SN minus 1, or r is the quantity of times of deriving K_{SN} for the candidate SN minus 1). In this implementation, the terminal device determines, according to the foregoing update rule, that the start SN counter corresponding to SN 1 to which candidate cell 1 belongs is SN counter #1. For another example, the CPAC configuration includes a start value (SN counter #y) of an SN counter corresponding to candidate SN y and (optionally) a quantity R of available SN counters of each candidate cell, and an SN counter of a selected candidate cell is updated to SN counter=SN counter+1, that is, each time a candidate cell is accessed, an SN counter is obtained based on an SN counter used last time for an SN to which the candidate cell belongs plus 1. An SN counter used by the terminal device to access the candidate SN for the first time is a start value of the SN counter of the candidate SN. In this implementation, a quantity of times that the terminal device accesses a candidate SN is limited, that is, a maximum quantity of access times is R. Values of R corresponding to all candidate cells may be the same or different. When the quantity of access times of the terminal device reaches R, the terminal device may release a configuration of a candidate cell served by the candidate SN or release the CPAC configuration. It may be understood that a special implementation of this implementation is: The terminal device accesses the candidate cell, and releases the CPAC configuration of the SN to which the candidate cell belongs. This is a case in which R=1. In an example, because the terminal device accesses, for the first time, SN 1 to which candidate cell 1 belongs, a used SN counter is start SN counter #1. The terminal device may obtain K_{SN}-1 through calculation by using SN counter #1. R may be configured by a network or predefined.

Example 6: If the terminal device finds, through evaluation, a candidate cell that meets an execution condition, or accesses a candidate cell that meets an execution condition, the terminal device updates the SN counter based on a plurality of SN counters corresponding to an SN to which the candidate cell belongs and (optionally) a quantity of times of accessing the candidate SN, and determines K_{SN} by using an updated SN counter. For example, the CPAC configuration includes SN counter value set y corresponding to candidate SN y, and SN counter value set y includes a plurality of available SN counters corresponding to candidate SN y. An SN counter of a selected candidate cell is updated to a corresponding SN counter obtained from the SN counter value set based on a quantity of times that the terminal device accesses the candidate SN. In this implementation, because the terminal device accesses, for the first time, candidate SN 1 to which candidate cell 1 belongs, the terminal device updates the SN counter to a first SN counter in SN counter value set 1 corresponding to candidate SN 1. The terminal device may obtain K_{SN}-1 through calculation by using the first SN counter in the SN counter value set.

Example 7: If the terminal device finds, through evaluation, a candidate cell that meets an execution condition, or accesses a candidate cell that meets an execution condition, the terminal device updates the SN counter based on a plurality of SN counters associated with a cell set to which the candidate cell belongs, and determines K_{SN} by using an updated SN counter. For example, an SN counter value set that is associated with a cell set to which candidate SN z belongs and that is included in the CPAC configuration is value set z, and SN counter value set z includes a plurality of available SN counters. In an example, an SN counter may be randomly selected from SN counter value set z, and K_{SN}-1 is obtained through calculation based on the selected SN counter. In another example, an SN counter is selected in descending order or ascending order based on values of the plurality of available SN counters in SN counter value set z, and K_{SN}-1 is obtained through calculation based on the selected SN counter. In another example, an SN counter of a selected candidate cell is updated to a corresponding SN counter obtained from SN counter value set z based on a quantity of times that the terminal device accesses the candidate SN. In this implementation, because the terminal device accesses, for the first time, candidate SN 1 to which candidate cell 1 belongs, the terminal device updates the SN counter to a first SN counter in SN counter value set z. The terminal device may obtain K_{SN}-1 through calculation by using the first SN counter in SN counter value set z.

The terminal device may store K_{SN}-1, may further derive, based on K_{SN}-1, a user plane key for performing encryption or data integrity protection on data with candidate cell 1, and may further derive, based on K_{SN}-1, a control plane key for performing encryption or data integrity protection on signaling with candidate cell 1.

Step 763: The MN derives, based on the updated SN counter, K_{SN} to be used in a next triggered CPC process.

Optionally, in some embodiments, the MN may further derive a new key for all candidate SNs (for example, candidate SN 1 and candidate SN 2) or all candidate cells (for example, candidate cell 1 to candidate cell 9) each time after CPA or CPC is performed once. The new key is used for a next triggered CPC process.

In an example, each candidate cell corresponds to one SN counter. The MN may update a start SN counter corresponding to each candidate cell to obtain an updated SN counter corresponding to each candidate cell, and derive, based on the updated SN counter corresponding to each candidate cell, K_{SN} corresponding to each candidate cell. If the terminal device accesses a candidate cell in the next CPC process, the candidate cell may perform secure communication with the terminal device by using K_{SN} corresponding to the candidate cell. For example, candidate cell 1 is used as an example. A start SN counter of candidate cell 1 is updated, and K_{SN} (for example, K_{SN}-1-1) used for candidate cell 1 in a next CPC process is derived by using an updated SN counter of candidate cell 1. For another example, candidate cell 5 is used as an example. A start SN counter of candidate cell 5 is updated, and K_{SN} (for example, K_{SN}-5-1) used for candidate cell 5 in a next CPC process is derived by using an updated SN counter of candidate cell 5. For a specific process, refer to the descriptions in step 760. Details are not described herein.

In another example, each candidate SN corresponds to one SN counter. The MN may update an SN counter corresponding to each candidate SN to obtain an updated SN counter corresponding to each candidate SN, and derive, based on the updated SN counter corresponding to each candidate SN, K_{SN} corresponding to each candidate SN. If the terminal device accesses a candidate cell in the next CPC process, the candidate cell may perform secure communication with the terminal device by using K_{SN} corresponding to an SN to which the candidate cell belongs. For a specific process, refer to the descriptions in step 760. Details are not described herein.

Step 764: The MN sends corresponding K_{SN} to the candidate cell or the candidate SN to which the candidate cell belongs.

The MN may send K_{SN} derived in step 763 for use in the next triggered CPC process to all candidate cells or a candidate SN to which all candidate cells belong.

In the foregoing technical solution, after performing CPA or CPC once, the MN may deliver, in advance to all the candidate cells or the candidate SN to which all the candidate cells belong, the key K_{SN} to be used in the next triggered CPC process, so that the candidate cell or the candidate SN to which the candidate cell belongs can obtain the key K_{SN} in advance in the next CPC process, and may not securely communicate with the terminal device only after receiving a reconfiguration complete message of the MN.

Step 765: The terminal device performs synchronization with candidate SN 1.

The terminal device may perform synchronization with candidate SN 1 to which candidate cell 1 belongs. For example, the synchronization process may be implemented through a RACH. Similarly, candidate cell 1 may derive, based on the received K_{SN}-1, a user plane key for performing encryption or data integrity protection on data with the terminal device, and may further derive, based on K_{SN}-1, a control plane key for performing encryption or data integrity protection on signaling with the terminal device.

It should be noted that an execution sequence of step 755, step 758, step 760, and step 765 is not specifically limited in this embodiment of this application. The terminal device may first perform step 755 and step 758, then perform step 760, and then perform step 765; or may first perform step 760, then perform step 755 and step 758, and then perform step 765; or may simultaneously perform step 755, step 758, step 760, and step 765.

It should be noted that an execution sequence of step 763, step 764, and step 765 is not specifically limited in this embodiment of this application. Step 763 and step 764 may be first performed, and then step 765 is performed; or step 765 may be first performed, and then step 763 and step 764 are performed; or step 763, step 764, and step 765 may be simultaneously performed.

Step 770: The terminal device continues to evaluate whether the candidate cell included in the CPAC configuration meets the execution condition.

Step 775: The terminal device determines K_{SN}-5 based on an SN counter included in the CPAC configuration.

If the terminal device further finds, through evaluation, a candidate cell that meets a condition, or the terminal device subsequently accesses a candidate cell that meets a condition, the terminal device updates an SN counter corresponding to the candidate cell or a candidate SN to which the candidate cell belongs, and determines K_{SN} by using an updated SN counter. For example, when the terminal device detects that the candidate cell that meets the execution condition is candidate cell 5, the terminal device may determine K_{SN}-5 by using a start SN counter corresponding to candidate cell 5 or an SN to which candidate cell 5 belongs.

Example 1: If the terminal device finds, through evaluation, a candidate cell that meets a condition, or the terminal device accesses a candidate cell that meets a condition, the terminal device updates the SN counter based on a start SN counter corresponding to the candidate cell, or the terminal device updates the SN counter based on an SN counter used for the candidate cell last time, and determines K_{SN} by using an updated SN counter. For example, the CPAC configuration includes a start value (SN counter #5) of the SN counter corresponding to candidate cell 5, and the SN counter of candidate cell 5 is updated to SN counter #5+n*M. In this implementation, because the terminal device accesses candidate cell 5 for the first time, a quantity of times of deriving K_{SN} for candidate cell 5 is 0 (n=0), and an SN counter that is corresponding to candidate cell 5 and that is determined by the terminal device according to the foregoing SN counter update rule is SN counter #5. For another example, the CPAC configuration includes a start value (SN counter #5) of the SN counter corresponding to candidate cell 5, and the SN counter of candidate cell 5 is updated to SN counter+M. That is, each time a candidate cell is accessed, an SN counter is obtained based on an SN counter used for the candidate cell last time plus M. In this implementation, because the terminal device accesses candidate cell 5 for the first time, a used SN counter is start SN counter #5. The terminal device may obtain K_{SN}-5 through calculation by using SN counter #5.

Example 2: If the terminal device finds, through evaluation, a candidate cell that meets an execution condition, or accesses a candidate cell that meets an execution condition, the terminal device updates the SN counter based on a start SN counter corresponding to the candidate cell and (optionally) a quantity of times of accessing the candidate cell, or the terminal device updates the SN counter based on an SN counter used for the candidate SN last time, and determines K_{SN} by using an updated SN counter. For example, the CPAC configuration includes a start value (SN counter #5) of the SN counter corresponding to candidate cell 5, and the SN counter of candidate cell 5 is updated to SN counter=SN counter #5+p, where p is related to a quantity of times that the terminal device accesses candidate cell 5 or a quantity of times of deriving K_{SN} for candidate cell 5 (for example, p is the quantity of times that the terminal device accesses candidate cell 5 minus 1, or p is the quantity of times of deriving K_{SN} for candidate cell 5 minus 1). In this implementation, because the terminal device accesses candidate cell 5 for the first time, the quantity of times of deriving K_{SN} for candidate cell 5 is 0 (n=0), and an SN counter that is corresponding to candidate cell 5 and that is determined by the terminal device according to the foregoing update rule is SN counter #5. For another example, the CPAC configuration includes a start value (SN counter #5) of the SN counter corresponding to candidate cell 5 and (optionally) a quantity P of available SN counters of candidate cell 5. The SN counter of candidate cell 5 is updated to SN counter=SN counter+1. That is, each time candidate cell 5 is accessed, an SN counter is obtained based on an SN counter used for candidate cell 5 last time plus 1. In this implementation, a quantity of times that the terminal device accesses candidate cell 5 is limited, that is, a maximum quantity of access times is P. Values of P corresponding to all candidate cells may be the same or different. When the quantity of access times of the terminal device reaches P, the terminal device may release a configuration of the candidate cell or release the CPAC configuration. It may be understood that a special implementation of this implementation is: The terminal device accesses the candidate cell, and releases the CPAC configuration of the candidate cell. This is a case in which P=1. In an example, because the terminal device accesses candidate cell 5 for the first time, a used SN counter is start SN counter #5. The terminal device may obtain K_{SN}-5 through calculation by using SN counter #5.

Example 3: If the terminal device finds, through evaluation, a candidate cell that meets an execution condition, or accesses a candidate cell that meets an execution condition, the terminal device updates the SN counter based on a plurality of SN counters corresponding to the candidate cell and (optionally) a quantity of times of accessing the candidate cell, and determines K_{SN} by using an updated SN counter. For example, the CPAC configuration includes SN counter value set 5 corresponding to candidate cell 5, and value set 5 includes a plurality of available SN counters corresponding to candidate cell 5. In this implementation, because the terminal device accesses candidate cell 5 for the first time, a start SN counter that is corresponding to candidate cell 5 and that is determined by the terminal device according to the foregoing SN counter update rule is a first SN counter in SN counter value set 5 of candidate cell 5. The terminal device may obtain K_{SN}-5 through calculation by using the first SN counter.

Example 4: If the terminal device finds, through evaluation, a candidate cell that meets a condition, or the terminal device accesses a candidate cell that meets a condition, the terminal device updates the SN counter based on a start SN counter corresponding to a candidate SN to which the candidate cell belongs, or the terminal device updates the SN counter based on an SN counter used for the candidate SN last time, and determines K_{SN} by using an updated SN counter. For example, the CPAC configuration includes a start value (SN counter #2) of the SN counter corresponding to SN 2 to which candidate cell 5 belongs, and the SN counter of the candidate SN to which candidate cell 5 belongs is updated to SN counter #2+n*Q. In this implementation, because the terminal device accesses, for the first time, SN 2 to which candidate cell 5 belongs, a quantity of times of deriving K_{SN} for SN 2 to which candidate cell 5 belongs is 0 (n=0), and an SN counter that is corresponding to SN 2 to which candidate cell 5 belongs and that is determined by the terminal device according to the foregoing SN counter update rule is SN counter #2. For another example, the CPAC configuration includes a start value (SN counter #2) of the SN counter corresponding to SN 2 to which candidate cell 5 belongs, and the SN counter of SN 2 to which candidate cell 5 belongs is updated to SN counter+Q. That is, each time a candidate cell is accessed, an SN counter is obtained based on an SN counter used last time for a candidate SN to which the candidate cell belongs plus Q. An SN counter used by the terminal device to access the candidate SN for the first time is a start value of the SN counter of the candidate SN. In this implementation, because the terminal device accesses, for the first time, SN 2 to which candidate cell 5 belongs, a used SN counter is SN counter #2. The terminal device may obtain K_{SN}-5 through calculation by using SN counter 2.

Example 5: If the terminal device finds, through evaluation, a candidate cell that meets an execution condition, or accesses a candidate cell that meets an execution condition, the terminal device updates the SN counter based on a start SN counter corresponding to a candidate SN to which the candidate cell belongs and (optionally) a quantity of times of accessing the candidate SN, or the terminal device updates the SN counter based on an SN counter used for the candidate SN last time, and determines K_{SN} by using an updated SN counter. For example, the CPAC configuration includes a start value (SN counter #2) of the SN counter corresponding to SN 2 to which candidate cell 5 belongs, and the SN counter of SN 2 to which candidate cell 5 belongs is updated to SN counter=SN counter #2+p, where p is related to a quantity of times that the terminal device accesses SN 2 to which candidate cell 5 belongs or a quantity of times of deriving K_{SN} for SN 2 to which candidate cell 5 belongs (for example, p is the quantity of times that the terminal device accesses candidate SN 2 minus 1, or p is the quantity of times of deriving K_{SN} for candidate SN 2 minus 1). In this implementation, because the terminal device accesses, for the first time, SN 2 to which candidate cell 5 belongs, the quantity of times of deriving K_{SN} for SN 2 to which candidate cell 5 belongs is 0 (n=0), and an SN counter that is corresponding to candidate cell 5 and that is determined by the terminal device according to the foregoing update rule is SN counter #2. For another example, the CPAC configuration includes a start value (SN counter #5) of the SN counter corresponding to SN 2 to which candidate cell 5 belongs and (optionally) a quantity P of available SN counters of candidate cell 5. The SN counter of SN 2 to which candidate cell 5 belongs is updated to SN counter=SN counter+1. That is, each time candidate cell 5 is accessed, an SN counter is obtained based on an SN counter used last time for SN 2 to which candidate cell 5 belongs plus 1. In this implementation, a quantity of times that the terminal device accesses SN 2 is limited, that is, a maximum quantity of access times is P. Values of P corresponding to all candidate SNs may be the same or different. When the quantity of access times of the terminal device reaches P, the terminal device may release a configuration of a candidate cell served by the SN or release the CPAC configuration. In an example, because the terminal device accesses, for the first time, SN 2 to which candidate cell 5 belongs, a used SN counter is SN counter #2. The terminal device may obtain K_{SN}-5 through calculation by using SN counter #2.

Example 6: If the terminal device finds, through evaluation, a candidate cell that meets an execution condition, or accesses a candidate cell that meets an execution condition, the terminal device updates the SN counter based on a plurality of SN counters corresponding to an SN to which the candidate cell belongs and (optionally) a quantity of times of accessing the candidate cell, and determines K_{SN} by using an updated SN counter. For example, the CPAC configuration includes SN counter value set 2 corresponding to SN 2 to which candidate cell 5 belongs, and value set 2 includes a plurality of available SN counters corresponding to SN 2 to which candidate cell 5 belongs. In this implementation, because the terminal device accesses, for the first time, SN 2 to which candidate cell 5 belongs, an SN counter that is corresponding to SN 2 to which candidate cell 5 belongs and that is determined by the terminal device according to the foregoing SN counter update rule is a first SN counter in SN counter value set 2 of candidate SN 2. The terminal device may obtain K_{SN}-5 through calculation by using the first SN counter.

The terminal device may further derive, based on K_{SN}-5, a user plane key for performing encryption or data integrity protection on data with candidate cell 5, and may further derive, based on K_{SN}-5, a control plane key for performing encryption or data integrity protection on signaling with candidate cell 5.

Step 776: The terminal device sends an RRC reconfiguration complete message to the MN, where the RRC reconfiguration complete message includes a reconfiguration complete message sent to candidate SN 2.

For example, assuming that the terminal device detects that the candidate cell that meets the execution condition is candidate cell 5, the terminal device may send the RRC reconfiguration complete message to the MN, and the RRC reconfiguration complete message includes the reconfiguration complete message sent to candidate SN 2 (a candidate SN to which candidate cell 5 belongs). The RRC reconfiguration complete message may indicate that the terminal device selects candidate cell 5.

Step 777: The MN forwards the SN reconfiguration complete message to candidate SN 2.

Similarly, an execution sequence of step 775, step 777, and step 778 is not specifically limited in this embodiment of this application.

Step 778: The MN derives, based on the updated SN counter, K_{SN} to be used in a next triggered CPC process.

In an example, each candidate cell corresponds to one SN counter. For example, candidate cell 1 is used as an example. An SN counter used by the terminal device to access candidate cell 1 last time is updated, and K_{SN} (for example, K_{SN}-1-2) used for candidate cell 1 in a next CPC process is derived by using an updated SN counter of candidate cell 1. For another example, candidate cell 5 is used as an example. An SN counter used by the terminal device to access candidate cell 5 last time is updated, and K_{SN} (for example, K_{SN}-5-2) used for candidate cell 5 in a next CPC process is derived by using an updated SN counter of candidate cell 5.

In another example, each candidate SN corresponds to one SN counter. For example, candidate SN 1 is used as an example. An SN counter used by the terminal device to access candidate SN 1 last time is updated, and K_{SN} used for candidate SN 1 in a next CPC process is derived by using an updated SN counter of candidate SN 1. For another example, candidate SN 2 is used as an example. An SN counter used by the terminal device to access candidate SN 2 last time is updated, and K_{SN} used for candidate SN 2 in a next CPC process is derived by using an updated SN counter of candidate SN 2.

Step 789: The MN sends corresponding K_{SN} to the candidate cell or the candidate SN to which the candidate cell belongs.

The MN may send K_{SN} derived in step 788 for use in the next triggered CPC process to all candidate cells or a candidate SN to which all candidate cells belong.

In the foregoing technical solution, after performing CPA or CPC once, the MN may deliver, in advance to all the candidate cells or the candidate SN to which all the candidate cells belong, the key K_{SN} to be used in the next triggered CPC process, so that the candidate cell or the candidate SN to which the candidate cell belongs can obtain the key K_{SN} in advance in the next CPC process, and may not securely communicate with the terminal device only after receiving a reconfiguration complete message of the MN.

Step 780: The terminal device performs synchronization with candidate SN 2.

The terminal device may perform synchronization with candidate SN 2 to which candidate cell 5 belongs. For example, the synchronization process may be implemented through a RACH.

Similarly, candidate cell 5 may derive, based on the received K_{SN}-5, a user plane key for performing encryption or data integrity protection on data with the terminal device, and may further derive, based on K_{SN}-5, a control plane key for performing encryption or data integrity protection on signaling with the terminal device.

It should be noted that an execution sequence of step 778, step 779, and step 780 is not specifically limited in this embodiment of this application. Step 778 and step 779 may be first performed, and then step 780 is performed; or step 780 may be first performed, and then step 778 and step 779 are performed; or step 778, step 779, and step 780 may be simultaneously performed.

Step 783: The terminal device continues to evaluate whether the candidate cell included in the CPAC configuration meets the execution condition.

Step 788: The terminal device determines and stores K_{SN}-1-1 based on an SN counter included in the CPAC configuration.

When the terminal device detects again that a candidate cell that meets an execution condition is candidate cell 1, the terminal device may update a start SN counter corresponding to candidate cell 1 or SN 1 to which candidate cell 1 belongs, to obtain an updated SN counter, and determine and store K_{SN}-1-1 based on the updated SN counter.

Example 1: For example, the CPAC configuration includes a start value (SN counter #1) of the SN counter corresponding to candidate cell 1, and the SN counter corresponding to candidate cell 1 is updated to SN counter #x+n*M. In this implementation, because the terminal device accesses candidate cell 1 for the second time, a quantity of times of deriving K_{SN} for candidate cell 1 is 1 (n=1), and the terminal device updates the SN counter corresponding to candidate cell 1 according to the foregoing SN counter update rule, to obtain an updated SN counter that is SN counter #1+1 *M. For another example, the CPAC configuration includes a start value (SN counter #1) of the SN counter corresponding to candidate cell 1, and the terminal device updates the SN counter corresponding to candidate cell 1 to an SN counter used for candidate cell 1 last time plus M. Because the SN counter used by the terminal device for candidate cell 1 last time is SN counter #1, the terminal device updates the SN counter of candidate cell 1 to SN counter #1+M. The terminal device may obtain K_{SN}-1-1 through calculation by using SN counter #1+1*M.

Example 2: For example, the CPAC configuration includes a start value (SN counter #1) of the SN counter corresponding to candidate cell 1, and the SN counter of candidate cell 1 is updated to SN counter=SN counter #1+P. In this implementation, because the terminal device accesses candidate cell 1 for the second time, the terminal device updates the SN counter corresponding to candidate cell 1 according to the foregoing update rule, to obtain an updated SN counter that is SN counter #1+1. For another example, an SN counter corresponding to candidate cell 1 included in the CPAC configuration is a start value (SN counter #1) of the SN counter, and the terminal device updates the SN counter corresponding to candidate cell 1 to an SN counter used for candidate cell 1 last time plus 1. Because the SN counter used to access candidate cell 1 last time is SN counter #1, the terminal device updates the SN counter of candidate cell 1 to SN counter #1+1. The terminal device may obtain K_{SN}-1-1 through calculation by using SN counter #1+1.

Example 3: The CPAC configuration includes SN counter value set 1 corresponding to candidate cell 1, and SN counter value set 1 includes a plurality of available SN counters corresponding to candidate cell 1. The SN counter update rule is determining a corresponding SN counter from an SN counter value set based on a quantity of times that the terminal device accesses candidate cell 1. In this implementation, because the terminal device accesses candidate cell 1 for the second time, the terminal device updates the start SN counter corresponding to candidate cell 1 according to the foregoing SN counter update rule, to obtain an updated SN counter that is a second SN counter in the SN counter value set corresponding to candidate cell 1. The terminal device may obtain K_{SN}-1-1 through calculation by using the second SN counter in the SN counter value set.

Example 4: For example, the CPAC configuration includes a start value (SN counter #1) of the SN counter corresponding to SN 1 to which candidate cell 1 belongs, and the SN counter corresponding to SN 1 to which candidate cell 1 belongs is updated to SN counter #x+n*Q. In this implementation, because the terminal device accesses, for the second time, SN 1 to which candidate cell 1 belongs, a quantity of times of deriving K_{SN} for SN 1 to which candidate cell 1 belongs is 1 (n=1), and the terminal device updates, according to the foregoing SN counter update rule, the SN counter corresponding to SN 1 to which candidate cell 1 belongs, to obtain an updated SN counter that is SN counter #1+1*Q. For another example, the CPAC configuration includes a start value (SN counter #1) of the SN counter corresponding to SN 1 to which candidate cell 1 belongs, and the terminal device updates the SN counter corresponding to SN 1 to which candidate cell 1 belongs to an SN counter used for SN 1 last time plus Q. Because the SN counter used last time by the terminal device for SN 1 to which candidate cell 1 belongs is SN counter #1, the terminal device updates the SN counter of SN 1 to which candidate cell 1 belongs to SN counter #1+Q. The terminal device may obtain K_{SN}-1-1 through calculation by using SN counter #1+1*Q.

Example 5: For example, the CPAC configuration includes a start value (SN counter #1) of the SN counter corresponding to SN 1 to which candidate cell 1 belongs, and the SN counter of SN 1 to which candidate cell 1 belongs is updated to SN counter=SN counter #1+r, where r is related to a quantity of times that the terminal device accesses SN 1 or a quantity of times of deriving K_{SN} for SN 1 (for example, r is the quantity of times that the terminal device accesses SN 1 minus 1, or r is the quantity of times of deriving K_{SN} for SN 1 minus 1). In this implementation, because the terminal device accesses, for the second time, SN 1 to which candidate cell 1 belongs, the terminal device updates, according to the foregoing update rule, the SN counter corresponding to SN 1 to which candidate cell 1 belongs, to obtain an updated SN counter that is SN counter #1+1. For another example, an SN counter that corresponds to SN 1 to which candidate cell 1 belongs and that is included in the CPAC configuration is a start value (SN counter #1) of the SN counter, and the terminal device updates the SN counter corresponding to SN 1 to which candidate cell 1 belongs to an SN counter used last time for SN 1 to which candidate cell 1 belongs plus 1. Because the SN counter used last time to access SN 1 to which candidate cell 1 belongs is SN counter #1, the terminal device updates the SN counter of SN 1 to which candidate cell 1 belongs to SN counter #1+1. The terminal device may obtain K_{SN}-1-1 through calculation by using SN counter #1+1.

Example 3: The CPAC configuration includes SN counter value set 1 corresponding to SN 1 to which candidate cell 1 belongs, and SN counter value set 1 includes a plurality of available SN counters corresponding to SN 1 to which candidate cell 1 belongs. The SN counter update rule is determining a corresponding SN counter from an SN counter value set based on a quantity of times that the terminal device accesses SN 1 to which candidate cell 1 belongs. In this implementation, because the terminal device accesses, for the second time, SN 1 to which candidate cell 1 belongs, the terminal device updates, according to the foregoing SN counter update rule, the start SN counter corresponding to SN 1 to which candidate cell 1 belongs, to obtain an updated SN counter that is a second SN counter in the SN counter value set corresponding to SN 1 to which candidate cell 1 belongs. The terminal device may obtain K_{SN}-1-1 through calculation by using the second SN counter in the SN counter value set.

The terminal device may further derive, based on K_{SN}-1-1, a user plane key for performing encryption or data integrity protection on data with candidate cell 1, and may further derive, based on K_{SN}-1-1, a control plane key for performing encryption or data integrity protection on signaling with candidate cell 1.

Step 789: The terminal device sends an RRC reconfiguration complete message to the MN, where the RRC reconfiguration complete message includes a reconfiguration complete message sent to candidate SN 1.

For example, assuming that the terminal device detects again that the candidate cell that meets the execution condition is candidate cell 1, the terminal device may send the RRC reconfiguration complete message to the MN, and the RRC reconfiguration complete message includes the reconfiguration complete message sent to candidate SN 1 (a candidate SN to which candidate cell 1 belongs). The RRC reconfiguration complete message may indicate that the candidate cell selected by the terminal device is candidate cell 1.

Optionally, the RRC reconfiguration complete message may further include an updated SN counter corresponding to the selected candidate cell or an SN to which the selected candidate cell belongs.

In an example, if the RRC reconfiguration complete message includes the updated SN counter corresponding to candidate cell 1, step 788 should be first performed in this embodiment of this application, and then step 789 is performed.

In another example, if the RRC reconfiguration complete message does not include the updated SN counter, an execution sequence of step 788 and step 789 is not specifically limited in this embodiment of this application. Step 788 may be first performed, and then step 789 is performed; or step 789 may be first performed, and then step 788 is performed; or step 788 and step 789 may be simultaneously performed.

Step 790: The MN forwards the SN reconfiguration complete message to candidate SN 1.

In this embodiment of this application, after receiving the RRC reconfiguration complete message sent by the terminal device, the MN may forward, based on the message indicating that a candidate cell selected by the terminal device is candidate cell 1, the SN reconfiguration complete message to candidate SN 1 to which candidate cell 1 belongs.

In this embodiment of this application, the SN reconfiguration complete message forwarded by the MN to candidate SN 1 to which candidate cell 1 belongs may further include K_{SN}-1-1.

In an example, the MN may obtain an SN counter obtained by updating the start SN counter of candidate cell 1 or SN 1 to which candidate cell 1 belongs, and obtain K_{SN}-1-1 through calculation based on the updated SN counter corresponding to candidate cell 1 or SN 1 to which candidate cell 1 belongs. It should be understood that the MN obtains, in a plurality of implementations, the updated SN counter corresponding to candidate cell 1 or SN 1 to which candidate cell 1 belongs. This is not specifically limited in embodiments of this application. In a possible implementation, the reconfiguration complete message sent by the terminal device to the MN includes the updated SN counter, that is, the MN obtains, from the reconfiguration complete message sent by the terminal device, the updated SN counter corresponding to candidate cell 1 or SN 1 to which candidate cell 1 belongs. In another possible implementation, the MN may determine, based on the start SN counter corresponding to candidate cell 1 or SN 1 to which candidate cell 1 belongs and the SN counter update rule in the foregoing example 1 to example 6, the updated SN counter corresponding to candidate cell 1 or SN 1 to which candidate cell 1 belongs. For a specific determining process, refer to the descriptions in step 788. Details are not described herein again.

Step 791: The MN derives, based on the updated SN counter, K_{SN} to be used in a next triggered CPC process.

In an example, each candidate cell corresponds to one SN counter. For example, candidate cell 1 is used as an example. An SN counter used by the terminal device to access candidate cell 1 last time is updated, and K_{SN} (for example, K_{SN}-1-3) used for candidate cell 1 in a next CPC process is derived by using an updated SN counter of candidate cell 1. For another example, candidate cell 5 is used as an example. An SN counter used by the terminal device to access candidate cell 5 last time is updated, and K_{SN} (for example, K_{SN}-5-3) used for candidate cell 5 in a next CPC process is derived by using an updated SN counter of candidate cell 5.

In another example, each candidate SN corresponds to one SN counter. For example, candidate SN 1 is used as an example. An SN counter used by the terminal device to access candidate SN 1 last time is updated, and K_{SN} used for candidate SN 1 in a next CPC process is derived by using an updated SN counter of candidate SN 1. For another example, candidate SN 2 is used as an example. An SN counter used by the terminal device to access candidate SN 2 last time is updated, and K_{SN} used for candidate SN 2 in a next CPC process is derived by using an updated SN counter of candidate SN 2.

Step 792: The MN sends corresponding K_{SN} to the candidate cell or the candidate SN to which the candidate cell belongs.

The MN may send K_{SN} derived in step 791 for use in the next triggered CPC process to all candidate cells or a candidate SN to which all candidate cells belong.

In the foregoing technical solution, after performing CPA or CPC once, the MN may deliver, in advance to all the candidate cells or the candidate SN to which all the candidate cells belong, the key K_{SN} to be used in the next triggered CPC process, so that the candidate cell or the candidate SN to which the candidate cell belongs can obtain the key K_{SN} in advance in the next CPC process, and may not securely communicate with the terminal device only after receiving a reconfiguration complete message of the MN.

Step 795: The terminal device performs synchronization with candidate SN 1.

The terminal device may perform synchronization with candidate SN 1 to which candidate cell 1 belongs. For example, the synchronization process may be implemented through a RACH. Similarly, candidate cell 1 may derive, based on the received K_{SN}-1-1, a user plane key for performing encryption or data integrity protection on data with the terminal device, and may further derive, based on K_{SN}-1-1, a control plane key for performing encryption or data integrity protection on signaling with the terminal device.

In the foregoing technical solution, in a subsequent CPAC process, each time the terminal device triggers CPA or CPC, the terminal device updates an SN counter corresponding to a selected candidate cell or an SN to which the selected candidate cell belongs. In the subsequent CPAC process, the terminal device maintains an SN counter for each candidate cell or each candidate SN and updates the SN counter, to ensure that when the terminal device returns to a previously accessed candidate cell or candidate SN in the subsequent CPAC process, new K_{SN} is derived by using a new SN counter, thereby avoiding a key reuse problem.

With reference to FIG. 8, the following describes in detail a specific implementation process of using the P^{th} value in the first set as the first parameter value in step 510. It should be understood that the example in FIG. 8 is merely intended to help a person skilled in the art understand embodiments of this application, but is not intended to limit embodiments of this application to a specific value or a specific scenario in the example. It is clear that a person skilled in the art can make various equivalent modifications or changes based on the following example provided in FIG. 8, and such modifications and changes also fall within the scope of embodiments of this application.

FIG. 8 is another schematic flowchart of a communication method according to an embodiment of this application. As shown in FIG. 8, the method may include steps 810 to 899. The following separately describes steps 810 to 899 in detail. Descriptions of some steps in FIG. 8 are the same as those in FIG. 6 or FIG. 7, and details are not described herein again.

Step 810: A terminal device establishes an RRC connection to an MN.

Step 815: The terminal device establishes an RRC connection to a source SN.

It should be noted that step 815 is optional.

Step 820: The MN sends an SN addition request message to a candidate SN.

For example, the MN separately sends an SN addition request message to candidate SN 1 and candidate SN 2.

In a possible implementation, the SN addition request message may include a group of K_{SN}s corresponding to each candidate cell. The group of K_{SN}s includes a plurality of K_{SN}s associated with the corresponding candidate cell. Each candidate cell may sequentially select, based on a quantity of times that the terminal device accesses the candidate cell, corresponding K_{SN} from the group of K_{SN}s corresponding to each candidate cell.

It should be understood that, an example in which the candidate cell is the foregoing first cell is used, and a group of K_{SN}s of the first cell corresponds to the foregoing second set.

For example, candidate cell 1 corresponds to a group of K_{SN}s. When the terminal device is handed over to candidate cell 1 for the first time, candidate cell 1 may select first K_{SN} from the group of K_{SN}s corresponding to candidate cell 1 based on that the terminal device is handed over to the cell for the first time. When the terminal device is handed over to candidate cell 2 for the first time, where candidate cell 2 corresponds to a group of K_{SN}s, candidate cell 2 may select first K_{SN} from the group of K_{SN}s corresponding to candidate cell 2 based on that the terminal device is handed over to the cell for the first time. When the terminal device is handed over to candidate cell 1 for the second time, candidate cell 1 may select second K_{SN} from the group of K_{SN}s corresponding to candidate cell 1 based on that the terminal device is handed over to the cell for the second time.

In another possible implementation, the SN addition request message may include a group of K_{SN}s corresponding to each candidate SN. The group of K_{SN}s includes a plurality of K_{SN}s associated with the corresponding candidate SN. Each candidate SN may sequentially select, based on a quantity of times that the terminal device accesses the candidate SN, corresponding K_{SN} from the group of K_{SN}s corresponding to each candidate SN.

It should be understood that, an example in which the candidate cell is the foregoing first cell is used, the candidate SN to which the candidate cell belongs is the secondary node to which the first cell belongs, and a group of K_{SN}s of the secondary node to which the first cell belongs corresponds to the foregoing second set.

For example, candidate SN 1 corresponds to a group of K_{SN}s. When the terminal device is handed over, for the first time, to a candidate cell served by candidate SN 1, candidate SN 1 may select first K_{SN} from the group of K_{SN}s corresponding to candidate SN 1 based on that the terminal device is handed over to the SN for the first time. When the terminal device is handed over, for the first time, to a candidate cell served by candidate SN 2, where candidate SN 2 corresponds to a group of K_{SN}s, candidate SN 2 may select first K_{SN} from the group of K_{SN}s corresponding to candidate SN 2 based on that the terminal device is handed over to the SN for the first time. When the terminal device is handed over, for the second time, to a candidate cell served by candidate SN 1, candidate SN 1 may select second K_{SN} from the group of K_{SN}s corresponding to candidate SN 1 based on that the terminal device is handed over to the SN for the second time.

It should be understood that, in the method shown in FIG. 7, start K_{SN} corresponding to each candidate cell is delivered to each candidate cell in a start phase, or start K_{SN} corresponding to each candidate SN is delivered to each candidate SN in a start phase. Subsequently, each time the terminal device triggers CPA or CPC, the MN delivers updated K_{SN} to a corresponding candidate cell or candidate SN. The selected candidate cell or a secondary node to which the selected candidate cell belongs can obtain updated K_{SN} only after receiving a reconfiguration complete message of the MN. Compared with the method shown in FIG. 7, in the embodiment shown in FIG. 8, a plurality of K_{SN}s that may be subsequently used for each candidate cell or candidate SN are delivered to the candidate SN in advance, so that the candidate SN does not need to obtain updated K_{SN} only after receiving a reconfiguration complete message of the MN. In other words, the candidate SN does not need to start to perform secure data or signaling communication with the terminal device only after receiving the reconfiguration complete message of the MN, thereby reducing a delay and improving reconfiguration efficiency.

Step 825: The candidate SN sends an SN addition request acknowledgment message to the MN.

Step 830: The MN sends an RRC reconfiguration message to the terminal device.

The RRC reconfiguration message sent by the MN to the terminal device may include a CPAC configuration. The CPAC configuration may include a configuration of a candidate cell and a corresponding execution condition. The RRC reconfiguration message further indicates a group of SN counters corresponding to each candidate cell or each candidate SN.

There are a plurality of manners in which the RRC reconfiguration message indicates the group of SN counters corresponding to each candidate cell or each candidate SN. For example, the RRC reconfiguration message includes the plurality of SN counters corresponding to each candidate cell or each candidate SN, which may also be referred to as an SN counter list or set corresponding to each candidate cell or each candidate SN. For another example, the RRC reconfiguration message includes a start value and an available quantity of SN counters corresponding to each candidate cell or each candidate SN, and the plurality of SN counters corresponding to each candidate cell or each candidate SN are determined by using the start value and the available quantity. **In** this specification, an SN counter set corresponding to each candidate cell or each candidate SN is used to represent the plurality of SN counters corresponding to each candidate cell or each candidate SN.

It should be understood that, an example in which the candidate cell is the foregoing first cell is used, and an SN counter set of the first cell corresponds to the foregoing first set.

It should be understood that, an example in which the candidate cell is the foregoing first cell is used, an SN to which the candidate cell belongs is the secondary node to which the first cell belongs, and an SN counter set of the candidate SN to which the first cell belongs corresponds to the foregoing first set.

Step 835: The terminal device returns an RRC reconfiguration complete message to the MN.

Step 840: The terminal device evaluates whether a candidate cell included in the CPAC configuration meets an execution condition.

Step 845: The terminal device determines K_{SN} based on a first SN counter, included in the CPAC configuration, in an SN counter set corresponding to the candidate cell or a candidate SN.

If the terminal device finds, through evaluation, a candidate cell that meets a condition, or the terminal device accesses a candidate cell that meets a condition, the terminal device determines a SN counter to be used from the plurality of SN counters corresponding to each candidate cell or each candidate SN, and determines K_{SN} by using the selected SN counter.

For example, the terminal device may determine the SN counter to be used from the plurality of SN counters based on a quantity of times that the terminal device accesses the candidate cell or the SN to which the candidate cell belongs.

For example, when the terminal device detects that the candidate cell that meets the execution condition is candidate cell 1, because the terminal device is connected, for the first time, to candidate cell 1 or SN 1 to which candidate cell 1 belongs, the terminal device may determine K_{SN} by using a first SN counter, included in the CPAC configuration, in an SN counter set corresponding to candidate cell 1 or SN 1 to which candidate cell 1 belongs.

The terminal device may store K_{SN}, may further derive, based on K_{SN}, a user plane key for performing encryption or data integrity protection on data with candidate cell 1, and may further derive, based on K_{SN}, a control plane key for performing encryption or data integrity protection on signaling with candidate cell 1.

It should be understood that, an example in which candidate cell 1 is the foregoing first cell is used, the SN counter set corresponding to candidate cell 1 corresponds to the foregoing first set, the first SN counter in the SN counter set corresponding to candidate cell 1 corresponds to the foregoing first parameter value, and K_{SN} determined by using the first SN counter corresponds to the foregoing first key.

It should be understood that, an example in which candidate cell 1 is the foregoing first cell is used, the SN counter set corresponding to SN 1 to which candidate cell 1 belongs corresponds to the foregoing first set, the first SN counter in the SN counter set corresponding to SN 1 to which candidate cell 1 belongs corresponds to the foregoing first parameter value, and K_{SN} determined by using the first SN counter corresponds to the foregoing first key.

Step 850: The terminal device sends an RRC reconfiguration complete message to the MN, where the RRC reconfiguration complete message includes a reconfiguration complete message sent to candidate SN 1.

For example, assuming that the terminal device detects that the candidate cell that meets the execution condition is candidate cell 1, the terminal device may send the RRC reconfiguration complete message to the MN, and the RRC reconfiguration complete message includes the reconfiguration complete message sent to candidate SN 1 (a candidate SN to which candidate cell 1 belongs). The RRC reconfiguration complete message may indicate that the candidate cell selected by the terminal device is candidate cell 1.

Step 855: The MN forwards the SN reconfiguration complete message to candidate SN 1.

Step 860: The terminal device performs synchronization with candidate SN 1.

The terminal device may perform synchronization with candidate SN 1 to which candidate cell 1 belongs. For example, the synchronization process may be implemented through a RACH. In the RACH process or before the RACH process, candidate SN 1 may determine first K_{SN} in a K_{SN} set corresponding to candidate cell 1 or SN 1 to which candidate cell 1 belongs.

In this embodiment of this application, there are a plurality of methods for determining to-be-used K_{SN} by a selected candidate cell or a secondary node to which the selected candidate cell belongs.

In a possible implementation, the terminal device sends a first identifier to the SN to which the candidate cell belongs, where the first identifier indicates to-be-used K_{SN} in a plurality of K_{SN}s corresponding to the selected candidate cell or the SN to which the selected candidate cell belongs. Alternatively, the first identifier may be understood as indicating which K_{SN} is used by the candidate SN. The SN to which the candidate cell belongs receives the first identifier, and determines, based on the first identifier, to-be-used K_{SN} in the plurality of K_{SN}s. The first identifier may be a key identifier or an SN counter identifier. The first identifier may be included in a Msg3 in the RACH process, or may be included in a MAC CE (for example, included in a C-RATI MAC CE, or included in a first MAC CE, where the first MAC CE is used to carry the first identifier). The first identifier may be sent in the RACH process, or may be sent before the RACH process or after the RACH process.

In another possible implementation, the SN to which the selected candidate cell belongs selects, based on a quantity of times that the terminal device accesses the candidate cell or the SN to which the candidate cell belongs, to-be-used K_{SN} from the plurality of K_{SN}s corresponding to the candidate cell or the secondary node to which the candidate cell belongs. For example, if the terminal device accesses, for the first time, the candidate cell or the SN to which the candidate cell belongs, the SN selects first K_{SN}. For another example, if the terminal device accesses, for the second time, the candidate cell or the SN to which the candidate cell belongs, the SN selects second K_{SN}.

For the foregoing two possible implementations, for example, the selected candidate cell is candidate cell 1, and a secondary node to which candidate cell 1 belongs is SN 1. Candidate cell 1 or SN 1 may select, based on the first identifier or a quantity of times that the terminal device accesses candidate cell 1 or SN 1, corresponding K_{SN} from a K_{SN} set corresponding to candidate cell 1 or SN 1. In an example, because the terminal device selects the first SN counter from the SN counter set corresponding to candidate cell 1 or SN 1, to derive K_{SN}, the terminal device may further send the first identifier to SN 1, where the first identifier indicates SN 1 to select first K_{SN} from the K_{SN} set corresponding to candidate cell 1 or SN 1. In another example, SN 1 may select first K_{SN} from the K_{SN} set corresponding to candidate cell 1 or SN 1 based on that the terminal device accesses candidate cell 1 or SN 1 for the first time.

It should be understood that, an example in which candidate cell 1 is the foregoing first cell is used, the K_{SN} set corresponding to candidate cell 1 corresponds to the foregoing second set, and first K_{SN} in the K_{SN} set corresponds to the foregoing first key.

It should be understood that, an example in which candidate cell 1 is the foregoing first cell is used, SN 1 to which candidate cell 1 belongs corresponds to the secondary node to which the first cell belongs, the K_{SN} set corresponding to SN 1 corresponds to the foregoing second set, and first K_{SN} in the K_{SN} set corresponds to the foregoing first key.

Similarly, candidate cell 1 or SN 1 may further derive, based on first K_{SN} in the K_{SN} set, a user plane key for performing encryption or data integrity protection on data with the terminal device, and may further derive, based on first K_{SN} in the K_{SN} set, a control plane key for performing encryption or data integrity protection on signaling with the terminal device.

It should be noted that an execution sequence of step 840, step 845, step 850, and step 855 and step 860 is not limited. For example, step 845 may be first performed, then step 850, step 855, and step 860 are performed, and then step 845 is performed. In this case, the terminal finds, through evaluation, a candidate cell that meets a condition, and sends an RRC reconfiguration complete message to the MN. The reconfiguration complete message indicates the candidate cell selected by the terminal device. The MN sends an SN reconfiguration complete message to an SN to which the selected candidate cell belongs. The SN may determine to-be-used K_{SN} based on a quantity of times that the terminal device accesses the candidate cell or the SN to which the candidate cell belongs (for details, refer to the descriptions in step 860, and details are not described again), and indicate a to-be-used SN counter to the terminal device by using a second identifier. The terminal device selects, based on the second identifier, the to-be-used SN counter from a plurality of SN counters corresponding to the candidate cell or the SN to which the candidate cell belongs, and derives K_{SN} by using the selected SN counter.

Step 865: The terminal device evaluates whether a candidate cell included in the CPAC configuration meets an execution condition.

Step 868: The terminal device determines K_{SN} based on a first SN counter, included in the CPAC configuration, in a group corresponding to candidate cell 5 or SN 2 to which candidate cell 5 belongs.

When the terminal device detects that the candidate cell that meets the execution condition is candidate cell 5, because the terminal device is connected to candidate cell 5 for the first time, or is connected, for the first time, to SN 2 to which candidate cell 5 belongs, the terminal device may determine K_{SN} by using the first SN counter in the group of SN counters corresponding to candidate cell 5 or SN 2 included in the CPAC configuration.

The terminal device may further derive, based on K_{SN}, a user plane key for performing encryption or data integrity protection on data with candidate cell 5, and may further derive, based on K_{SN}, a control plane key for performing encryption or data integrity protection on signaling with candidate cell 5.

Step 870: The terminal device sends an RRC reconfiguration complete message to the MN, where the RRC reconfiguration complete message includes a reconfiguration complete message sent to candidate SN 1.

Step 875: The MN forwards the SN reconfiguration complete message to candidate SN 2.

Step 880: The terminal device performs synchronization with candidate SN 2.

The terminal device may perform synchronization with candidate SN 2 to which candidate cell 5 belongs. For example, the synchronization process may be implemented through a RACH. In the RACH process or before the RACH process, candidate SN 2 may select first K_{SN} in a K_{SN} set corresponding to candidate cell 5 or candidate SN 2.

Similarly, candidate cell 5 or candidate SN 2 may further derive, based on first K_{SN} in the K_{SN} set corresponding to candidate cell 5 or candidate SN 2, a user plane key for performing encryption or data integrity protection on data with the terminal device, and may further derive, based on first K_{SN} in the K_{SN} set corresponding to candidate cell 5 or candidate SN 2, a control plane key for performing encryption or data integrity protection on signaling with the terminal device.

Step 885: The terminal device evaluates whether a candidate cell included in the CPAC configuration meets an execution condition.

Step 890: The terminal device determines K_{SN} based on a second SN counter, included in the CPAC configuration, in a group of SN counters corresponding to candidate cell 1 or SN 1 to which candidate cell 1 belongs.

When the terminal device detects that the candidate cell that meets the execution condition is candidate cell 1, because the terminal device is connected, for the second time, to candidate cell 1 or SN 1 to which candidate cell 1 belongs, the terminal device may determine K_{SN} by using a second SN counter, included in the CPAC configuration, in an SN counter set corresponding to candidate cell 1 or SN 1 to which candidate cell 1 belongs.

Step 895: The terminal device sends an RRC reconfiguration complete message to the MN, where the RRC reconfiguration complete message includes a reconfiguration complete message sent to candidate SN 1.

Step 898: The MN forwards the SN reconfiguration complete message to candidate SN 1.

Step 899: The terminal device performs synchronization with candidate SN 1.

The terminal device may perform synchronization with candidate SN 1 to which candidate cell 1 belongs. For example, the synchronization process may be implemented through a RACH. In the RACH process or before the RACH process, candidate SN 1 may use second K_{SN} in a K_{SN} set corresponding to candidate cell 1 or SN 1 to which candidate cell 1 belongs.

Similarly, candidate cell 1 or SN 1 may further derive, based on second K_{SN} in the K_{SN} set, a user plane key for performing encryption or data integrity protection on data with the terminal device, and may further derive, based on second K_{SN} in the K_{SN} set, a control plane key for performing encryption or data integrity protection on signaling with the terminal device.

In the foregoing technical solution, a K_{SN} set corresponding to each candidate cell or each candidate SN is delivered to the candidate SN in advance, so that the candidate SN may not securely communicate with the terminal device only after receiving a reconfiguration complete message of the MN.

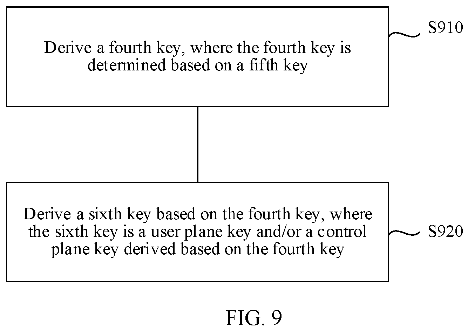

FIG. 9 is another schematic flowchart of a communication method according to an embodiment of this application. As shown in FIG. 9, the method may include steps 910 and 920. The following separately describes steps 910 and 920 in detail.

Step 910: Derive a fourth key, where the fourth key is determined based on a fifth key.

For example, in this embodiment of this application, the fourth key may be derived based on the fifth key. For example, a terminal device may derive the fourth key based on the fifth key.

It should be noted that the terminal device may evaluate whether an execution condition of a second cell is met, and the second cell is a candidate cell for conditional cell addition or change. If the terminal device evaluates that the execution condition of the second cell is met, the terminal device may derive the fourth key, and the fourth key may be used for security of the second cell.

It should be noted that the terminal device does not necessarily immediately perform key derivation after finding, through evaluation, a candidate cell that meets an execution condition. For example, the terminal device performs key derivation when or after accessing the selected candidate cell.

In a possible implementation, the terminal device may derive the fourth key based on the fifth key by using a fourth parameter value, where the fourth parameter value is a parameter value associated with the second cell or a secondary node to which the second cell belongs. The fourth parameter value is not specifically limited in embodiments of this application, and may be a parameter value associated with the second cell or the secondary node to which the second cell belongs, or may be obtained through update based on a fifth parameter value, or may be determined based on a quantity of times of accessing the second cell or the secondary node to which the second cell belongs. The fifth parameter value is a parameter value used last time for the second cell or the secondary node to which the second cell belongs, or the fifth parameter value is a parameter value used by the terminal device for previous access.

The fifth key is not specifically limited in embodiments of this application. The following describes several possible implementations by using examples.

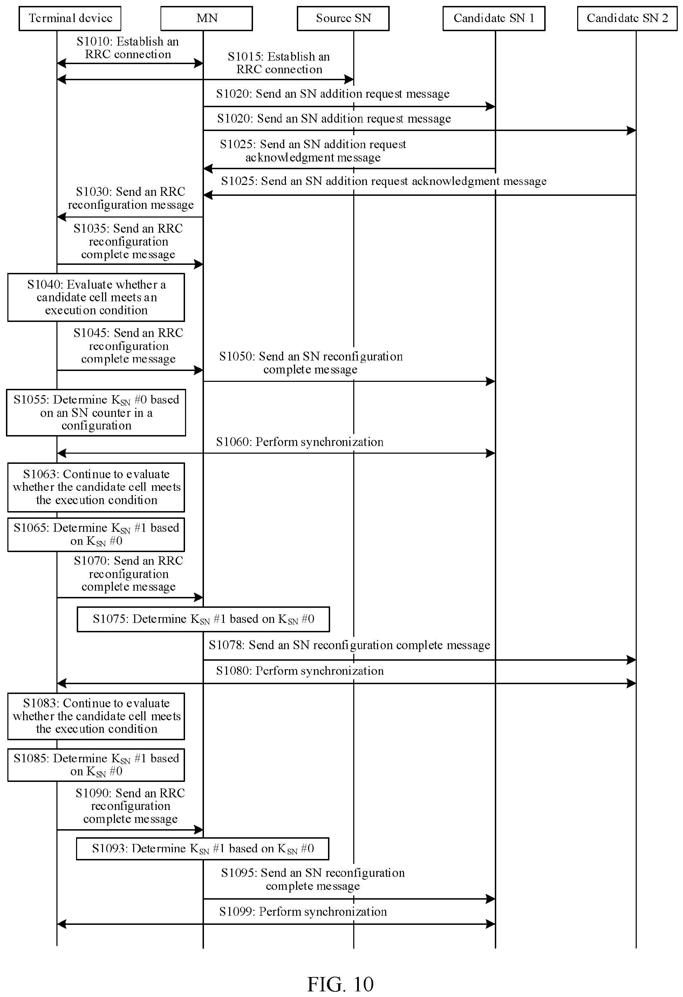

In an example, the fifth key may be a key for a previous cell accessed by the terminal device, that is, the fourth key may be derived based on the key for the previous cell accessed by the terminal device. The following describes a specific implementation process of this manner in detail with reference to FIG. 10, and details are not described herein.

It should be understood that the fourth key is K_{SN} to be used by the terminal device, and the fifth key is K_{SN} previously used by the terminal device.

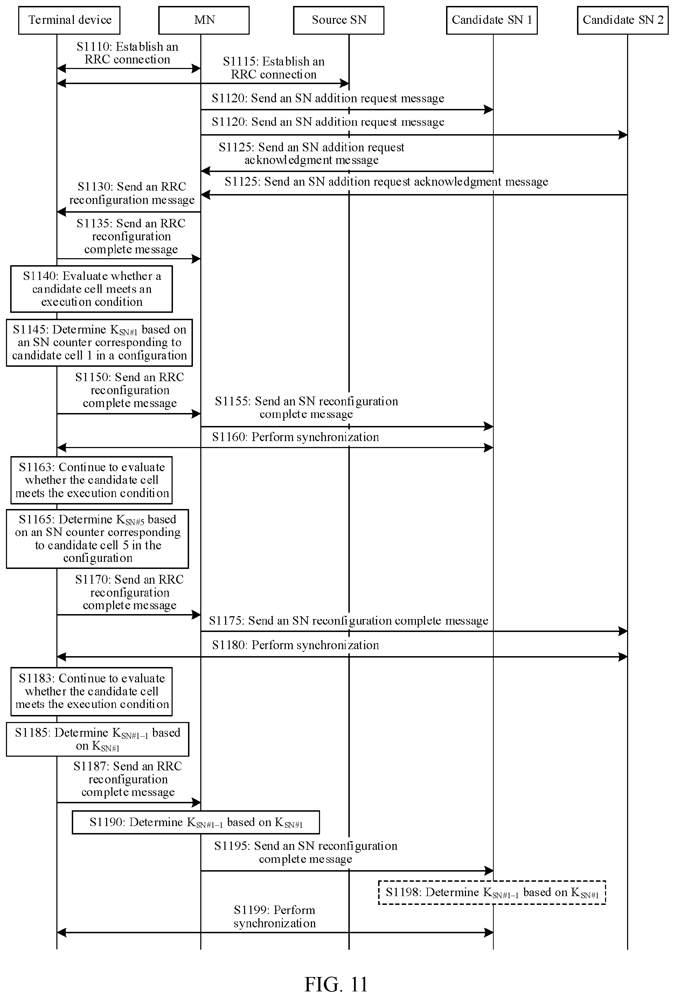

In another example, the fifth key may alternatively be a key used last time by the terminal device to access the second cell or the secondary node to which the second cell belongs, that is, the fourth key may be derived based on the key used last time by the terminal device to access the second cell or the secondary node to which the second cell belongs. The following describes a specific implementation process of this manner in detail with reference to FIG. 11, and details are not described herein.

It should be understood that the fourth key is K_{SN} to be used by the terminal device, and the fifth key is K_{SN} used by the terminal device for a selected candidate cell last time.

In another example, the fifth key may alternatively be a key used for a cell in a second cell set last time, and the second cell set includes the second cell. In other words, the terminal device maintains a key (for example, K_{SN}) or a counter (for example, an SN counter) for the cell in the second cell set. For example, the counter may be understood as a fourth parameter. When the terminal device is handed over from a cell in another cell set to a cell in the second cell set, the terminal device derives the fourth key. The fourth key derived by the terminal device is determined by using the fifth key. The fifth key is K_{SN} used for a cell in the second cell set last time. For example, the second cell set indicates the terminal device to perform PDCP reestablishment. For example, when the terminal device is handed over from a cell in the second cell set to another cell in the second cell set, PDCP reestablishment does not need to be performed; or when the terminal device is handed over from a cell outside the second cell set to a cell in the second cell set, PDCP reestablishment needs to be performed.

For example, the second cell set may be configured by a network device. For example, an identifier of a candidate cell included in the second cell set is indicated.

For example, alternatively, the second cell set is not configured by the network device. The second cell set includes cells that have a same key (for example, K_{SN}) or a same counter (for example, SN counter). When the terminal device is handed over from a cell associated with a different key (for example, K_{SN}) or counter (for example, SN counter) to the second cell, or is handed over from a cell having a different counter to the second cell, the terminal device derives the fourth key.

In another example, the fifth key may alternatively be a key used for a fourth cell last time, and the fourth cell and the second cell are configured with a same counter (for example, SN counter) or key (K_{SN}). For example, the counter may be understood as a fourth parameter. In other words, the terminal device maintains K_{SN} or an SN counter for each candidate cell. SN counters or K_{SN}s of different candidate cells may be the same or different. When the terminal device is handed over from another cell to the second cell, if SN counters or K_{SN}s of the two cells are different, the terminal device derives the fourth key. The fourth key derived by the terminal device is determined by using the fifth key. The fifth key is K_{SN} used last time for a cell that has a same SN counter or same K_{SN} as the second cell. The fourth cell may alternatively be the second cell.

Step 920: Derive a sixth key based on the fourth key, where the sixth key is a user plane key and/or a control plane key.

In this embodiment of this application, the sixth key may be derived based on the fourth key, that is, the sixth key is a user plane key and/or a control plane key derived based on the fourth key. The control plane key and/or the user plane key are/is used to perform encryption or data integrity protection on data and/or signaling between the terminal device and the second cell. The user plane key is used to perform encryption or data integrity protection on the data between the terminal device and the second cell.

Optionally, in some embodiments, an MN may derive the fourth key based on the fifth key, and send the derived fourth key to the second cell or send the fourth key to the secondary node to which the second cell belongs. A process in which the MN derives the fourth key based on the fifth key is the same as a process in which the terminal device derives the fourth key based on the fifth key. For details, refer to the descriptions in step 910. Details are not described herein again. In some embodiments, the MN may send a plurality of K_{SN}s that may be used to a candidate SN in an X^{th} message. The X^{th} message may be an SN addition request message. In this implementation, if the SN considers that all received K_{SN}s are to be used or are used, the SN may request the MN to update K_{SN}. The request message is used to request update of the plurality of K_{SN}s.

Optionally, in some embodiments, the SN may also derive the fourth key based on the fifth key, and derive the sixth key based on the fourth key. A process in which the SN derives the fourth key and derives the sixth key is the same as a process in which the terminal device derives the fourth key and derives the sixth key. For details, refer to the descriptions in step 910 and step 920. Details are not described herein again.

With reference to FIG. 10, the following describes in detail a specific implementation process of deriving the fourth key based on the key for the previous cell accessed by the terminal device in step 910. It should be understood that the example in FIG. 10 is merely intended to help a person skilled in the art understand embodiments of this application, but is not intended to limit embodiments of this application to a specific value or a specific scenario in the example. It is clear that a person skilled in the art can make various equivalent modifications or changes based on the following example provided in FIG. 10, and such modifications and changes also fall within the scope of embodiments of this application.

FIG. 10 is another schematic flowchart of a communication method according to an embodiment of this application. As shown in FIG. 10, the method may include steps 1010 to 1099. The following separately describes steps 1010 to 1099 in detail.

Step 1010: A terminal device establishes an RRC connection to an MN.

Step 1015: The terminal device establishes an RRC connection to a source SN.

It should be noted that step 1015 is optional.

Step 1020: The MN sends an SN addition request message to a candidate SN.

For example, the MN separately sends an SN addition request message to candidate SN 1 and candidate SN 2. The SN addition request message may include K_{SN} #0, and K_{SN} #0 is obtained by the MN through calculation based on an SN counter. It is assumed that SN counters corresponding to all candidate cells are the same, and are SN counter #0, and the MN may obtain K_{SN} #0 through calculation based on SN counter #0.

Step 1025: The candidate SN sends an SN addition request acknowledgment message to the MN.

Step 1030: The MN sends an RRC reconfiguration message to the terminal device.

The RRC reconfiguration message sent by the MN to the terminal device may include a CPAC configuration, and the CPAC configuration may include a configuration of a candidate cell included in candidate SN 1 and candidate SN 2, a corresponding execution condition, and the SN counter (for example, SN counter #0) used by the MN to derive K_{SN} #0.

Step 1035: The terminal device returns an RRC reconfiguration complete message to the MN.

Step 1040: The terminal device evaluates whether a candidate cell included in the CPAC configuration meets an execution condition.

Step 1045: The terminal device sends an RRC reconfiguration complete message to the MN, where the RRC reconfiguration complete message includes a reconfiguration complete message sent to candidate SN 1.

For example, assuming that the terminal device detects that the candidate cell that meets the execution condition is candidate cell 1, the terminal device may send the RRC reconfiguration complete message to the MN, and the RRC reconfiguration complete message includes the reconfiguration complete message sent to candidate SN 1 (a candidate SN to which candidate cell 1 belongs). The RRC reconfiguration complete message may indicate that the candidate cell selected by the terminal device is candidate cell 1.

Step 1050: The MN forwards the SN reconfiguration complete message to candidate SN 1.

Step 1055: The terminal device derives K_{SN} #0 based on an SN counter included in the CPAC configuration.

For example, after receiving the CPAC configuration, the terminal device may derive K_{SN} #0 based on K_{gNB} and the SN counter (for example, SN counter #0) included in the CPAC configuration. The terminal device may further derive, based on K_{SN} #0, a user plane key for performing encryption or data integrity protection on data with candidate cell 1, and derive, based on K_{SN} #0, a control plane key for performing encryption or data integrity protection on signaling with candidate cell 1.

Step 1060: The terminal device performs synchronization with candidate SN 1.

The terminal device may perform synchronization with candidate SN 1 to which candidate cell 1 belongs. For example, the synchronization process may be implemented through a RACH. Similarly, candidate cell 1 may derive, based on the received K_{SN} #0, a user plane key for performing encryption or data integrity protection on data with the terminal device, and may further derive, based on K_{SN} #0, a control plane key for performing encryption or data integrity protection on signaling with the terminal device.

Step 1063: The terminal device continues to evaluate whether a candidate PSCell included in the CPAC configuration meets the execution condition.

Step 1065: The terminal device derives K_{SN} #1 based on K_{SN} #0.

In an example, assuming that the terminal device detects that a candidate cell that meets an execution condition is candidate cell 5, the terminal device may derive and store K_{SN} #1 based on K_{SN} #0 used last time.

In another example, when the terminal device detects that the candidate cell that meets the execution condition is candidate cell 5, if candidate cell 1 belongs to a cell set, and candidate cell 5 belongs to another cell set, when the terminal device is handed over from a cell in the cell set to which candidate cell 1 belongs to a cell in the cell set to which candidate cell 5 belongs, K_{SN} #1 may be derived and stored by using K_{SN} #0 used last time for the cell in the cell set to which candidate cell 5 belongs.

In another example, when the terminal device detects that the candidate cell that meets the execution condition is candidate cell 5, if SN counters or K_{SN}s of candidate cell 5 and candidate cell 1 are different, K_{SN} #1 may be derived and stored by using K_{SN} #0 used for candidate cell 10 last time. Candidate cell 10 and candidate cell 5 are configured with a same SN counter or same K_{SN}.

The terminal device may further derive, based on K_{SN} #1, a user plane key for performing encryption or data integrity protection on data with candidate cell 5, and may further derive, based on K_{SN} #1, a control plane key for performing encryption or data integrity protection on signaling with candidate cell 5.

It should be understood that, an example in which candidate cell 5 is the foregoing second cell is used, K_{SN} #0 corresponds to the foregoing fifth key, and K_{SN} #1 corresponds to the foregoing fourth key.

Step 1070: The terminal device sends an RRC reconfiguration complete message to the MN, where the RRC reconfiguration complete message includes an RRC reconfiguration complete message sent to candidate SN 2.

For example, the terminal device detects that candidate cell 5 meets the execution condition, the terminal device may send the RRC reconfiguration complete message to the MN, and the RRC reconfiguration complete message includes the reconfiguration complete message sent to candidate SN 2 (a candidate SN to which candidate cell 5 belongs). The RRC reconfiguration complete message may indicate that the terminal device selects candidate cell 5.

It should be noted that an execution sequence of step 1065 and step 1070 is not specifically limited in this embodiment of this application. Step 1065 may be first performed, and then step 1070 is performed; or step 1070 may be first performed, and then step 1065 is performed; or step 1065 and step 1070 may be simultaneously performed.

Step 1075: The MN derives K_{SN} #1 based on K_{SN} #0.

In this embodiment of this application, after receiving the RRC reconfiguration complete message sent by the terminal device, the MN may derive and store K_{SN} #1 by using the key K_{SN} #0 for the previous cell accessed by the terminal device.

In a possible implementation, K_{SN} #1 may be derived based on K_{SN} #0 and a fifth SN counter. In an example, the fifth SN counter may be an SN counter associated with candidate cell 5 or SN 2 to which candidate cell 5 belongs. In another example, the fifth SN counter may alternatively be obtained through update based on a sixth SN counter, and the sixth SN counter is an SN counter used last time for candidate cell 5 or SN 2 to which candidate cell 5 belongs, or an SN counter used by the terminal device for previous access. In another example, the fifth SN counter may be alternatively determined based on a quantity of times of accessing candidate cell 5 or SN 2 to which candidate cell 5 belongs.

It should be understood that, an example in which K_{SN} #0 corresponds to the foregoing fifth key and K_{SN} #1 corresponds to the foregoing fourth key is used, the fifth SN counter corresponds to the foregoing fourth parameter value, and the sixth SN counter corresponds to the foregoing fifth parameter value.

In another possible implementation, the terminal device may derive K_{SN} #1 based on K_{SN} #0 and SN counter #0. SN counter #0 is an SN counter used by all candidate cells or all candidate SNs.

It should be understood that, an example in which K_{SN} #0 corresponds to the foregoing fifth key and K_{SN} #1 corresponds to the foregoing fourth key is used, and SN counter #0 corresponds to the foregoing fourth parameter value.

Step 1078: The MN forwards the SN reconfiguration complete message to candidate SN 2.

In this embodiment of this application, the MN may forward, based on that the candidate cell selected by the terminal device and indicated by the RRC reconfiguration complete message is candidate cell 5, the SN reconfiguration complete message to candidate SN 2 to which candidate cell 5 belongs.

Optionally, the SN reconfiguration complete message forwarded by the MN to candidate SN 2 may further include K_{SN} #1.

Step 1080: The terminal device performs synchronization with candidate SN 2.

The terminal device may perform synchronization with candidate SN 2 to which candidate cell 5 belongs. For example, the synchronization process may be implemented through a RACH.

Similarly, candidate cell 5 may derive, based on K_{SN} #1, a user plane key for performing encryption or data integrity protection on data with the terminal device, and may further derive, based on K_{SN} #1, a control plane key for performing encryption or data integrity protection on signaling with the terminal device.

It should be understood that in this embodiment of this application, there are a plurality of implementations in which candidate cell 5 obtains K_{SN} #1. In an example, the reconfiguration complete message sent by the MN to candidate SN 2 includes K_{SN} #1, and candidate cell 5 may obtain K_{SN} #1 from the message. In another example, candidate cell 5 may derive K_{SN} #1 by using the key K_{SN} #0 for the previous cell accessed by the terminal device. In this case, the RRC reconfiguration complete message sent by the MN to candidate SN 2 does not include K_{SN} #1. For details, refer to the process in which the MN derives K_{SN} #1 based on K_{SN} #0 in step 1075. Details are not described herein again.

Step 1083: The terminal device continues to evaluate whether the candidate cell included in the CPAC configuration meets the execution condition.

Step 1085: The terminal device derives K_{SN} #2 based on K_{SN} #1.

For example, assuming that the terminal device detects that a candidate cell that meets an execution condition is candidate cell 1, the terminal device may derive and store K_{SN} #2 based on K_{SN} #1 used last time.

The terminal device may further derive, based on K_{SN} #2, a user plane key for performing encryption or data integrity protection on data with candidate cell 1, and may further derive, based on K_{SN} #2, a control plane key for performing encryption or data integrity protection on signaling with candidate cell 1.

It should be understood that, an example in which candidate cell 1 is the foregoing second cell is used, K_{SN} #1 corresponds to the foregoing fifth key, and K_{SN} #2 corresponds to the foregoing fourth key.

Step 1090: The terminal device sends an RRC reconfiguration complete message to the MN, where the RRC reconfiguration complete message includes a reconfiguration complete message sent to candidate SN 1.

Step 1093: The MN derives K_{SN} #2 based on K_{SN} #1.

In this embodiment of this application, after receiving the RRC reconfiguration complete message sent by the terminal device, the MN may derive K_{SN} #2 by using K_{SN} #1.

Step 1095: The MN forwards the SN reconfiguration complete message to candidate SN 1.

Optionally, the SN reconfiguration complete message forwarded by the MN to candidate SN 1 may further include K_{SN} #2.

Step 1099: The terminal device performs synchronization with candidate SN 1.

The terminal device may perform synchronization with candidate SN 1 to which candidate cell 1 belongs. For example, the synchronization process may be implemented through a RACH. Similarly, candidate cell 1 may derive, based on K_{SN} #2, a user plane key for performing encryption or data integrity protection on data with the terminal device, and may further derive, based on K_{SN} #2, a control plane key for performing encryption or data integrity protection on signaling with the terminal device.

Candidate cell 1 may obtain K_{SN} #2 from the RRC reconfiguration complete message sent by the terminal device, or may derive K_{SN} #2 based on K_{SN} #1. For details, refer to the foregoing descriptions. Details are not described herein again.

In the foregoing technical solution, each time the terminal device triggers SN change, new K_{SN} is derived based on K_{SN} used last time/stored in the terminal device. Because K_{SN} used by the terminal device is different each time CPA or CPC is triggered, it is ensured that new K_{SN} is derived in a subsequent CPAC process, thereby avoiding a key reuse problem.

With reference to FIG. 11, the following describes in detail a specific implementation process of deriving the fourth key based on the key used last time by the terminal device to access the second cell or the secondary node to which the second cell belongs in step 910. It should be understood that the example in FIG. 11 is merely intended to help a person skilled in the art understand embodiments of this application, but is not intended to limit embodiments of this application to a specific value or a specific scenario in the example. It is clear that a person skilled in the art can make various equivalent modifications or changes based on the following example provided in FIG. 11, and such modifications and changes also fall within the scope of embodiments of this application.

FIG. 11 is another schematic flowchart of a communication method according to an embodiment of this application. As shown in FIG. 11, the method may include steps 1110 to 1199. The following separately describes steps 1110 to 1199 in detail.

Step 1110: A terminal device establishes an RRC connection to an MN.

Step 1115: The terminal device establishes an RRC connection to a source SN.

It should be noted that step 1115 is optional.

Step 1120: The MN sends an SN addition request message to a candidate SN.

For example, the MN separately sends an SN addition request message to candidate SN 1 and candidate SN 2. The SN addition request message may include start K_{SN} corresponding to each candidate cell or each candidate SN, and start K_{SN} corresponding to each candidate cell or each candidate SN is calculated by the MN based on a start SN counter corresponding to each candidate cell or each candidate SN.

It should be understood that the start SN counter corresponding to each candidate cell or each candidate SN may be a start value (SN counter #x) of the SN counter of each candidate cell or each candidate SN, or may be a first SN counter in an SN counter value set corresponding to each candidate cell or each candidate SN. This is not limited in embodiments of this application. For details, refer to the foregoing descriptions. Details are not described herein again.

For example, it is assumed that start K_{SN} derived by the MN based on an SN counter corresponding to candidate cell 1 is K_{SN#1}, start K_{SN} derived based on an SN counter corresponding to candidate cell 2 is K_{SN#2}, start K_{SN} derived based on an SN counter corresponding to candidate cell 3 is K_{SN#3}, and so on.

It is assumed that start K_{SN} derived by the MN based on an SN counter corresponding to candidate SN 1 is K_{SN#1}, start K_{SN} derived based on an SN counter corresponding to candidate SN 2 is K_{SN#2}, and so on.

Step 1125: The candidate SN sends an SN addition request acknowledgment message to the MN.

Step 1130: The MN sends an RRC reconfiguration message to the terminal device.

The RRC reconfiguration message sent by the MN to the terminal device may include a CPAC configuration, and the CPAC configuration may include a configuration of a candidate cell included in candidate SN 1 and candidate SN 2, a corresponding execution condition, and an SN counter corresponding to each candidate cell or each candidate SN.

Step 1135: The terminal device returns an RRC reconfiguration complete message to the MN.

Step 1140: The terminal device evaluates whether a candidate cell included in the CPAC configuration meets an execution condition.

Step 1145: The terminal device determines and stores K_{SN#1} based on an SN counter included in the CPAC configuration.

After receiving the CPAC configuration, if the terminal device evaluates that a candidate cell or a candidate cell served by a candidate SN meets an execution condition for the first time, or the terminal device accesses, for the first time, a candidate cell (or a candidate cell served by a candidate SN) that meets an execution condition, the terminal device derives K_{SN} based on a master key by using an SN counter corresponding to the candidate cell or a secondary node to which the candidate cell belongs. For example, when detecting that the candidate cell that meets the execution condition is candidate cell 1, the terminal device may determine and store K_{SN#1} based on the master key by using an SN counter, included in the CPAC configuration, corresponding to candidate cell 1 or SN 1 to which candidate cell 1 belongs.

Step 1150: The terminal device sends an RRC reconfiguration complete message to the MN, where the RRC reconfiguration complete message includes a reconfiguration complete message sent to candidate SN 1.

Step 1155: The MN forwards the SN reconfiguration complete message to candidate SN 1.

It should be noted that an execution sequence of step 1145, step 1150, and step 1155 is not specifically limited in this embodiment of this application. Step 1145 may be first performed, and then step 1150 and step 1155 are performed; or step 1150 and step 1155 may be first performed, and then step 1145 is performed; or step 1145, step 1150, and step 1155 may be simultaneously performed.

Step 1160: The terminal device performs synchronization with candidate SN 1.

The terminal device may perform synchronization with candidate SN 1 to which candidate cell 1 belongs. For example, the synchronization process may be implemented through a RACH. Similarly, candidate cell 1 may derive, based on the received K_{SN#1}, a user plane key for performing encryption or data integrity protection on data with the terminal device, and may further derive, based on K_{SN#1}, a control plane key for performing encryption or data integrity protection on signaling with the terminal device.

Step 1163: The terminal device continues to evaluate whether the candidate cell included in the CPAC configuration meets the execution condition.

Step 1165: The terminal device determines and stores K_{SN#5} based on an SN counter included in the CPAC configuration.

In an example, when the terminal device detects that the candidate cell that meets the execution condition is candidate cell 5, because the terminal device accesses, for the first time, candidate cell 5 or SN 2 to which candidate cell 5 belongs, the terminal device may determine and store K_{SN#5} by using an SN counter corresponding to candidate cell 5 or SN 2 included in the CPAC configuration.

In another example, when the terminal device detects that the candidate cell that meets the execution condition is candidate cell 5, if candidate cell 1 belongs to a cell set, and candidate cell 5 belongs to another cell set, when the terminal device is handed over from a cell in the cell set to which candidate cell 1 belongs to a cell in the cell set to which candidate cell 5 belongs, K_{SN} (for example, K_{SN#5}) used last time for the cell in the cell set to which candidate cell 5 belongs may be used.

In another example, when the terminal device detects that the candidate cell that meets the execution condition is candidate cell 5, if SN counters or K_{SN}s of candidate cell 5 and candidate cell 1 are different, K_{SN} (for example, K_{SN#5}) used for candidate cell 10 last time may be used. Candidate cell 10 and candidate cell 5 are configured with a same SN counter or same K_{SN}.

Step 1170: The terminal device sends an RRC reconfiguration complete message to the MN, where the RRC reconfiguration complete message includes a reconfiguration complete message sent to candidate SN 1.

Step 1175: The MN forwards the SN reconfiguration complete message to candidate SN 1.

Similarly, an execution sequence of step 1165, step 1170, and step 1175 is not specifically limited in this embodiment of this application. Step 1165 may be first performed, and then step 1170 and step 1175 are performed; or step 1170 and step 1175 may be first performed, and then step 1165 is performed; or step 1165, step 1170, and step 1175 may be simultaneously performed.

Step 1180: The terminal device performs synchronization with candidate SN 2.

The terminal device may perform synchronization with candidate SN 2 to which candidate cell 5 belongs. For example, the synchronization process may be implemented through a RACH. Similarly, candidate cell 5 may derive, based on the received K_{SN#5}, a user plane key for performing encryption or data integrity protection on data with the terminal device, and may further derive, based on K_{SN#5}, a control plane key for performing encryption or data integrity protection on signaling with the terminal device.

Step 1183: The terminal device continues to evaluate whether the candidate cell included in the CPAC configuration meets the execution condition.

Step 1185: The terminal device derives K_{SN#1-1} based on K_{SN#1}.

If the terminal device evaluates that a candidate cell or a candidate cell served by a candidate SN meets an execution condition again (or a candidate cell or a candidate cell served by a candidate SN does not meet an execution condition for the first time), or the terminal device re-accesses a candidate cell or a candidate cell served by a candidate SN that meets an execution condition (or does not access, for the first time, a candidate cell or a candidate cell served by a candidate SN), the terminal device derives new K_{SN} by using K_{SN} used last time for the candidate cell or the SN to which the candidate cell belongs. For example, when the terminal device detects again that the candidate cell that meets the execution condition is candidate cell 1, the terminal device may determine K_{SN#1-1} by using K_{SN#1} used last time by the terminal device to access candidate cell 1 or SN 1 to which candidate cell 1 belongs.

Step 1187: The terminal device sends an RRC reconfiguration complete message to the MN, where the RRC reconfiguration complete message includes a reconfiguration complete message sent to candidate SN 1.

Step 1190: The MN derives K_{SN#1-1} based on K_{SN#1}.

In this embodiment of this application, after receiving the RRC reconfiguration complete message sent by the terminal device, the MN may derive K_{SN#1-1} by using K_{SN#1} used by the terminal device to access candidate cell 1 last time.

Step 1195: The MN forwards the SN reconfiguration complete message to candidate SN 1.

In this embodiment of this application, the MN may forward, based on that the candidate cell selected by the terminal device and indicated by the RRC reconfiguration complete message is candidate cell 1, the SN reconfiguration complete message to candidate SN 1 to which candidate cell 1 belongs.

Optionally, the SN reconfiguration complete message may further include K_{SN#1-1}.

Step 1198: Candidate SN 1 derives K_{SN#1-1} based on K_{SN#1}.

Candidate SN 1 may derive new K_{SN} based on K_{SN} used last time for candidate cell 1 or the candidate SN to which candidate cell 1 belongs.

In an example, candidate SN 1 may derive K_{SN#1-1} by using K_{SN#1}. It should be understood that K_{SN#1} may be K_{SN} used by the terminal device to access candidate cell 1 last time, or may be K_{SN} used last time by the terminal device to access candidate SN 1 to which candidate cell 1 belongs.

Optionally, the SN addition request message received by candidate SN 1 from the MN includes an SN counter. For example, the SN counter may be an SN counter corresponding to the candidate cell or an SN counter corresponding to the candidate SN to which the candidate cell belongs. In this implementation, in a possible implementation, candidate SN 1 may derive K_{SN#1-1} based on K_{SN#1} and the SN counter.

It should be noted that if step 1190 is performed, step 1198 is not performed; or if step 1198 is performed, step 1190 is not performed.

Step 1199: The terminal device performs synchronization with candidate SN 1.

The terminal device may perform synchronization with candidate SN 1 to which candidate cell 1 belongs. For example, the synchronization process may be implemented through a RACH. Similarly, candidate cell 1 may derive, based on the received K_{SN#1-1}, a user plane key for performing encryption or data integrity protection on data with the terminal device, and may further derive, based on K_{SN#1-1}, a control plane key for performing encryption or data integrity protection on signaling with the terminal device.

In the foregoing technical solution, in a subsequent CPAC process, each time the terminal device triggers CPA or CPC, the terminal device and the MN (or the SN) derive new K_{SN} based on K_{SN} used last time for a selected candidate cell or a secondary node to which the selected candidate cell belongs. In the subsequent CPAC process, it is ensured that an input key K_{SN} for each update of K_{SN} is different, to ensure that when the terminal device returns to a previously accessed candidate cell or candidate SN in the subsequent CPAC process, new K_{SN} is derived by using different K_{SN}, thereby avoiding a key reuse problem.

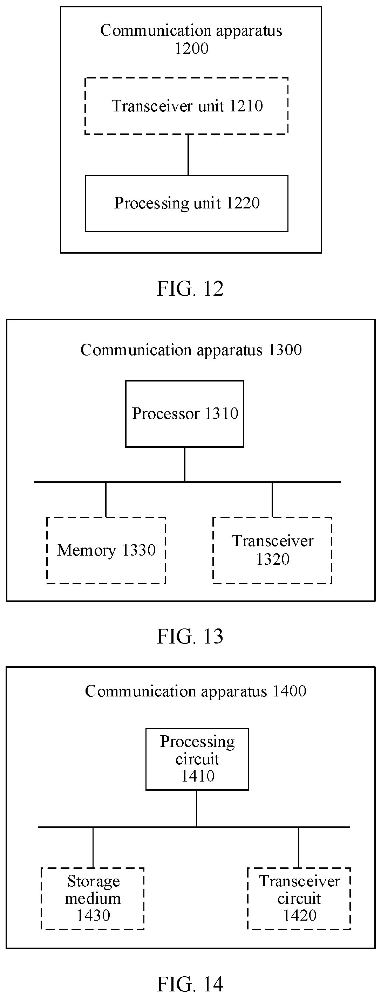

The foregoing describes in detail the technical solutions provided in the communication methods in embodiments of this application with reference to FIG. 1 to FIG. 11. The following describes communication apparatuses provided in embodiments of this application with reference to FIG. 12 to FIG. 14.

FIG. 12 is a block diagram of a communication apparatus according to an embodiment of this application. As shown in FIG. 12, the apparatus 1200 may include a processing unit 1220. The processing unit 1220 is configured to process data/information, so that a function of the terminal device in the methods shown in FIG. 5 to FIG. 11 is implemented, or a function of the network device in the methods shown in FIG. 5 to FIG. 11 is implemented.

Optionally, the apparatus 1200 may further include a transceiver unit 1210. The transceiver unit 1210 may communicate with the outside, for example, may input data/information received from the outside to the processing unit, or for another example, may output data/information processed by the processing unit to the outside. The transceiver unit 1210 may also be referred to as a communication interface or a communication unit.

In a possible implementation, the apparatus 1200 may be the terminal device in the methods shown in FIG. 5 to FIG. 11, or may be a chip configured to implement a function of the terminal device in the methods shown in FIG. 5 to FIG. 11. Specifically, the apparatus 1200 may implement a corresponding procedure performed by the terminal device in the methods shown in FIG. 5 to FIG. 11. The processing unit 1220 is configured to perform a processing-related operation of the terminal device in the foregoing method procedure.

In an example, the processing unit 1220 is configured to derive a first key, and derive a third key based on the first key, where the first key is determined based on a second key by using a first parameter value, the second key is a master key, the first parameter value is obtained through update based on a second parameter value, or the first parameter value is determined based on a quantity of times of accessing a first cell or a secondary node to which the first cell belongs, the third key is a user plane key and/or a control plane key, and the third key is used to perform encryption or data integrity protection on data and/or signaling with the first cell.

Optionally, the second parameter value is a parameter value used last time for the first cell or the secondary node to which the first cell belongs, or the second parameter value is a parameter value used for previous access.

Optionally, the first parameter value is the second parameter value plus N, where N is an integer greater than or equal to 1, or N is a maximum quantity of candidate cells for conditional cell addition or change.

Optionally, the first parameter value is determined based on a third parameter value and the quantity of times of accessing the first cell or the secondary node to which the first cell belongs, and the third parameter value is a start parameter value associated with the first cell or the secondary node to which the first cell belongs.

Optionally, the first parameter value is a P^{th} value in a first set, P is related to the quantity of times of accessing the first cell or the secondary node to which the first cell belongs, and the first set includes a plurality of parameter values associated with the first cell or the secondary node to which the first cell belongs.

Optionally, the transceiver unit 1210 is configured to send a first message to a master node, where the first message indicates the first cell that meets an execution condition or the secondary node to which the first cell belongs, and the first message includes the first parameter value.

In another example, the processing unit 1220 is configured to derive a fourth key, and derive a sixth key based on the fourth key, where the fourth key is determined based on a fifth key, the fifth key is a key for a previous accessed cell, or the fifth key is a key used last time to access a second cell or a secondary node to which the second cell belongs, the sixth key is a user plane key and/or a control plane key, and the sixth key is used to perform encryption or data integrity protection on data and/or signaling with the second cell.

Optionally, the processing unit 1220 is specifically configured to derive the fourth key based on the fifth key by using a fourth parameter value, where the fourth parameter value is a parameter value associated with the second cell or the secondary node to which the second cell belongs.

Optionally, the fourth parameter value is a parameter value associated with the second cell or the secondary node to which the second cell belongs, or the fourth parameter value is obtained through update based on a fifth parameter value, or the fourth parameter value is determined based on a quantity of times of accessing the second cell or the secondary node to which the second cell belongs.

Optionally, the fifth parameter value is a parameter value used last time for the second cell or the secondary node to which the second cell belongs, or the fifth parameter value is a parameter value used for previous access.

It should be understood that the processing unit 1220 and the transceiver unit 1210 may further separately perform any other step, operation, and/or function implemented by the terminal device in the methods shown in FIG. 5 to FIG. 11. A specific process of performing the foregoing corresponding step by each unit is described in detail in the foregoing method embodiments. For brevity, details are not described herein again.

In another possible implementation, the apparatus 1200 may be the MN in the methods shown in FIG. 5 to FIG. 11, or may be a chip configured to implement a function of the MN in the methods shown in FIG. 5 to FIG. 11. Specifically, the apparatus 1200 may implement a corresponding procedure performed by the MN in the methods shown in FIG. 5 to FIG. 11. The processing unit 1220 is configured to perform a processing-related operation of the MN in the foregoing method procedure.

In an example, the processing unit 1220 is configured to derive a first key, where the first key is used for security of a first cell, the first cell is a candidate cell for conditional cell addition or change CPAC, the first key is determined based on a second key by using a first parameter value, the second key is a master key, and the first parameter value is received from a terminal device, or the first parameter value is obtained through update based on a second parameter value, or the first parameter value is determined based on a quantity of times that the terminal device accesses the first cell or a secondary node to which the first cell belongs. The transceiver unit 1210 is configured to send the first key to the first cell or the secondary node to which the first cell belongs.

Optionally, the transceiver unit 1210 is specifically configured to send a second set to the first cell or the secondary node to which the first cell belongs, where the second set includes a plurality of keys associated with the first cell or the secondary node to which the first cell belongs, and the plurality of keys include the first key.

Optionally, the transceiver unit 1210 is further configured to receive a first message from the terminal device, where the first message includes the first parameter value, and the first message indicates the first cell that meets an execution condition or the secondary node to which the first cell belongs.

Optionally, the second parameter value is a parameter value used last time for the first cell or the secondary node to which the first cell belongs, or the second parameter value is a parameter value used by the terminal device for previous access.

Optionally, the first parameter value is the second parameter value plus N, where N is an integer greater than or equal to 1, or N is a maximum quantity of candidate cells for conditional cell addition or change.

Optionally, the first parameter value is determined based on a third parameter value and the quantity of times that the terminal device accesses the first cell or the secondary node to which the first cell belongs, and the third parameter value is a start parameter value associated with the first cell or the secondary node to which the first cell belongs.

Optionally, the first parameter value is a P^{th} value in a first set, P is related to the quantity of times that the terminal device accesses the first cell or the secondary node to which the first cell belongs, and the first set includes a plurality of parameter values associated with the first cell or the secondary node to which the first cell belongs.

In another example, the processing unit 1220 is configured to derive a fourth key, where the fourth key is used for security of a second cell, the fourth key is determined based on a fifth key, and the fifth key is a key used for a previous accessed cell, or the fifth key is a key used last time to access the second cell or a secondary node to which the second cell belongs; and the transceiver unit 1210 is configured to send the fourth key to the second cell or the secondary node to which the second cell belongs.

Optionally, the processing unit 1220 is specifically configured to derive the fourth key based on the fifth key by using a fourth parameter value, where the fourth parameter value is a parameter value associated with the second cell or the secondary node to which the second cell belongs.

Optionally, the fifth key is determined based on a sixth key by using a fifth parameter value, the sixth key is a master key, and the fifth parameter value is a parameter value associated with the second cell or the secondary node to which the second cell belongs, or the fifth parameter value is obtained through update based on a sixth parameter value, or the fifth parameter value is determined based on a quantity of times that a terminal device accesses the second cell or the secondary node to which the second cell belongs.

Optionally, the sixth parameter value is a parameter value used last time for the second cell or the secondary node to which the second cell belongs, or the sixth parameter value is a parameter value used by the terminal device for previous access.

It should be understood that the processing unit 1220 and the transceiver unit 1210 may further separately perform any other step, operation, and/or function implemented by the MN in the methods shown in FIG. 5 to FIG. 11. A specific process of performing the foregoing corresponding step by each unit is described in detail in the foregoing method embodiments. For brevity, details are not described herein again.

In another possible implementation, the apparatus 1200 may be the SN in the methods shown in FIG. 5 to FIG. 11, or may be a chip configured to implement a function of the SN in the methods shown in FIG. 5 to FIG. 11. Specifically, the apparatus 1200 may implement a corresponding procedure performed by the SN in the methods shown in FIG. 5 to FIG. 11. The processing unit 1220 is configured to perform a processing-related operation of the SN in the foregoing method procedure.

In an example, the transceiver unit 1210 is configured to receive a second set, where the second set includes a plurality of keys associated with a first cell or a secondary node to which the first cell belongs, and the plurality of keys include a first key; and the processing unit 1220 is configured to determine the first key from the second set based on a first identifier or a quantity of times that a terminal device accesses the first cell or the secondary node to which the first cell belongs, where the first identifier indicates a location of the first key in the second set.

Optionally, the transceiver unit 1210 is further configured to receive a second message, where the second message includes the first identifier.

In another example, the processing unit 1220 is configured to derive a fourth key, and derive a sixth key based on the fourth key, where the fourth key is used for security of a second cell, the fourth key is determined based on a fifth key, the fifth key is a key used last time to access the second cell or a secondary node to which the second cell belongs, the sixth key is a user plane key and/or a control plane key, and the sixth key is used to perform encryption or data integrity protection on data and/or signaling with a terminal device.

Optionally, the processing unit 1220 is further configured to derive the fourth key based on the fifth key by using a fourth parameter value, where the fourth parameter value is a parameter value associated with the second cell or the secondary node to which the second cell belongs.

Optionally, the fifth key is determined based on a sixth key by using a fifth parameter value, the sixth key is a master key, and the fifth parameter value is a parameter value associated with the second cell or the secondary node to which the second cell belongs, or the fifth parameter value is obtained through update based on a sixth parameter value, or the fifth parameter value is determined based on a quantity of times that the terminal device accesses the second cell or the secondary node to which the second cell belongs.

Optionally, the sixth parameter value is a parameter value used last time for the second cell or the secondary node to which the second cell belongs, or the sixth parameter value is a parameter value used by the terminal device for previous access.

It should be understood that the processing unit 1220 and the transceiver unit 1210 may further separately perform any other step, operation, and/or function implemented by the SN in the methods shown in FIG. 5 to FIG. 11. A specific process of performing the foregoing corresponding step by each unit is described in detail in the foregoing method embodiments. For brevity, details are not described herein again.

It should be further understood that in any one of the foregoing implementations, the transceiver unit 1210 may include a receiving unit and a sending unit. The receiving unit is configured to perform a receiving function in the transceiver unit 1210, and the sending unit is configured to perform a sending function in the transceiver unit 1210.

The apparatus 1200 has a function of implementing corresponding steps performed by the terminal device in the methods shown in FIG. 5 to FIG. 11, or the apparatus 1200 has a function of implementing corresponding steps performed by the network device in the methods shown in FIG. 5 to FIG. 11. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

It should be understood that the apparatus 1200 herein is embodied in a form of a functional unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function.

In addition, the transceiver unit may alternatively be a transceiver circuit (for example, the transceiver circuit may include a receiver circuit and a transmitter circuit), and the processing unit may be a processing circuit. In embodiments of this application, the apparatus 1200 may be the terminal device or the network device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 13 is another diagram of a structure of a communication apparatus according to an embodiment of this application. As shown in FIG. 13, the communication apparatus 1300 includes at least one processor 1310. The processor 1310 is configured to execute instructions, so that a function of the terminal device in the methods shown in FIG. 5 to FIG. 11 is implemented, or a function of the network device in the methods shown in FIG. 5 to FIG. 11 is implemented.

Optionally, the apparatus 1300 may further include a transceiver 1320. The transceiver 1320 is configured to send a signal and/or receive a signal.

Optionally, the communication apparatus 1300 further includes a memory 1330, configured to store instructions. The processor 1310 is coupled to the memory, and is configured to execute the instructions stored in the memory, to control the transceiver 1320 to send a signal and/or receive a signal.

It should be understood that the processor 1310 and the memory 1330 may be combined into one processing apparatus, and the processor 1310 is configured to execute program code stored in the memory 1330 to implement the foregoing functions. During specific implementation, the memory 1330 may be integrated into the processor 1310, or may be independent of the processor 1310.

It should be further understood that the transceiver 1320 may include a receiver (or referred to as a receiver machine) and a transmitter (or referred to as a transmitter machine). The transceiver 720 may further include one or more antennas. The transceiver 1320 may be a communication interface or an interface circuit.

When the communication apparatus 1300 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may enable the method in the foregoing method embodiments to be implemented.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

FIG. 14 is another diagram of a structure of a communication apparatus according to an embodiment of this application. As shown in FIG. 14, the apparatus 1400 includes a processing circuit 1410. The processing circuit 1410 is configured to execute instructions, so that a function of the terminal device in the methods shown in FIG. 5 to FIG. 11 is implemented, or a function of the network device in the methods shown in FIG. 5 to FIG. 11 is implemented.

Optionally, the apparatus 1400 may further include a transceiver circuit 1420. The processing circuit 1410 and the transceiver circuit 1420 communicate with each other through an internal connection path, and the processing circuit 1410 may control the transceiver circuit 1420 to send a signal and/or receive a signal.

Optionally, the apparatus 1400 may further include a storage medium 1430. The storage medium 1430 communicates with the processing circuit 1410 and the transceiver circuit 1420 through the internal connection path. The storage medium 1430 is configured to store instructions, and the processing circuit 1410 may execute the instructions stored in the storage medium 1430.

In a possible implementation, the apparatus 1400 is configured to implement a procedure corresponding to the terminal device in the foregoing method embodiments.

In another possible implementation, the apparatus 1400 is configured to implement a procedure corresponding to the network device in the foregoing method embodiments.

According to the method provided in embodiments of this application, this application further provides a computer program product. The computer program product includes instructions. When the instructions are run by a processor, a function of the terminal device in the methods shown in FIG. 5 to FIG. 11 is implemented, or a function of the network device in the methods shown in FIG. 5 to FIG. 11 is implemented.

According to the method provided in embodiments of this application, this application further provides a computer-readable storage medium. The computer-readable storage medium includes instructions. When the instructions are run by a processor, a function of the terminal device in the methods shown in FIG. 5 to FIG. 11 is implemented, or a function of the network device in the methods shown in FIG. 5 to FIG. 11 is implemented.

According to the method provided in embodiments of this application, this application further provides a system. The system includes the foregoing one or more terminal devices and one or more network devices.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

In embodiments of this application, the term such as "example" or "for example" is for representing giving an example, an illustration, or a description. Any embodiment or design scheme described as an "example" in this application should not be explained as being more preferred or having more advantages than another embodiment or design scheme. Specifically, the term "example" is used to present a concept in a specific manner.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. Further, these specific features, structures, or characteristics may be combined in one or more embodiments in any suitable manner.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that the UE or the base station performs corresponding processing in an objective situation, are not intended to limit time, do not require the UE or the base station to necessarily perform a determining action during implementation, and do not mean another limitation.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" are usually used interchangeably in this specification. The term "and/or" in this specification is merely an association relationship of associated objects, and indicates that three relationships may exist. For example, A and/or B may indicate the following three cases: Only A exists, both A and B exist, and only B exists.

The term "at least one of ..." in this specification represents all or any combination of the listed items. For example, "at least one of A, B, and C" or "at least one of A, B, or C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information. The terms "include", "contain", "have", and variations thereof all mean "including but not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
deriving a first key, wherein the first key is determined based on a second key by using a first parameter value, the second key is a master key, and the first parameter value is obtained through update based on a second parameter value, or the first parameter value is determined based on a quantity of times of accessing a first cell or a secondary node to which the first cell belongs; and
deriving a third key based on the first key, wherein the third key is a user plane key and/or a control plane key, and the third key is used to perform encryption or data integrity protection on data and/or signaling with the first cell.

2. The method according to claim 1, wherein the second parameter value is a parameter value used last time for the first cell or the secondary node to which the first cell belongs, or the second parameter value is a parameter value used for previous access.

3. The method according to claim 1, wherein the second parameter value is a parameter value used to access a third cell last time, and the third cell has the same second parameter as the first cell.

4. The method according to claim 3, wherein the deriving a first key comprises:
deriving the first key in a case of handover from a cell having a different second parameter value to the first cell.

5. The method according to claim 1, wherein the second parameter value is a parameter value used for a cell in a first cell set last time, and the first cell set comprises the first cell.

6. The method according to claim 5, wherein the deriving a first key comprises:
deriving the first key in a case of handover from a cell outside the first cell set to the first cell.

7. The method according to any one of claims 1 to 6, wherein the first parameter value is the second parameter value plus N, wherein N is an integer greater than or equal to 1, or N is a maximum quantity of candidate cells for conditional cell addition or change.

8. The method according to any one of claims 1 to 6, wherein
the first parameter value is determined based on a third parameter value and the quantity of times of accessing the first cell or the secondary node to which the first cell belongs, and the third parameter value is a start parameter value associated with the first cell or the secondary node to which the first cell belongs; or
the first parameter value is determined based on the third parameter value and a quantity of times of accessing a cell in the first cell set, and the third parameter value is a start parameter value associated with the first cell set.

9. The method according to any one of claims 1 to 6, wherein the first parameter value is a P^{th} value in a first set, P is related to the quantity of times of accessing the first cell or the secondary node to which the first cell belongs, and the first set comprises a plurality of parameter values associated with the first cell or the secondary node to which the first cell belongs.

10. The method according to any one of claims 1 to 9, wherein the method further comprises:
sending the first message to a master node, wherein the first message indicates the first cell that meets an execution condition or the secondary node to which the first cell belongs, and the first message comprises the first parameter value.

11. A communication method, wherein the method comprises:
deriving a first key, wherein the first key is determined based on a second key by using a first parameter value, the second key is a master key, the first parameter value belongs to a third set, the third set comprises a plurality of parameter values associated with a first cell set, and the first cell set comprises the first cell; and
deriving a third key based on the first key, wherein the third key is a user plane key and/or a control plane key, and the third key is used to perform encryption or data integrity protection on data and/or signaling with the first cell.

12. The method according to claim 11, wherein the first parameter value is randomly selected from the plurality of parameter values comprised in the third set.

13. The method according to claim 11, wherein the first parameter value is a P^{th} value in the third set, and P is related to a quantity of times of accessing the first cell set.

14. The method according to any one of claims 11 to 13, wherein the first parameter value is deleted from the third set.

15. The method according to any one of claims 11 to 14, wherein the deriving a first key comprises:
deriving the first key in a case of handover from a cell outside the first cell set to the first cell.

16. A communication method, wherein the method comprises:
deriving a first key, wherein the first key is used for security of the first cell, the first cell is a candidate cell for conditional cell addition or change CPAC, the first key is determined based on a second key by using a first parameter value, the second key is a master key, and the first parameter value is received from a terminal device, or the first parameter value is obtained through update based on a second parameter value, or the first parameter value is determined based on a quantity of times that the terminal device accesses the first cell or a secondary node to which the first cell belongs; and
sending the first key to the first cell or the secondary node to which the first cell belongs.

17. The method according to claim 16, wherein the sending the first key to the first cell or the secondary node to which the first cell belongs comprises:
sending a second set to the first cell or the secondary node to which the first cell belongs, wherein the second set comprises a plurality of keys associated with the first cell or the secondary node to which the first cell belongs, and the plurality of keys comprise the first key.

18. The method according to claim 16 or 17, wherein the method further comprises:
receiving a first message from the terminal device, wherein the first message comprises the first parameter value, and the first message indicates the first cell that meets an execution condition or the secondary node to which the first cell belongs.

19. The method according to any one of claims 16 to 18, wherein the second parameter value is a parameter value used last time for the first cell or the secondary node to which the first cell belongs, or the second parameter value is a parameter value used by the terminal device for previous access.

20. The method according to any one of claims 16 to 18, wherein the second parameter value is a parameter value used to access a third cell last time, and the third cell has the same second parameter as the first cell.

21. The method according to claim 20, wherein the deriving a first key comprises:
deriving the first key in a case of handover from a cell having a different second parameter value to the first cell.

22. The method according to any one of claims 16 to 18, wherein the second parameter value is a parameter value used for a cell in a first cell set last time, and the first cell set comprises the first cell.

23. The method according to claim 22, wherein the deriving a first key comprises:
deriving the first key in a case of handover from a cell outside the first cell set to the first cell.

24. The method according to any one of claims 16 to 23, wherein the first parameter value is the second parameter value plus N, wherein N is an integer greater than or equal to 1, or N is a maximum quantity of candidate cells for conditional cell addition or change.

25. The method according to any one of claims 16 to 23, wherein the first parameter value is determined based on a third parameter value and the quantity of times that the terminal device accesses the first cell or the secondary node to which the first cell belongs, and the third parameter value is a start parameter value associated with the first cell or the secondary node to which the first cell belongs; or
the first parameter value is determined based on the third parameter value and a quantity of times of accessing a cell in the first cell set, and the third parameter value is a start parameter value associated with the first cell set.

26. The method according to any one of claims 16 to 23, wherein the first parameter value is a P^{th} value in a first set, P is related to the quantity of times that the terminal device accesses the first cell or the secondary node to which the first cell belongs, and the first set comprises a plurality of parameter values associated with the first cell or the secondary node to which the first cell belongs.

27. A communication method, wherein the method comprises:
receiving a second set, wherein the second set comprises a plurality of keys associated with a first cell or a secondary node to which the first cell belongs, and the plurality of keys comprise a first key; and
determining the first key from the second set based on a first identifier or a quantity of times that a terminal device accesses the first cell or the secondary node to which the first cell belongs, wherein the first identifier indicates a location of the first key in the second set.

28. The method according to claim 27, wherein the method further comprises:
receiving a second message, wherein the second message comprises the first identifier.

29. A communication method, wherein the method comprises:
deriving a fourth key, wherein the fourth key is determined based on a fifth key, and the fifth key is a key for a previous accessed cell, or the fifth key is a key used last time to access a second cell or a secondary node to which the second cell belongs, or the fifth key is a key used for a cell in a second cell set last time, and the first cell set comprises the second cell, or the fifth key is a key used to access a fourth cell last time, and the fourth cell has a same key or a same counter as the second cell; and
deriving a sixth key based on the fourth key, wherein the sixth key is a user plane key and/or a control plane key, and the sixth key is used to perform encryption or data integrity protection on data and/or signaling with the second cell.

30. The method according to claim 29, wherein the deriving a fourth key comprises:
deriving the fourth key in a case of handover from a cell outside the second cell set to the second cell, or in a case of handover from a cell having a different counter to the second cell.

31. The method according to claim 29 or 30, wherein that the fourth key is determined based on a fifth key comprises:
the fourth key is derived based on the fifth key by using a fourth parameter value.

32. The method according to claim 31, wherein the fourth parameter value is a parameter value associated with the second cell or the secondary node to which the second cell belongs, or the fourth parameter value is a parameter value associated with the second cell set, or the fourth parameter value is obtained through update based on a fifth parameter value, or the fourth parameter value is determined based on a quantity of times of accessing the second cell or the secondary node to which the second cell belongs.

33. The method according to claim 32, wherein the fifth parameter value is a parameter value used last time for the second cell or the secondary node to which the second cell belongs, or the fifth parameter value is a parameter value used for previous access, or the fifth parameter value is a parameter value used for a cell in the second cell set last time.

34. A communication method, wherein the method comprises:
deriving a fourth key, wherein the fourth key is used for security of the second cell, the fourth key is determined based on a fifth key, and the fifth key is a key used for a previous accessed cell, or the fifth key is a key used last time to access the second cell or a secondary node to which the second cell belongs; and
sending the fourth key to the second cell or the secondary node to which the second cell belongs.

35. A communication method, wherein the method comprises:
deriving a fourth key, wherein the fourth key is used for security of the second cell, the fourth key is determined based on a fifth key, and the fifth key is a key used last time to access the second cell or a secondary node to which the second cell belongs, or the fifth key is a key used for a cell in a second cell set last time, and the first cell set comprises the second cell, or the fifth key is a key used to access a fourth cell last time, and the fourth cell has a same key or a same counter as the second cell; and
deriving a sixth key based on the fourth key, wherein the sixth key is a user plane key and/or a control plane key, and the sixth key is used to perform encryption or data integrity protection on data and/or signaling with a terminal device.

36. The method according to claim 34 or 35, wherein that the fourth key is determined based on a fifth key comprises:
the fourth key is derived based on the fifth key by using a fourth parameter value, wherein the fourth parameter value is a parameter value associated with the second cell or the secondary node to which the second cell belongs, or the fourth parameter value is a parameter value associated with the second cell set.

37. The method according to any one of claims 34 to 36, wherein the fifth key is determined based on a sixth key by using a fifth parameter value, the sixth key is a master key, and the fifth parameter value is a parameter value associated with the second cell or the secondary node to which the second cell belongs, or the fifth parameter value is obtained through update based on a sixth parameter value, or the fifth parameter value is determined based on a quantity of times that the terminal device accesses the second cell or the secondary node to which the second cell belongs, or the fifth parameter value is a parameter value used for a cell in the second cell set last time.

38. The method according to claim 37, wherein the sixth parameter value is a parameter value used last time for the second cell or the secondary node to which the second cell belongs, or the sixth parameter value is a parameter value used by the terminal device for previous access.

39. A communication apparatus, comprising a unit or module configured to perform the method according to any one of claims 1 to 10, or a unit or module configured to perform the method according to any one of claims 11 to 15, or a unit or module configured to perform the method according to any one of claims 29 to 33, or a unit or module configured to perform the method according to any one of claims 16 to 26, or a unit or module configured to perform the method according to any one of claims 34 and 35 to 38, or a unit or module configured to perform the method according to claim 27 or 28.

40. A communication apparatus, wherein the communication apparatus comprises a processor and a storage medium, the storage medium stores instructions, and when the instructions are run by the processor, the method according to any one of claims 1 to 10 is implemented, or the method according to any one of claims 11 to 15 is implemented, or the method according to any one of claims 29 to 33 is implemented, or the method according to any one of claims 16 to 26 is implemented, or the method according to any one of claims 34 and 35 to 38 is implemented, or the method according to claim 27 or 28 is implemented.

41. A computer-readable storage medium, wherein the computer-readable storage medium comprises instructions, and when the instructions are run by a processor, the method according to any one of claims 1 to 10 is implemented, or the method according to any one of claims 11 to 15 is implemented, or the method according to any one of claims 29 to 33 is implemented, or the method according to any one of claims 16 to 26 is implemented, or the method according to any one of claims 34 and 35 to 38 is implemented, or the method according to claim 27 or 28 is implemented.

42. A computer program product, wherein the computer program product comprises instructions, and when the instructions are run by a processor, the method according to any one of claims 1 to 10 is implemented, or the method according to any one of claims 11 to 15 is implemented, or the method according to any one of claims 29 to 33 is implemented, or the method according to any one of claims 16 to 26 is implemented, or the method according to any one of claims 34 and 35 to 38 is implemented, or the method according to claim 27 or 28 is implemented.

43. A communication method, wherein the communication method comprises: the method according to any one of claims 1 to 10, the method according to any one of claims 11 to 15, the method according to any one of claims 16 to 26, and the method according to claim 27 or 28; or the method according to any one of claims 29 to 33 and the method according to any one of claims 34 and 35 to 38.

44. A communication system, wherein the communication system comprises a unit or module configured to perform the method according to any one of claims 1 to 10, a unit or module configured to perform the method according to any one of claims 11 to 15, a unit or module configured to perform the method according to any one of claims 16 to 26, and a unit or module configured to perform the method according to claim 27 or 28; or a unit or module configured to perform the method according to any one of claims 29 to 33 and a unit or module configured to perform the method according to any one of claims 34 and 35 to 38.
